(19) Europäisches Patentamt
European Patent Office
Office européen des brevets

(11) **EP 2 219 022 A1**

(12) **EUROPEAN PATENT APPLICATION**
published in accordance with Art. 153(4) EPC

(43) Date of publication:
**18.08.2010 Bulletin 2010/33**

(51) Int Cl.:
***G01N 21/35*** *(2006.01)*

(21) Application number: **08846362.5**

(22) Date of filing: **28.10.2008**

(86) International application number:
**PCT/JP2008/069499**

(87) International publication number:
**WO 2009/060750 (14.05.2009 Gazette 2009/20)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.11.2007 JP 2007289766**

(71) Applicants:
• **Toyota Jidosha Kabushiki Kaisha**
**Toyota-shi, Aichi 471-8571 (JP)**
• **Mitsubishi Heavy Industries, Ltd.**
**Tokyo 108-8215 (JP)**

(72) Inventors:
• **OKADA, Takahiro**
**Toyota-shi**
**Aichi 471-8571 (JP)**
• **MATSUMOTO, Seiichi**
**Toyota-shi**
**Aichi 471-8571 (JP)**
• **YAMAKAGE, Masahiro**
**Toyota-shi**
**Aichi 471-8571 (JP)**
• **IWASE, Tomoyasu**
**Toyota-shi**
**Aichi 471-8571 (JP)**
• **TACHIBANA, Shigenobu**
**Toyota-shi**
**Aichi 471-8571 (JP)**

• **MUTA, Kenji**
**Toyota-shi**
**Aichi 471-8571 (JP)**
• **TANOURA, Masazumi**
**Yokohama-shi**
**Kanagawa 236-8515 (JP)**
• **FUKADA, Satoshi**
**Kobe-shi**
**Hyogo 652-8585 (JP)**
• **AWAYA, Ichiro**
**Nagoya-shi**
**Aichi 453-8515 (JP)**
• **AKIHAMA, Kazuhiro**
**Aichi-gun**
**Aichi 480-1192 (JP)**
• **FUJIKAWA, Taketoshi**
**Aichi-gun**
**Aichi 480-1192 (JP)**
• **YAMAMOTO, Masami**
**Aichi-gun**
**Aichi 480-1192 (JP)**
• **OHSHIMA, Ayako**
**Aichi-gun**
**Aichi 480-1192 (JP)**

(74) Representative: **Winter, Brandl, Fürniss, Hübner, Röss, Kaiser, Polte - Partnerschaft**
**Bavariaring 10**
**80336 München (DE)**

(54) **HYDROCARBON CONCENTRATION MEASURING APPARATUS AND HYDROCARBON CONCENTRATION MEASURING METHOD**

(57)    This invention provides a hydrocarbon concentration measuring apparatus, which, even when the concentration and composition of hydrocarbons contained in an object gas to be measured vary, can measure the concentration of the hydrocarbons with good response and good accuracy, and a hydrocarbon measuring method. Light with a waveband including a common absorption region, which is absorbed by a single or a plurality of chemical species, is applied to the object gas by an infrared irradiation equipment (130). The light applied to the object gas is detected with a line sensor (160). The absorbance in the common absorption region of the object gas is computed with an analyzer (190) based on the detected light. The sum of concentrations of chemical species, which absorb light in the waveband in the common absorption region, in the single or plurality of chemical species contained in the object gas, is computed with the analyzer (190) based on the absorbance.

FIG. 1

EP 2 219 022 A1

F I G. 1

**Description**

Technical Field

The present invention relates to a technique for measuring the concentration of hydrocarbons contained in gas, and more particularly to improvement in responsivity and accuracy in hydrocarbon concentration measurement.

Background Art

In recent years, increasing awareness of environmental issues has led to demands for reduction in the amount of hydrocarbons contained in exhaust gas from automobiles.

To reduce the amount of hydrocarbons contained in exhaust gas from automobiles, there is need to achieve further improvements in fuel consumption of engines and in exhaust gas purification performance of catalysts. For the purpose of achieving the improvements in these techniques, a technique for accurately measuring the concentration of hydrocarbons contained in exhaust gas is required.

Particularly, in the case of analyzing engine combustion, the concentration of hydrocarbons contained in exhaust gas and the composition thereof (types of chemical species constituting the hydrocarbons and the concentration of each of the chemical species) need be analyzed in detail not only in a "stable stage", i.e., when the behavior of an engine is constant, such as the case where an automobile is running at a constant speed, but also in a "transitional stage", i.e., when the behavior of the engine changes, such as the case of engine start-up, acceleration, and deceleration. The concentration and composition of hydrocarbons contained in exhaust gas vary every moment in the transitional stage unlike in the stable stage.

Hence, a hydrocarbon concentration measuring technique is demanded which realizes not only responsivity to the changes in the concentration and composition of hydrocarbons contained in exhaust gas (i.e., the ability to measure the changes in the concentration and composition of hydrocarbons in real time) but also accuracy in measurement.

Conventionally known techniques for measuring the concentration of hydrocarbons contained in gas can be typically classified, based on the measurement principle, into techniques using (1) Hydrogen Flame Ionization Detector (FID) method and (2) Non-dispersive Infrared Analyzer method.

(1) Hydrogen flame ionization detector method is a method in which a gas mixture of a gas, which is a measurement target, and a hydrogen gas to be a fuel is ejected from a nozzle or the like at a predetermined flow rate; an electric current of carbon ions which is generated by igniting the ejected gas mixture is detected by using a collector electrode; and the concentration of hydrocarbons contained in the measurement target gas is measured based on the ion current.

Known examples of a hydrocarbon concentration measuring apparatus using (1) Hydrogen Flame Ionization Detector method are a Total Hydrocarbon Meter (THC meter) including a hydrogen flame ionization detector, and a Gas Chromatograph including a hydrogen flame ionization detector.

When the Total Hydrocarbon Meter including the hydrogen flame ionization detector is used, the carbon ion current generated by igniting a gas mixture of a measurement target gas and a hydrogen gas to be a fuel is detected by a collector electrode included in the hydrogen flame ionization detector, and thereby the total hydrocarbon concentration of the hydrocarbons contained in the measurement target gas is calculated, based on the detected ion current, in the form of a methane-equivalent concentration value (ppmC).

Essentially, the Total Hydrocarbon Meter including the hydrogen flame ionization detector counts the number of carbon atoms contained in the measurement target gas with high measurement accuracy. However, the meter cannot measure the compositional proportions of respective chemical species of the hydrocarbons contained in the measurement target gas.

When the Gas Chromatograph including the hydrogen flame ionization detector is used, a measurement target gas is mixed with a carrier gas (mobile phase); the mixture is supplied to a separation column to separate respective chemical species of hydrocarbons contained in the gas; each chemical species is mixed with hydrogen gas and then ignited; an electric current of carbon ions thereby generated is detected by using a collector electrode included in the hydrogen flame ionization detector; and thereby the concentration of each chemical species contained in the measurement target gas is calculated, based on the detected ion current, in the form of a methane-equivalent concentration value (ppmC).

The Gas Chromatograph including the hydrogen flame ionization detector is also capable of calculating the total hydrocarbon concentration of hydrocarbons contained in the measurement target gas by accumulating the calculated concentration of each chemical species.

However, in the hydrocarbon concentration measuring method using (1) Hydrogen Flame Ionization Detector method, generally, a measurement condition, which is the condition for detection of the ion current by the collector electrode provided in the hydrogen flame ionization detector, need be set constant for the sake of securing measurement accuracy. Thus, this requires, for example, an operation of partially sampling a measurement target gas followed by pretreatment such as dehydration.

Therefore, a time lag, i.e., a response delay, is generated between when measurement target gas is sampled and when the sampled gas (hereinafter referred to as a "sample gas") is actually measured by a time period required for the above pretreatment. Accordingly, it is difficult to measure the carbon concentration in the measurement target gas in real time.

Further, in the hydrocarbon concentration measuring method using (1) Hydrogen Flame Ionization Detector method, a sample gas is transferred to a hydrogen flame ionization detector including a collector electrode through a transfer path such as a pipe line, and thus there may be a case where a hydrocarbon is adhering to the inner wall of the transfer path, or where the sample gas newly fed through the transfer path is mixed with an old sample gas which has been remaining in the transfer path. Accordingly, the concentration and the composition of hydrocarbons contained in the sample gas may have changed by the time the sample gas reaches the hydrogen flame ionization detector as compared to when the sample gas is sampled.

Therefore, in the case where the concentration of hydrocarbons contained in a measurement target gas varies every moment, a series of actions need be taken. For example, in order to prevent adhesion of hydrocarbons to the inner wall of the transfer path, the transfer path of the sample gas is heated, or coating is applied to the inner wall of the transfer path of the sample gas. Alternatively, in order to reduce the amount of sample gas remaining in the transfer path, the transfer path is shortened as much as possible. Without these actions, it is difficult to measure the carbon concentration accurately.

In addition, the Gas Chromatograph generally has a configuration in which a sample gas is supplied to a separation column so as to separate hydrocarbons into respective chemical species using time differences, and thus, it requires a predetermined time (e.g., ten minutes or more) to completely separate chemical species constituting hydrocarbons.

Therefore, with the Gas Chromatograph, it is impossible to accurately measure the carbon concentration included in a measurement target gas in real time.

Further, problematically, the Gas Chromatograph is generally a large complicated apparatus, and also requires higher facility costs as compared to other apparatuses.

(2) Non-dispersive Infrared Analyzer method is a method in which a measurement target gas is irradiated with infrared radiation having a predetermined waveband, and the concentration of hydrocarbons contained in the measurement target gas is measured based on the absorption of a specific waveband of the infrared radiation having irradiated the measurement target gas.

The Non-dispersive Infrared Analyzer method fundamentally enables non-contact measurement of the concentration of hydrocarbons in real time without a response delay. However, in terms of apparatus configuration and maintenance of measurement accuracy, apparatuses using the Non-dispersive Infrared Analyzer method available on the market is only of the type that samples a measurement target gas to thereby pretreat and measure the sampled gas, in the same manner as the Hydrogen Flame Ionization Detector method.

As an example of the hydrocarbon concentration measuring apparatus using (2) Non-dispersive Infrared Analyzer method, there is known a Hydrocarbon Meter (HC measuring apparatus).

The Hydrocarbon Meter is configured to irradiate a measurement target gas with infrared radiation having a waveband of about 3.4 $\mu$m (3.4 $\pm$ 0.07 $\mu$m), for example, and to calculate the concentration of hydrocarbons contained in the measurement target gas, based on the absorption of the infrared radiation in the form of a n-hexane-equivalent concentration value (ppm).

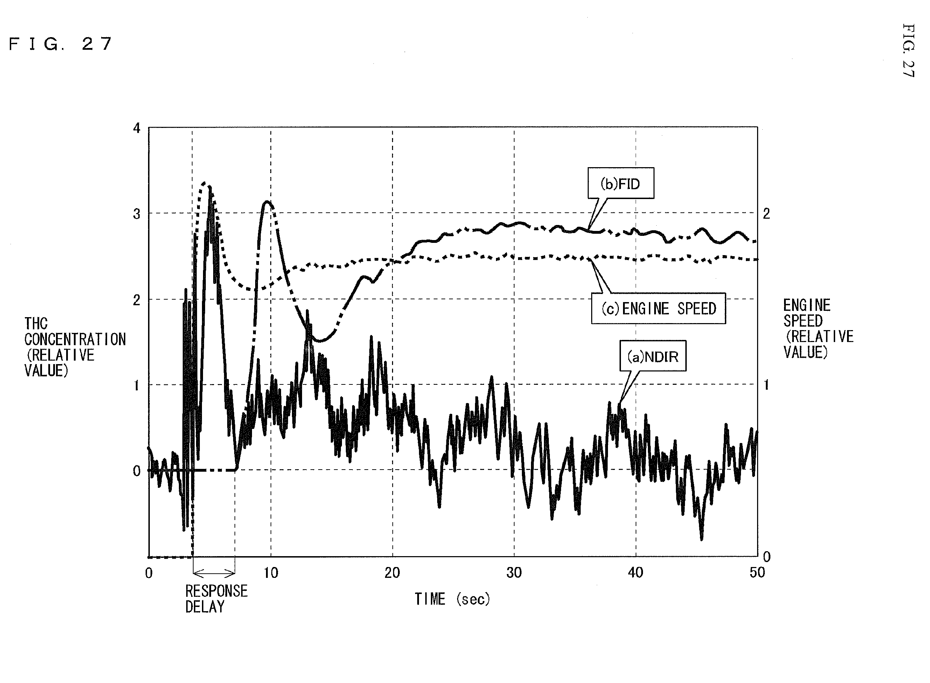

Fig. 27 is a diagram showing: (a) a measurement result of non-contact measurement of the concentration of hydrocarbons contained in exhaust gas from an engine, the measurement being based on an infrared absorption method, (b) a measurement result of the concentration of hydrocarbons contained in a gas (sample gas) sampled from the exhaust gas from the engine, the measurement being based on a Hydrogen Flame Ionization Detector method, and (c) an engine speed.

As shown in Fig. 27, the first upward peak of the measurement results of the hydrocarbon concentration measured based on (b) using the Hydrogen Flame Ionization Detector method (indicated by a bold dash-dotted line in Fig. 27) is delayed with respect to the first upward peak of (c) the engine speed. That is, it is apparent that a response delay occurred.

On the other hand, the first upward peak of (a) the measurement result of the non-contact measurement of the hydrocarbon concentration using the infrared absorption method (indicated by a bold solid line in Fig. 27) is not delayed with respect to the first upward peak of (c) the engine speed. That is, there is no response delay occurring in this method unlike (b) the measurement result of the hydrocarbon concentration using the Hydrogen Flame Ionization Detector method.

On the one hand, (b) the measurement result of the hydrocarbon concentration using the Hydrogen Flame Ionization Detector method shows a drop after the first upward peak, and then shows a rise again up to approximately the same level as the peak value of the first upward peak, and stays at around that level. On the other hand, (a) the measurement result of the non-contact measurement of the hydrocarbons concentration using the infrared absorption method shows the first upward peak having approximately the same value as the peak value of the first forward peak of (b), but thereafter shows gradual drops in the measurement values to a level lower than the measurement result (b). Thus, even if the measurement result (a) is shifted along the horizontal axis in Fig. 27 to correct the effect of the response delay, the profile of the measurement result (a) is significantly different from that of the measurement result (b).

This is because the infrared absorption method used in the above experiment uses infrared radiation having a specific narrow waveband (about 3.4 $\mu$m) to irradiate the measurement target gas, and the concentration of hydrocarbons is calculated in the form of the n-hexane-equivalent concentration value, and consequently, it becomes difficult to accurately measure the concentration of hydrocarbons (total hydrocarbon concentration) when the composition of hydrocarbons varies significantly as in the case of exhaust gas in the transitional stage.

This kind of problem also occurs to some degree when a generally marketed HC meter is used which performs measurement in a wide waveband.

An example of a case where the composition of hydrocarbons contained in gas changes is a case of exhaust gas generated at the time of engine start, for example, where, in the initial stage of the engine start, hydrocarbons contained in a fuel gas are partially discharged unburned together with the exhaust gas, and thereafter, as the behavior of the engine stabilizes, the concentration of the hydrocarbons contained in the exhaust gas decreases.

In this manner, the use of the infrared absorption method itself cannot achieve both high responsivity and accuracy in measurement of the hydrocarbon concentration in the case where the concentration and composition of hydrocarbons contained in a gas vary every moment.

As a technique for solving the problem of variation in the composition of hydrocarbons, known is an FT-IR (Fourier Transform InfraRed spectrometer).

Also known is a measurement technique which includes: a plurality of light emitters which is capable of illuminating (irradiating) a measurement target gas with wavelengths which are absorbed by respective chemical species included in hydrocarbons; and a plurality of photoreceivers for receiving infrared radiation emitted from the respective light emitters, where the concentration of each of the chemical species is detected based on intensity of the received light at each of the photoreceivers. For example, the technique is described in Japanese Laid-Open Patent Publication No. H04-225142.

However, the FT-IR has several problems such as requirement of sampling of a measurement target gas, insufficient responsivity, limitation in kinds (components) of hydrocarbons measurable, and unavailability of THC measurement.

In addition, the technique disclosed in Japanese Laid-Open Patent Publication No. H04-225142 requires the same numbers of light emitters and photoreceivers as the number of kinds of chemical species included in gas. Thus, a large-scale apparatus is required, and the facility costs increase significantly.

Particularly, hydrocarbons contained in exhaust gas from an automobile engine includes a large number of kinds (e.g., 200 or more) of chemical species. In addition, unknown chemical species may be included in the exhaust gas depending on the composition, combustion condition, or the like of the fuel, which makes the above problems unignorable.

Moreover, when chemical species of hydrocarbons contained in a measurement target gas are not accurately understood in advance, it is impossible to determine how many light emitters and photoreceivers are required, and how to set the waveband of infrared radiation emitted from the respective light emitters (or there may be a case where some chemical species cannot be measured).

Disclosure of Invention

Problems to Be Solved By the Invention

In view of the above problems, the present invention provides a hydrocarbon concentration measuring apparatus and a hydrocarbon measuring method which are capable of measuring hydrocarbon concentration with excellent responsivity (in real time) and accuracy even when the concentration and composition of hydrocarbons contained in a measurement target gas change.

Means of Solving the Problems

The first aspect of the present invention is a hydrocarbon concentration measuring apparatus comprising: a radiating section which irradiates a gas containing a hydrocarbon composed of a single or multiple chemical species with light having a waveband including an absorption region which is common to the single or multiple chemical species; a detection section which detects light radiated from the radiating section to the gas; and an analyzing section which calculates absorbance in the common absorption region in accordance with the light detected by the detection section, and calculates, in accordance with the absorbance, a sum of concentration of the chemical species, which absorb light having a waveband in the common absorption region.

In the advantageous embodiment of the present invention, the common absorption region includes a wavelength corresponding to a C-H stretching vibration mode of at least one of the group consisting of alkanes and alkenes, the group consisting of aromatic hydrocarbons, and the group consisting of alkynes.

In the preferable embodiment of the present invention, a wavelength corresponding to a C-H stretching vibration mode of the group consisting of alkanes and alkenes ranges, in terms of wavenumber, from $2800cm^{-1}$ to $3000cm^{-1}$, a wavelength corresponding to a C-H stretching vibration mode of the group consisting of aromatic hydrocarbons ranges, in terms of wavenumber, from $3000cm^{-1}$ to $3200cm^{-1}$, and a wavelength corresponding to a C-H stretching vibration mode of the group consisting of alkynes ranges, in terms of wavenumber, from $3200cm^{-1}$ to $3400cm^{-1}$.

In the other embodiment of the present invention, the hydrocarbon concentration measuring apparatus further comprises a gas accommodating section provided along a path of the light which is radiated from the radiating section and detected by the detection section, in which the gas accommodating section includes: a gas accommodating container having an internal space which is capable of accommodating gas containing hydrocarbons composed of the single or multiple chemical species; a radiation-side window provided in the gas accommodating container for causing the light radiated from the radiating section to pass therethrough to enter the internal space; and a detection-side window provided in the gas accommodating container for causing the light having passed through the radiation-side window and entered the internal space to pass therethrough to the outside.

In the advantageous embodiment of the present invention, the hydrocarbon concentration measuring apparatus further comprises a chopper section arranged between the radiating section and the gas containing hydrocarbons composed of the single or multiple chemical species for alternately switching between a situation where the gas is irradiated with the light from the radiating section and a situation where the gas is not irradiated with the light; and a signal processing circuit for removing a noise element included in the light detected by the detection section, in accordance with a signal indicating a switching operation by the chopper section and the light detected by the detection section.

In the advantageous embodiment of the present invention, the detection section is an optical detector, and the apparatus further comprises a splitter which splits the light having irradiated the gas containing hydrocarbons composed of the single or multiple chemical species, based on respective wavelengths, so that the optical detector is irradiated with split light beams.

The first aspect of the present invention is a hydrocarbon concentration measuring method comprising: a radiation/detection step of irradiating a gas containing a hydrocarbon composed of a single or multiple chemical species with light having a waveband including an absorption region which is common to the single or multiple the chemical species, and detecting the light having irradiated the gas; and an analysis step of calculating absorbance in the common absorption region in accordance with the light detected in the radiation/detection step, and calculating, in accordance with the absorbance, a sum of concentration of the chemical species which absorb light having a waveband in the common absorption region.

In the preferable embodiment of the present invention, the common absorption region includes a wavelength corresponding to a C-H stretching vibration mode of at least one of the group consisting of alkanes and alkenes, the group consisting of aromatic hydrocarbons, and the group consisting of alkynes.

In the other embodiment of the present invention, a wavelength corresponding to a C-H stretching vibration mode of the group consisting of alkanes and alkenes ranges, in terms of wavenumber, from $2800cm^{-1}$ to $3000cm^{-1}$; a wavelength corresponding to a C-H stretching vibration mode of the group consisting of aromatic hydrocarbons ranges, in terms of wavenumber, from $3000cm^{-1}$ to $3200cm^{-1}$; and a wavelength corresponding to a C-H stretching vibration mode of the group consisting of alkynes ranges, in terms of wavenumber, from $3200cm^{-1}$ to $3400cm^{-1}$.

Effect of the Invention

According to the present invention, it is possible to measure with excellent responsivity and accuracy the concentration and the sum of chemical species in hydrocarbons contained in a measurement target gas, the chemical species absorbing light having a waveband in a common absorption region.

Brief Description of Drawings

Fig. 1 is a diagram illustrating a first embodiment of a hydrocarbon concentration measuring apparatus according to the present invention.

Fig. 2 is a diagram illustrating an experimental facility including the first embodiment of the hydrocarbon concentration measuring apparatus according to the present invention.

Fig. 3 shows a result of a responsivity validation test on hydrocarbon concentration measuring performed by the first embodiment of the hydrocarbon concentration measuring apparatus according to the present invention.

Fig. 4 shows results of measurement accuracy validation tests on hydrocarbon concentration measuring performed by the first embodiment of the hydrocarbon concentration measuring apparatus according to the present invention.

Fig. 5 also shows results of measurement accuracy validation tests on hydrocarbon concentration measuring performed by the first embodiment of the hydrocarbon concentration measuring apparatus according to the present invention.

Fig. 6 is a diagram illustrating a second embodiment of a hydrocarbon concentration measuring apparatus according to the present invention.

Fig. 7 is a diagram illustrating a third embodiment of a hydrocarbon concentration measuring apparatus according to the present invention.

Fig. 8 is a diagram illustrating a fourth embodiment of a hydrocarbon concentration measuring apparatus according to the present invention.

Fig. 9 is a diagram illustrating a fifth embodiment of a hydrocarbon concentration measuring apparatus according to the present invention.

Fig. 10 is a diagram illustrating a sixth embodiment of a hydrocarbon concentration measuring apparatus according to the present invention.

Fig. 11 is a diagram illustrating a seventh embodiment of a hydrocarbon concentration measuring apparatus according to the present invention.

Fig. 12 is a flowchart showing an example of a hydrocarbon concentration measuring method according to the present invention.

Fig. 13 shows an example of an analysis result of the composition of fuel supplied to an automobile engine.

Fig. 14 shows an example of an analysis result of the composition of an exhaust gas at an engine outlet.

Fig. 15 shows an example of an analysis result of the composition of an exhaust gas at a catalyst outlet.

Fig. 16 shows absorption spectrums of chemical species included in an exhaust gas.

Fig. 17 also shows absorption spectrums of chemical species included in the exhaust gas.

Fig. 18 also shows absorption spectrums of chemical species included in the exhaust gas.

Fig. 19 also shows absorption spectrums of chemical species included in the exhaust gas.

Fig. 20 also shows absorption spectrums of chemical species included in the exhaust gas.

Fig. 21 also shows absorption spectrums of chemical species included in the exhaust gas.

Fig. 22 also shows absorption spectrums of chemical species included in the exhaust gas.

Fig. 23 also shows absorption spectrums of chemical species included in the exhaust gas.

Fig. 24 shows procedures for calculating an IR-Abs. ratio.

Fig. 25 shows a relation between a compositional ratio based on an FID-GC and the IR-Abs. ratio with respect to 12 kinds of chemical species.

Fig. 26 shows a relation between a compositional ratio based on the FID-GC and the IR-Abs. ratio with respect to 24 kinds of chemical species.

Fig. 27 shows a relation between an engine speed and measurement results of the concentration of hydrocarbons contained in an exhaust gas measured using a conventional HC meter and using a conventional THC meter.

The Best Mode for Carrying Out the Invention

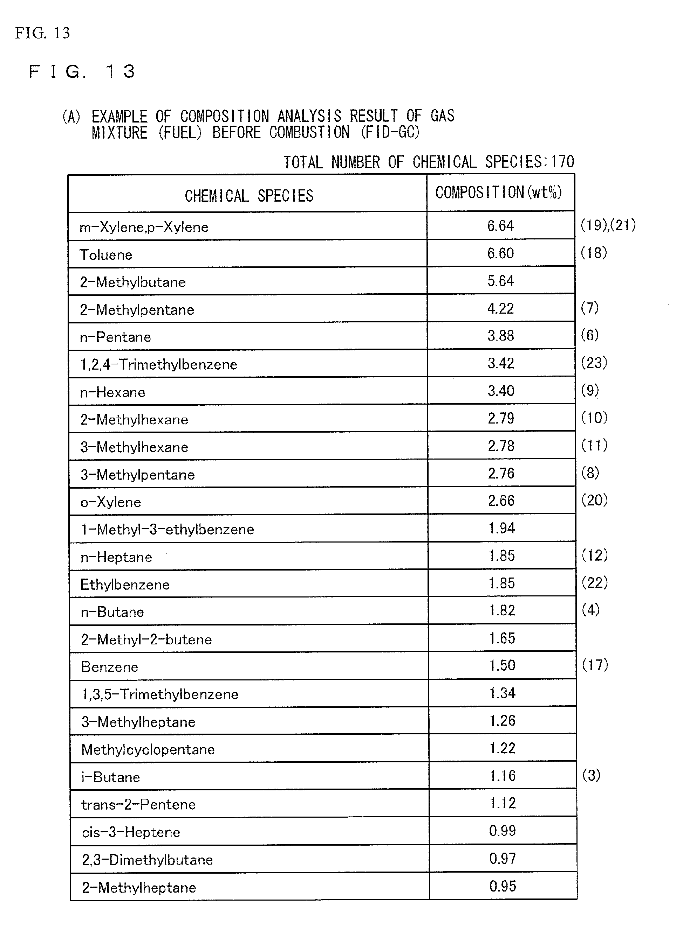

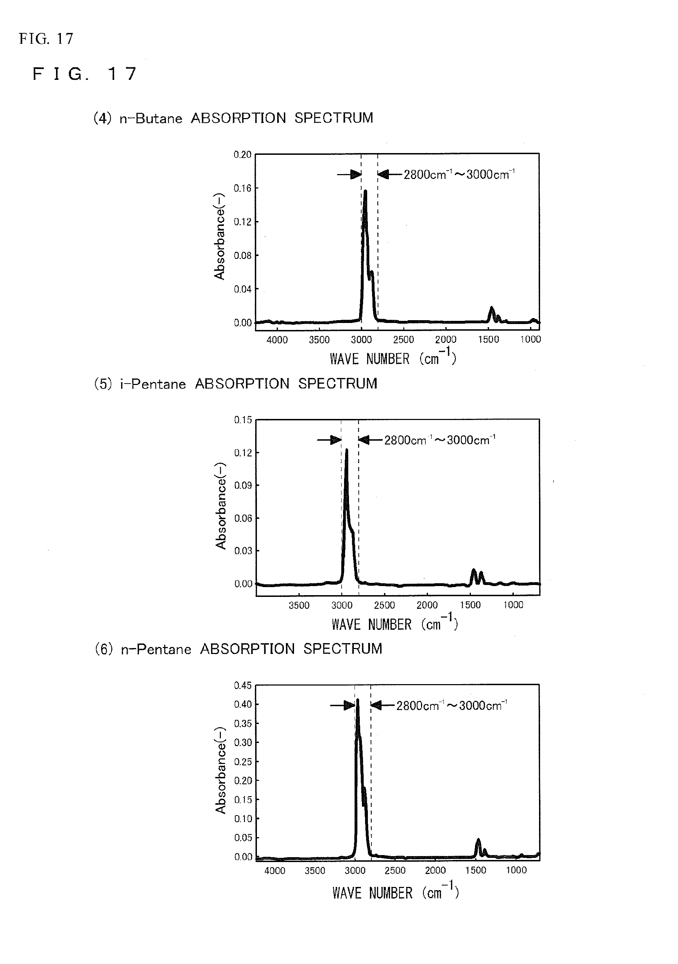

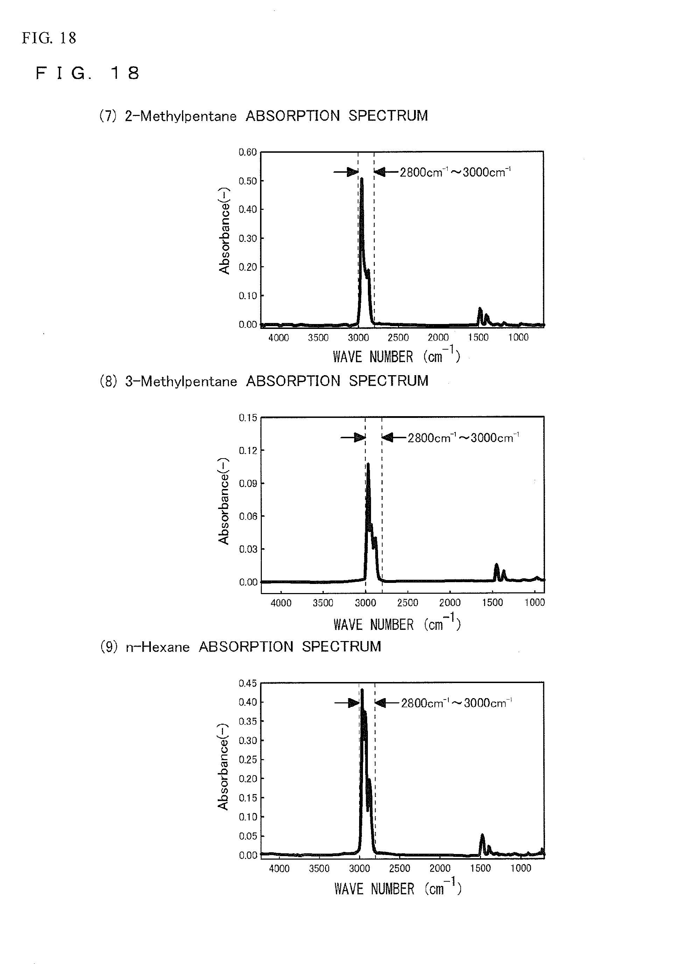

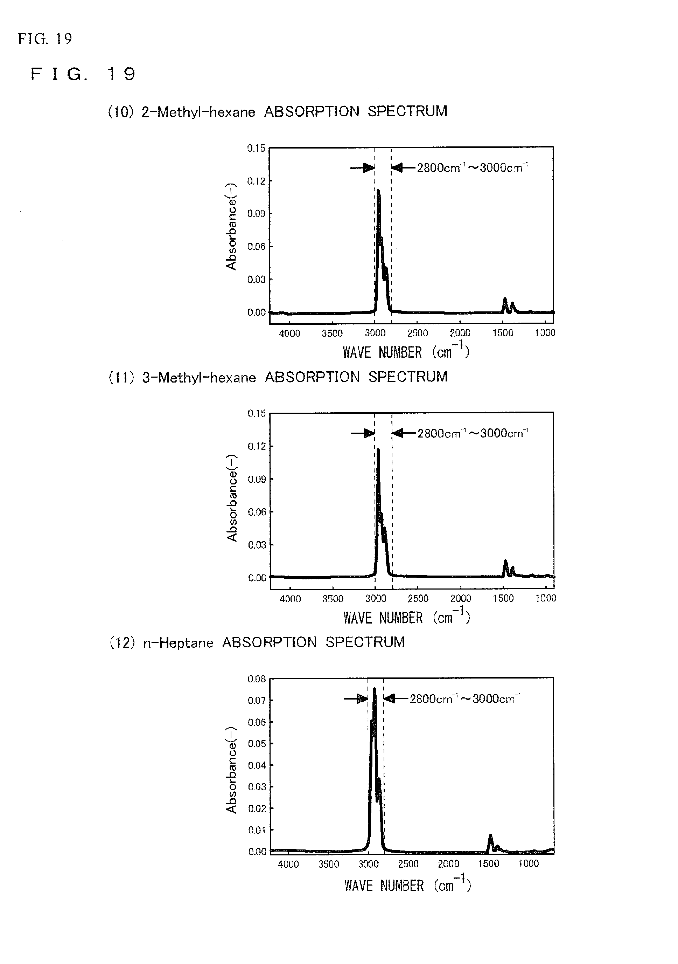

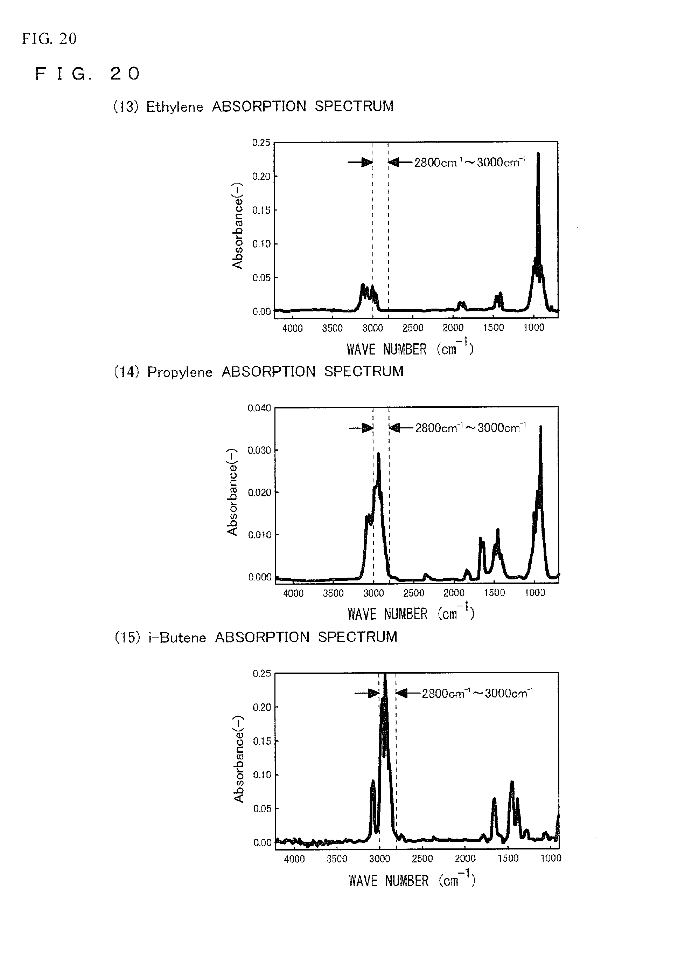

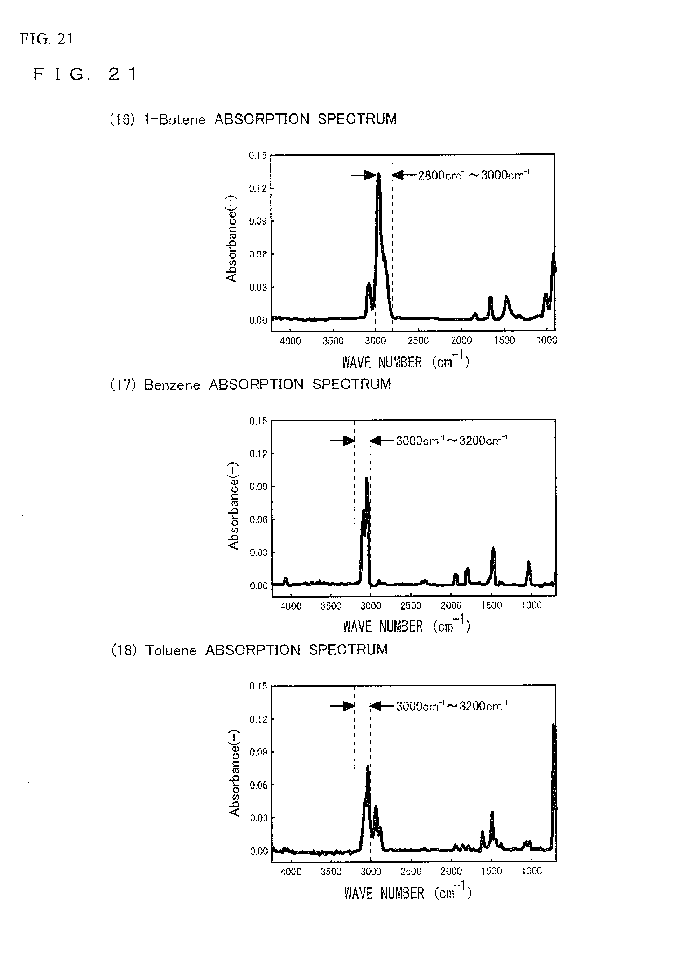

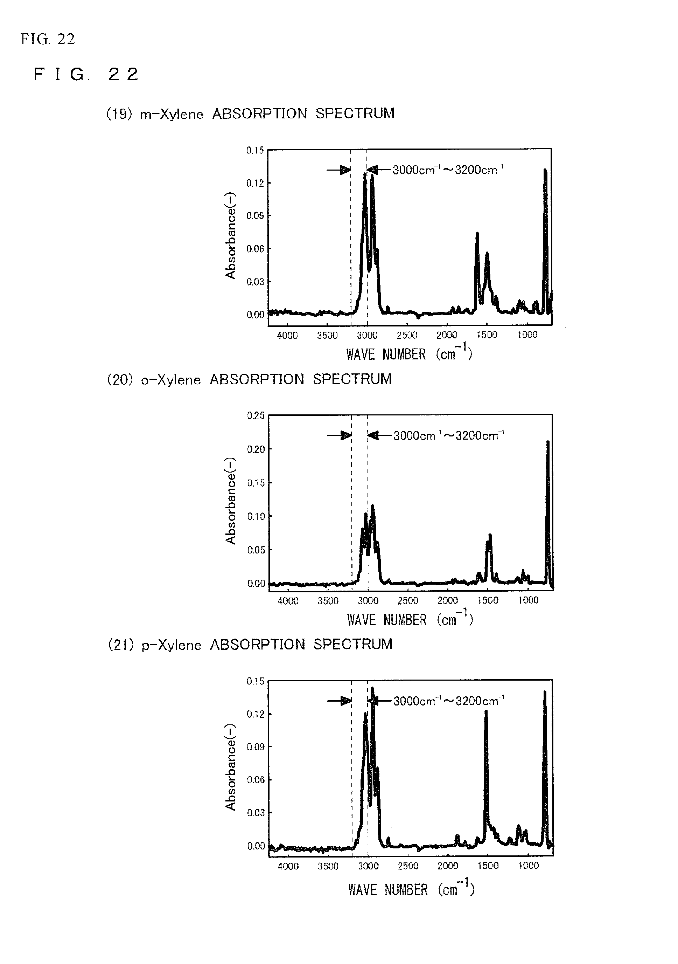

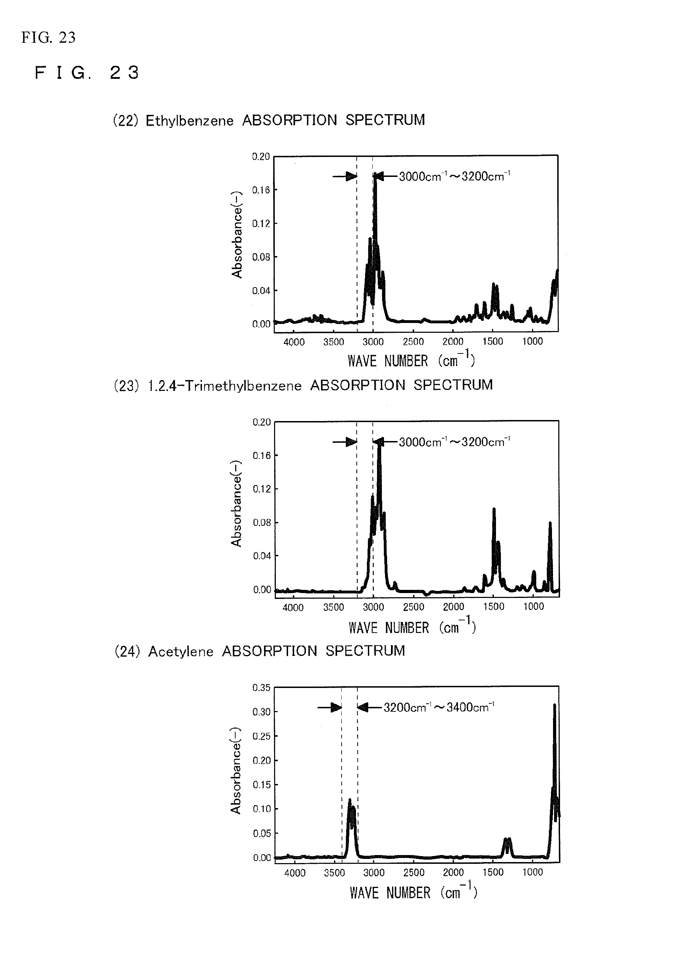

Hereinbelow, a basic principle of a hydrocarbon concentration measuring apparatus and a hydrocarbon concentration measuring method according to the present invention will be described with reference to Figs. 13 to 26.

The hydrocarbon concentration measuring apparatus according to the present invention is an apparatus for measuring the concentration of hydrocarbons contained in a target gas to be measured (hereinafter referred to as a "measurement target gas").

The hydrocarbon concentration measuring method according to the present invention is a method for measuring the concentration of hydrocarbons contained in the measurement target gas.

The "measurement target gas" represents, in a broad sense, a gas at least partially including hydrocarbons. Here, a hydrocarbon contained in the measurement target gas need not necessarily be gaseous at an ordinary temperature (25°C) and under an ordinary pressure (1 atmospheric pressure), and for example, a gaseous hydrocarbon obtained by heating may be applicable.

The "hydrocarbon" includes a single kind or multiple kinds of chemical species which each are a chemical compound composed of carbon and hydrogen. The chemical species included in the hydrocarbons are classified into alkanes, alkenes, alkynes, aromatic hydrocarbons, and the like depending on the structure.

The "alkanes" represent linear saturated hydrocarbons expressed as a general formula of $C_nH_{2n}+_2$ (n is an integer of 1 or more). Note that, in the present invention, cycloalkanes are included in the alkanes.

The "cycloalkanes" represent cyclic saturated hydrocarbons expressed as a general formula of $C_nH2_n$ (n is an integer of 3 or more).

The "alkenes" represent linear unsaturated hydrocarbons expressed as a general formula of $C_nH_{2n}$ (n is an integer of 2 or more).

The "alkynes" represent linear unsaturated hydrocarbons expressed as a general formula of $C_nH_{2n}-_2$ (n is an integer of 2 or more).

The "aromatic hydrocarbons" represent hydrocarbons each having a monocyclic or multiple-cyclic (condensed ring) structure.

The hydrocarbon concentration measuring apparatus and the hydrocarbon concentration measuring method according to the present invention are capable of solving the "deterioration in measurement accuracy when the composition of a target gas to be measured (hereinafter referred to as the "measurement target gas") changes", which has been the problem posed by the conventional Non-dispersive Infrared Analyzer method, without hampering the "excellent responsivity (without any response delay)" which is the advantageous feature of the conventional Non-dispersive Infrared Analyzer method.

The hydrocarbon concentration measuring apparatus and the hydrocarbon concentration measuring method according to the present invention are similar to the conventional Non-dispersive Infrared Analyzer method in terms of the basic principle where a measurement target gas is irradiated with light (infrared radiation) so as to measure the concentration of hydrocarbons contained in the measurement target gas, based on the absorbance of light of a specific waveband.

However, the hydrocarbon concentration measuring apparatus and the hydrocarbon concentration measuring method according to the present invention are characterized by the procedure for setting a waveband of light irradiating the measurement target gas.

Described hereinbelow is the procedure for setting a waveband of light irradiating the measurement target gas, the procedure being provided by the hydrocarbon concentration measuring apparatus and the hydrocarbon concentration measuring method according to the present invention.

First, with reference to Figs. 13 to 15, change in the composition of a measurement target gas will be described by using an exhaust gas from an automobile engine as an example.

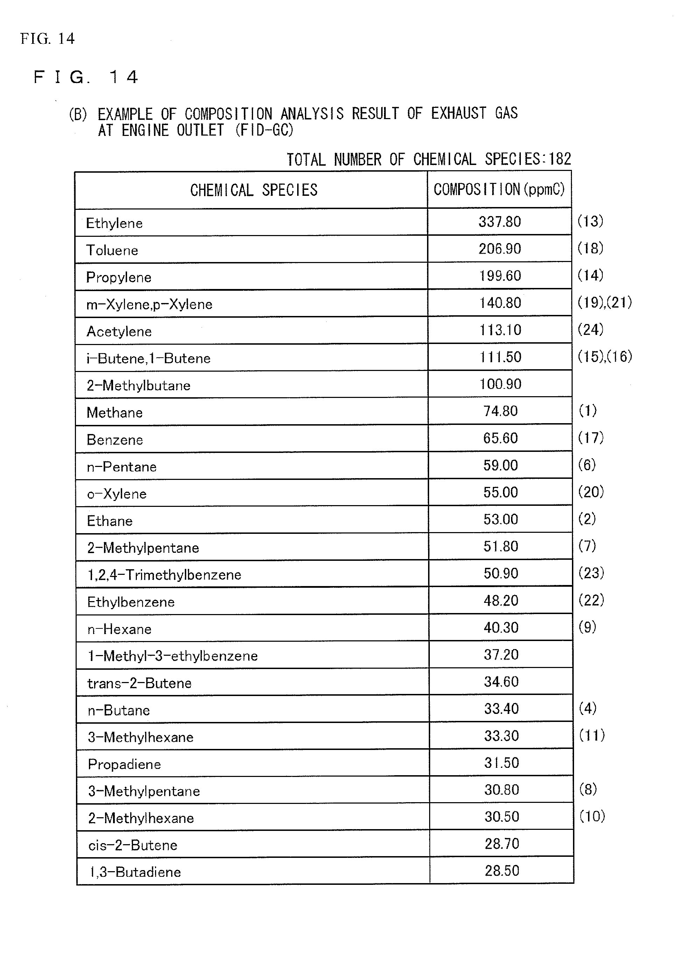

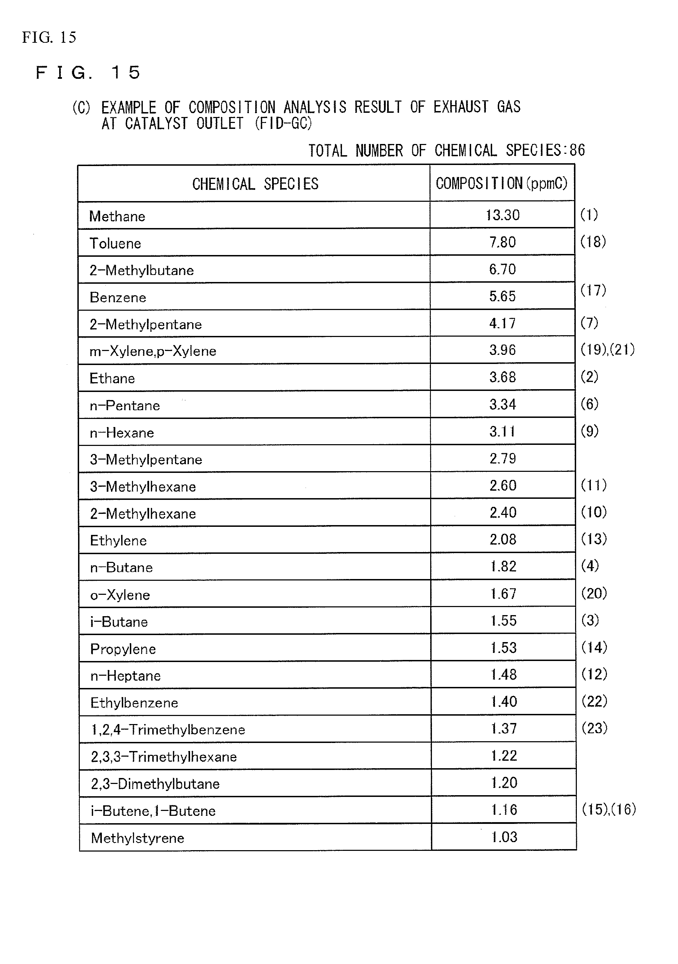

Fig. 13 shows an example of a composition analysis result (A) of fuel (more precisely, a gas mixture of atomized fossil fuel and air) supplied to an automobile engine; Fig. 14 shows an example of a composition analysis result (B) of an exhaust gas (exhaust gas at an engine outlet) generated by burning the fuel in the automobile engine; and Fig. 15 is an example of a composition analysis result (C) of a gas obtained by clarifying an exhaust gas using catalysts (exhaust gas at a catalyst outlet).

The examples of the composition analysis results (A) to (C) shown in Figs. 13 to 15 are obtained by Gas Chromatography - Hydrogen Flame Ionization Detector method (FID-GC). The examples of the composition analysis results (A) to (C) shown in Figs. 13 to 15 present 26 dominant chemical species having highest compositional proportions.

As shown in Figs. 13 to 15, when fuel is burned in an automobile engine and the exhaust gas is then clarified with catalysts, the kinds of chemical species included in hydrocarbons in the gas, the number of the kinds, and the compositional proportions of the respective chemical species change significantly depending respective stages.

For example, as to the number of kinds of the chemical species (the number of total chemical species), the number of total chemical species in the gas mixture in (A) illustrated in Fig. 13 is 170; the number of total chemical species in the exhaust gas at the engine outlet in (B) illustrated in Fig. 14 has increased to 182; and the number of total chemical species in the exhaust gas at the catalyst outlet in (C) illustrated in Fig. 15 has decreased to 86.

In addition, as to the composition of the chemical species, Methane (represented as (1) in Figs. 14 and 15), for example, which is a type of alkane, does not appear in the 26 dominant species included in the composition of the gas mixture in (A) illustrated in Fig. 13, but appears in the 26 dominant species included in the composition of the exhaust gas at the engine outlet in (B), and in the 26 dominant species included in the composition of the exhaust gas at the catalyst outlet in (C).

Particularly, in the exhaust gas at the catalyst outlet in (C), methane is a chemical species constituting the second highest compositional proportion among the chemical species included in the hydrocarbons.

Further, the above measurement results (A) to (C) are obtained under a condition where an automobile engine used for gas generation is driven at an approximately common speed while approximately the same load is applied thereon. If the driving condition of the automobile engine is changed (e.g., driving condition corresponding to start, idling, acceleration, deceleration, traveling on a slope road, or the like during actual driving), the kinds of chemical species constituting the hydrocarbons contained in the above gases in (A) to (C), the number of the kinds, and the compositional proportions of the respective chemical species also change significantly.

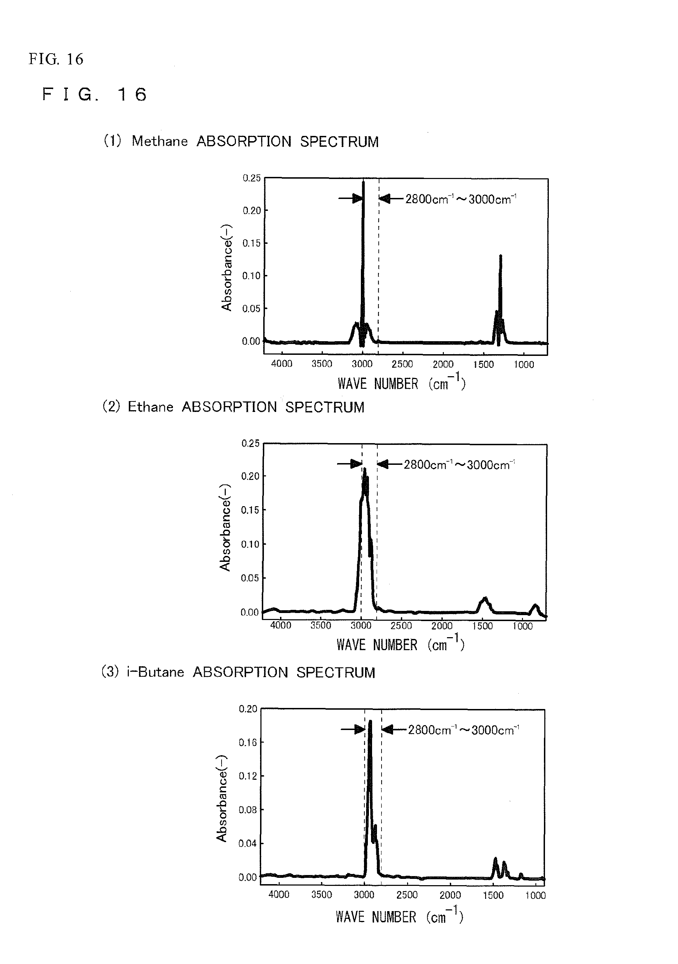

Among the chemical species of the hydrocarbons contained in the gases shown in Figs. 13 to 15, absorption spectrums of 24 dominant chemical species constituting the highest compositional proportions differ from one another as illustrated in Figs. 16 to 23, and the absorption ranges of the respective chemical species (the waveband where each chemical species exhibits high absorbance) differ from one another.

Therefore, when gases shown in Figs. 13 to 15 are irradiated, as measurement target gases, with light having an extremely narrow specific waveband, e.g. approximately $3.4\mu m$ (equivalent to $2941 cm^{-1}$ in wavenumber), and the total hydrocarbon concentration is calculated based on the absorption of the light by using the conventional Non-dispersive Infrared Analyzer method, it is apparent that the measurement accuracy of the total hydrocarbon concentration will deteriorate since there may be many chemical species that do not have their absorption regions in the specific waveband.

The hydrocarbon concentration measuring apparatus and the hydrocarbon concentration measuring method according to the present invention divide a single or multiple chemical species included in hydrocarbons in a measurement target gas into three groups, i.e., a group (a) consisting of alkanes and alkenes; a group (b) consisting of aromatic hydrocarbons; and a group (c) consisting of alkynes. A "common absorption region" is set for each of the groups, whereby the sum of the concentration of all the chemical species belonging to each of the groups is calculated accurately.

The three groups (a) to (c) are divided based on the difference in the structure of the chemical species belonging to each group, more precisely on the difference in the bonding state of carbon atoms included in each chemical species.

Among the chemical species belonging to the group (a) consisting of alkanes and alkenes, an alkane includes a plurality of carbon atoms, of which at least two carbon atoms form a single bond, and an alkene includes a plurality of carbon atoms, of which, two atoms form a double bond therebetween. Note that, of alkanes, methane is excluded from this since methane has only one carbon atom.

An example of the chemical species belonging to the group (b) consisting of aromatic hydrocarbons includes a group of cyclic unsaturated hydrocarbons such as benzene.

The chemical species belonging to the group (c) consisting of alkynes are each structured such that two carbon atoms constituting each chemical species form a triple bond.

Absorption of light (infrared radiation) by hydrocarbons is caused by stretching vibration (C-H stretching vibration mode) in bonding between a carbon atom and a hydrogen atom, which constitute each chemical species included in hydrocarbons.

Normally, the absorption of light by the C-H stretching vibration mode occurs in a waveband of about $2850 cm^{-1}$ to $2960 cm^{-1}$ in terms of wavenumber. However, a bonding state (geometrical structure) among multiple carbon atoms or that between a carbon atom and another atom of a chemical species differs depending on the chemical species, and thus even if any two chemical species have a common bond type (single bond, double bond, triple bond), their bonding states among multiple carbon atoms differs slightly from each other.

As a result, due to the effect of the bonding state among the multiple carbon atoms, the bonding state between a carbon atom and a hydrogen atom of a chemical species also changes slightly. Consequently, the waveband where absorption of light is caused by the C-H stretching vibration, i.e., the absorption region, also changes slightly from the waveband of about $2850 cm^{-1}$ to $2960 cm^{-1}$ in terms of wavenumber. Thus, an absorption spectrum profile, a peak wavelength, or absorbance differs depending on the chemical species.

However, when the chemical species are divided into three groups, i.e., the group (a) consisting of alkanes and alkenes, the group (b) consisting of aromatic hydrocarbons, and the group (c) consisting of alkynes, and the absorption regions thereof illustrated in Figs. 16 to 23 are reviewed, it is found as follows. That is, the absorption region of the chemical species belonging to the group (a) consisting of alkanes and alkenes approximately stays in a wavelength range from $3.333\mu m$ to $3.571\mu m$ (equivalent to a range from $2800 cm^{-1}$ to $3000 cm^{-1}$ in wavenumber); the absorption region of the chemical species belonging to the group (b) consisting of aromatic hydrocarbons approximately stays in a wavelength rang from $3.125\mu m$ to $3.333\mu m$ (equivalent to a range from $3000 cm^{-1}$ to $3200 cm^{-1}$ in wavenumber); and the absorption region of the chemical species belonging to the group (c) consisting of alkynes approximately stays in a wavelength range from $2.941\mu m$ to $3.125\mu m$ (equivalent to a range from $3200 cm^{-1}$ to $3400 cm^{-1}$ in wavenumber).

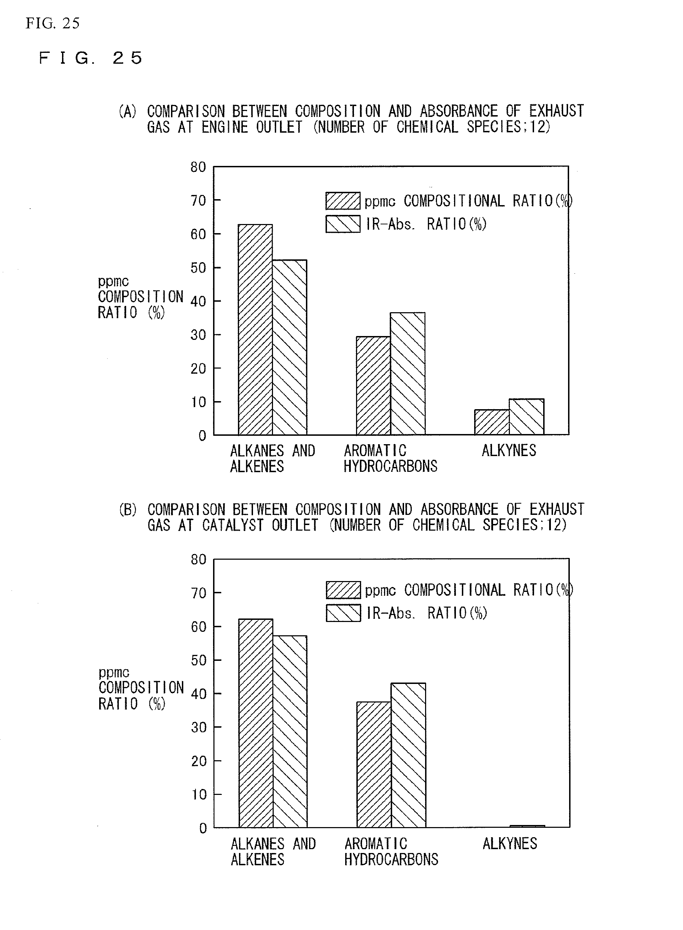

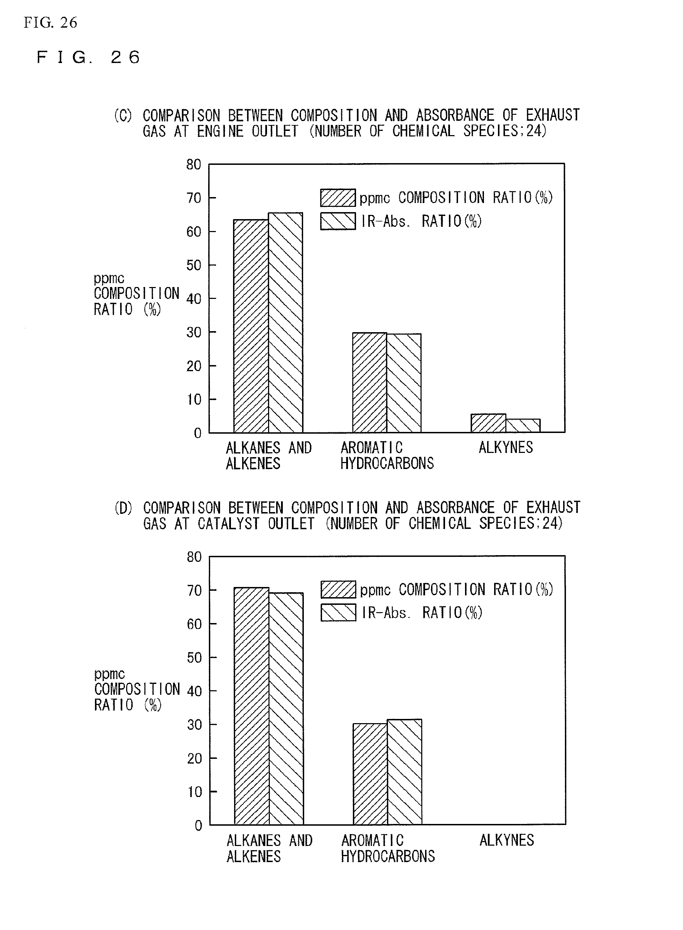

Accordingly, it is set such that a waveband ranging, in terms of wavenumber, from $2800 cm^{-1}$ to $3000 cm^{-1}$ is a "common absorption region where the chemical species belonging to the group consisting of alkanes and alkenes absorb light"; a waveband ranging, in terms of wavenumber, from $3000 cm^{-1}$ to $3200 cm^{-1}$ is a "common absorption region where the chemical species belonging to the group consisting of the aromatic hydrocarbons absorb light"; and a waveband ranging, in terms of wavenumber, from $3200 cm^{-1}$ to $3400 cm^{-1}$ is a "common absorption region where the chemical species belonging to the group consisting of alkynes absorb light". In addition, after examination of the following relations, results illustrated in Figs. 25 and 26 were obtained. That is, the relation between the absorbance in the "common absorption region where the chemical species belonging to the group consisting of alkanes and alkenes absorb light" and the sum of the compositional proportions of the chemical species belonging to the group (a) consisting of alkanes and alkenes; the relation between the absorbance in the "common absorption region where the chemical species belonging to the group consisting of aromatic hydrocarbons absorb light" and the sum of the compositional proportions of the chemical species belonging to the group (b) consisting of aromatic hydrocarbons; and the relation between the absorbance in the "common absorption region where the chemical species belonging to the group consisting of alkynes absorb light" and the sum of the compositional proportions of the chemical species belonging to the group (c) consisting of alkynes.

Fig. 25 illustrates comparison between a "ppmC compositional ratio" and a "IR-Abs. ratio" of a total of 12 chemical species included in each of the exhaust gases at the engine outlet in (B) (see Fig. 14) and the exhaust gas at the catalyst outlet in (C) (see Fig. 15), where the chemical species are divided into three groups: the group (a) consisting of alkanes and alkenes; the group (b) consisting of aromatic hydrocarbons; and the group (c) consisting of alkynes. Specifically, the "12 chemical species" represents Methane (1), i-Pentane (5), n-Pentane (6), Ethylene (13), Propylene (14), i-Butene (15), 1-Butene (16), Benzene (17), Toluene (18), m-Xylene (19), p-Xylene (21), and Acetylene (24) which are selected from 24 chemical species illustrated in Figs. 13 to 15.

The "methane-equivalent concentration value (ppmC)" is represented by a product between the concentration (ppm) of a chemical species and the number of carbon atoms in the chemical species ([ppmC] = [ppm] [the number of carbon atoms in a chemical species]), and thus is a value obtained by converting the concentration of a chemical species into the concentration of methane having the same number of carbon atoms as the chemical species. For example, when the concentration of ethane is 100 ppm, since ethane contains two carbons, the methane-equivalent concentration value of ethane is 200 (= 100 2) ppmC.

The "ppmC compositional ratio" represents the sum (%) of the methane-equivalent concentration values of the respective chemical species belonging to each group, where the sum of the methane-equivalent concentration values of all the chemical species constituting the hydrocarbons contained in the measurement target gas is set as 100%.

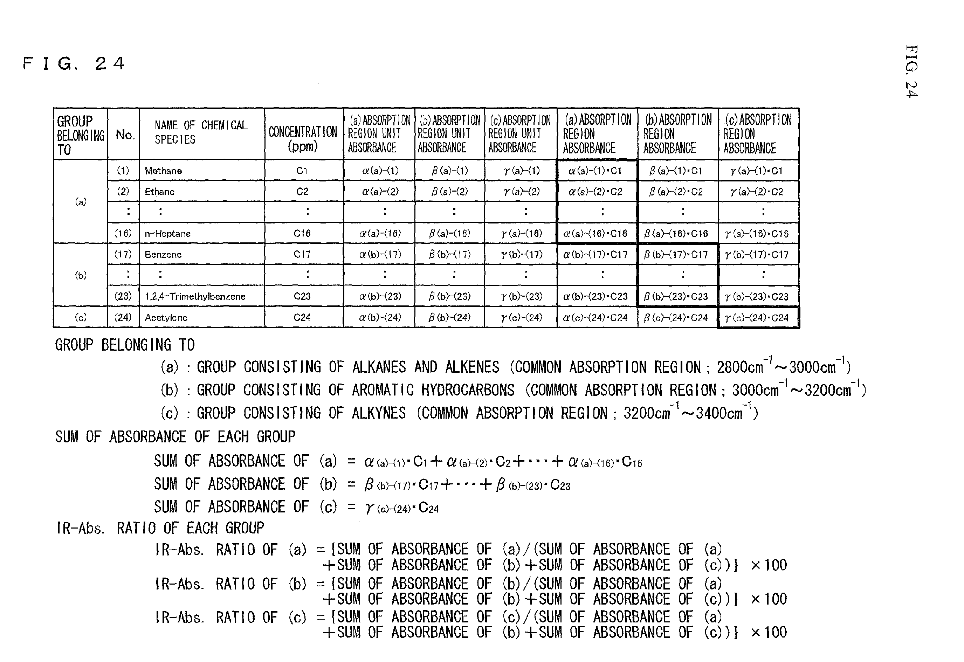

The IR-Abs. ratio is calculated based on the procedure illustrated in Fig. 24.

First, absorption spectrum data of each chemical species is normalized into data per unit concentration and per unit measurement length, thereby calculating: the absorbance per unit concentration in the common absorption region where the chemical species belonging to the group (a) consisting of alkanes and alkenes absorb light; the absorbance per unit concentration in the common absorption region where the chemical species belonging to the group (b) consisting of aromatic hydrocarbons absorb light; and the absorbance per unit concentration in the common absorption region where the chemical species belonging to the group (c) consisting of alkynes absorb light. The absorbance per unit concentration is referred to as a "unit absorbance". The "measurement length" represents the length of intersection between a measurement target gas and a light beam used for measurement. The "unit absorbance" corresponds to $\alpha_{(a)-(1)}$ to $\alpha_{(a)-(16)}$, $\alpha_{(b)-(17)}$ to $\alpha_{(b)-(23)}$, $\alpha_{(c)-(24)}$, $\beta_{(a)-(1)}$ to $\beta_{(a)-(16)}$, $\beta_{(b)-(17)}$ to $\beta_{(a)-(23)}$, $\beta_{(c)-(24)}$, $\gamma_{(a)-(1)}$ to $\gamma_{(a)-(16)}$, $\gamma_{(b)-(17)}$ to $\gamma_{(b)-(23)}$, and $\gamma_{(c)-(24)}$ of Fig. 24.

Next, the "absorbance in each absorption region" is calculated for each chemical species as the product between the concentration (ppm) of each chemical species and the unit absorbance by the chemical species. The "absorbance in each absorption region" corresponds to $\alpha_{(a)-(1)}\cdot C_1$ to $\alpha_{(a)-(16)}\cdot C_{16}$ $\alpha_{(b)-(17)}\cdot C_{17}$ to $\alpha_{(b)-(23)}\cdot C23$, $a_{(c)-(24)}\cdot C_{24}$, $\beta_{(a)-(1)}\cdot C_1$ to $\beta_{(a)-(16)}\cdot C_{16}$, $\beta_{(b)-(17)}\cdot C_{17}$ to $\beta_{(b)-(23)}\cdot C_{23}$, and $\gamma_{(c)-(24)}\cdot C_{24}$ of Fig. 24.

Next, by using the calculated "absorbance in each absorption region of each chemical species", the sum of the absorbance in the absorption region corresponding to the respective chemical species belonging to a common group is calculated. The sum of the absorbance by the respective chemical species belonging to the group (a) consisting of alkanes and alkenes corresponds to the sum of absorbance (a) of Fig. 24 (= $\alpha_{(a)-(1)}\cdot C_1 + \cdots + \alpha_{(a)-(16)}\cdot C_{16}$). The sum of the absorbance by the respective chemical species belonging to the group (b) consisting of aromatic hydrocarbons corresponds to the sum of the absorbance (b) of Fig. 24 (= $\beta_{(b)-(17)}\cdot C_{17} + \cdots + \beta_{(b)-(23)}\cdot C_{23}$). The sum of the absorbance by the respective chemical species belonging to the group (c) consisting of alkynes corresponds to the sum of the absorbance (c) of Fig. 24 (= $\gamma_{(c)-(24)}\cdot C_{24}$).

Next, a total sum is calculated by adding: the calculated sum of the absorbance by the chemical species belonging to the group (a) consisting of alkanes and alkenes; the calculated sum of the absorbance by the chemical species belonging to the group (b) consisting of aromatic hydrocarbons; and the calculated sum of the absorbance by the chemical species belonging to the group (c) consisting of alkynes. The IR-Abs. ratio of (a) is then calculated, which is a proportion (%) of the sum of the absorbance by the chemical species belonging to the group (a) consisting of alkanes and alkenes relative to the total sum. Similarly, the IR-Abs. ratio of (b) and the IR-Abs. ratio of (c) are calculated.

As shown in Fig. 25, despite of a comparison using a part (12 species) of a large number of chemical species, the sum of the compositional ratios (the ppmC compositional ratios) based on the FID-GC, and the IR-Abs. ratios are relatively coincident with each other, with respect to each group.

Fig. 26 illustrates comparison between "ppmC compositional ratio" and "IR-Abs. ratio" of a total of 24 chemical species included in each of the exhaust gas at the engine outlet in (B) (see Fig. 14) and the exhaust gas at the catalyst outlet in (C) (see Fig. 15), where the total of 24 chemical species included in each exhaust gas (all the chemical species whose spectrums are shown in Figs. 16 to 23) are divided into three groups: the group (a) consisting of alkanes and alkenes; the group (b) consisting of aromatic hydrocarbons; and the group (c) consisting of alkynes.

In the exhaust gas at the engine outlet in (B), the sum of the volume of the 24 chemical species constitutes about 75% of the total sum (100%) of the volume of all the chemical species, whereas in the exhaust gas at the catalyst outlet in (C), the sum constitutes 65% of the total sum (100%) of the volume of all the chemical species.

As shown in Fig. 26, as compared with above-described Fig. 25, when the target chemical species are increased from 12 species to 24 species, the sum of the compositional ratios (the ppmC compositional ratios) based on the FID-GC, and the IR-Abs. ratios are more closely coincident with each other, with respect to each group.

In this manner, it is found that when the hydrocarbons contained in a measurement target gas are divided into the group (a) consisting of alkanes and alkenes, the group (b) consisting of aromatic hydrocarbons, and the group (c) consisting of alkynes, and then the common absorption region is set for each group, it is possible to accurately measure the sum of the concentration of the respective chemical species belonging to each group, based on the absorbance in the corresponding "common absorption region".

The hydrocarbon concentration measuring apparatus and the hydrocarbon concentration measuring method according to the present invention are based on the above findings, and accordingly divides the hydrocarbons contained in a measurement target gas into three groups in consideration of the structure (bonding state among atoms) of each chemical species constituting the hydrocarbons, to thereby measure with excellent responsivity and accuracy the sum of the compositional proportion (sum of the concentration) of the chemical species belonging to each group.

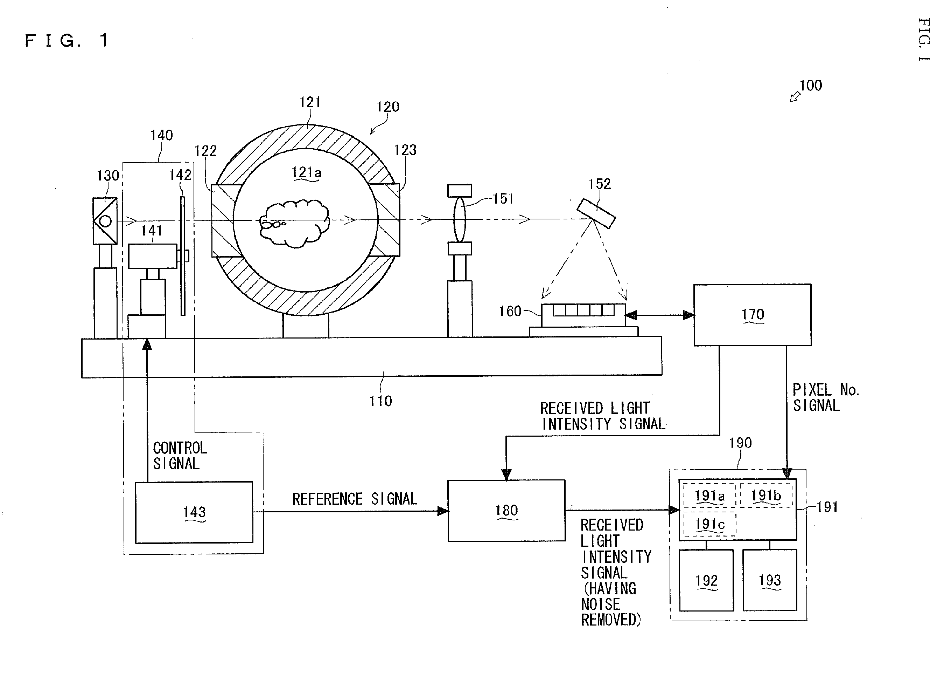

Hereinbelow, with reference to Figs. 1 to 5, a hydrocarbon concentration measuring apparatus 100 will be described as a first embodiment of the hydrocarbon concentration measuring apparatus according to the present invention.

The hydrocarbon concentration measuring apparatus 100 is designed to measure the concentration of hydrocarbons contained in a measurement target gas.

As shown in Fig. 1, the hydrocarbon concentration measuring apparatus 100 generally includes an optical rail 110, a gas accommodating section 120, an infrared radiator 130, a chopper device 140, a lens 151, a diffraction grating 152, a line sensor 160, a sensor control device 170, a signal processing circuit 180, an analyzer 190, and the like.

The optical rail 110 is a main structure of the hydrocarbon concentration measuring apparatus 100, and has fixed thereto optical system units (the infrared radiator 130, the chopper device 140, the lens 151, the diffraction grating 152, the line sensor 160, and the like) of the hydrocarbon concentration measuring apparatus 100.

The gas accommodating section 120 is one example of a gas accommodating section according to the present invention, and includes a gas accommodating container 121, a radiation-side window 122, a detection-side window 123, and the like.

The gas accommodating container 121 is a substantially cylinder-shaped member having flanges formed on both ends thereof, and has an internal space 121 a thereinside. The gas accommodating container 121 is arranged medially along a transfer path for transferring a measurement target gas, to thereby introduce the measurement target gas into the internal space 121 a of the gas accommodating container 121.

The radiation-side window 122 and the detection-side window 123 are provided to the gas accommodating container 121, and are, in the present embodiment, each formed by fitting a transparent quartz or the like into a hole which penetrates through the outer circumference surface and the inner circumference surface of the gas accommodating container 121.

The gas accommodating section 120 is arranged medially along of an optical path along which light radiated from the infrared radiator 130 travels to thereby be detected by the line sensor 160. The location and orientation of the gas accommodating section 120 is adjusted such that the radiation-side window 122 and the detection-side window 123 each intersect with the optical path.

Note that although the gas accommodating section 120 of the present embodiment has a configuration in which the radiation-side window 122 and the detection-side window 123 are each formed by fitting transparent quartz into the gas accommodating container 121, the present invention is not limited thereto. For example, it may be configured such that two holes are arranged in the substantially cylinder-shaped container, each hole penetrating through the inner circumference surface and the outer circumference surface of the container; optical fibers are fitted into the holes; and the optical fibers function as the "radiation-side window and the optical path between the radiation section and the container" and as the "detection-side window and the optical path between the container and the detection section".

The gas accommodating section 120 preferably includes a heating means (a heater and the like) for heating respective members (the gas accommodating container 121, the radiation-side window 122, the detection-side window 123, and the like) included in the gas accommodating section 120 to keep the temperature of the members included in the gas accommodating section 120 at a predetermined level or higher.

By keeping the temperature of each member included in the gas accommodating section 120 at the predetermined level or higher, it is possible to prevent adhesion of chemical species constituting hydrocarbons contained in a measurement target gas, stains on the optical system resulting from aggregation of water content, and fogging. As a result, the accuracy of the hydrocarbon concentration measuring by the hydrocarbon concentration measuring apparatus 100 can be secured.

The infrared radiator 130 is one example of a radiating section according to the present invention, and irradiates a measurement target gas introduced into the internal space 121a of the gas accommodating container 121 with light having a waveband including: the common absorption region where the chemical species belonging to the group (a) consisting of alkanes and alkenes absorb light; the common absorption region where the chemical species belonging to the group (b) consisting of aromatic hydrocarbons absorb light; and the common absorption region where the chemical species belonging to the group (c) consisting of alkynes absorb light.

The light (infrared radiation) radiated from the infrared radiator 130 passes through the radiation-side window 122 of the gas accommodating section 120, enters the internal space 121a of the gas accommodating container 121, and thereby irradiates the measurement target gas introduced into the internal space 121 a. The light having irradiated the measurement target gas passes through the detection-side window 123 of the gas accommodating section 120, and is led to the outside of the gas accommodating section 120.

The infrared radiator 130 of this embodiment includes a semiconductor device, e.g., an IR device, capable of generating infrared radiation including a waveband ranging, in terms of wavenumber, from $2800cm^{-1}$ to $3400cm^{-1}$.

In this embodiment, the waveband of the light (infrared radiation) radiated from the infrared radiator 130 to irradiate the measurement target gas ranges, in terms of wavenumber, from $2000cm^{-1}$ to $4000cm^{-1}$, and includes all of the common absorption region where the chemical species belonging to the group (a) consisting of alkanes and alkenes absorb light, the common absorption region where the chemical species belonging to the group (b) consisting of aromatic hydrocarbons absorb light, and the common absorption region where the chemical species belonging to the group (c) consisting of alkynes absorb light.

The chopper device 140 is an example of a chopper section according to the present invention, and switches alternately between the situation (i) where the light from infrared radiator 130 irradiates the measurement target gas introduced into the internal space 121a of the gas accommodating section 120 (the situation where the light passes through), and the situation (ii) where no light from the infrared radiator 130 irradiates the measurement target gas (the situation where the light is blocked). Accordingly, the chopper device 140 changes (modulates) the intensity of the light irradiating the measurement target gas cyclically. The chopper device 140 is arranged between the infrared radiator 130 and the gas accommodating section 120 (more precisely, the measurement target gas).

The chopper device 140 generally includes a motor 141, a rotating disc 142, a chopper control device 143, and the like.

The motor 141 is an electric motor, and a driving shaft of the motor is fixed at the center of the rotating disc 142.

The rotating disc 142 is a substantially disc-shaped member, and has a plurality of holes formed in the disc so as to penetrate through the front and back surfaces of the disc. The holes are arranged in the rotating disc 142 in a predetermined regular pattern in its circumferential direction. The rotating disc 142 is made of a material that does not transmit light radiated from the infrared radiator 130.

The rotating disc 142 is arranged at a position between the infrared radiator 130 and the gas accommodating section 120 (more precisely, the measurement target gas), in a manner as to intersect an optical path of the light radiated from the infrared radiator 130.

When the motor 141 is driven to rotate, the rotating disc 142 rotates, which switches alternately between the situation where one of the holes formed in the rotating disc 142 intersects the optical path and the situation where a portion other than the holes formed in the rotating disc 142 intersects the optical path.

In the situation where the holes formed in the rotating disc 142 intersects the optical path, the light radiated from the infrared radiator 130 passes through the holes formed in the rotating disc 142, and irradiates the measurement target gas in the internal space 121 a of the gas accommodating section 120.

In the situation where a portion other than the holes formed in the rotating disc 142 intersects the optical path, the light radiated from the infrared radiator 130 is blocked by the rotating disc 142, and consequently does not irradiate the measurement target gas in the internal space 121 a of the gas accommodating section 120.

The chopper control device 143 controls the rotation and the stop of rotation of the motor 141 as well as the rotating speed of the motor 141 (and also the rotating speed of the rotating disc 142), and is formed of a Programmable Logic Controller (PLC) having stored therein a program for controlling the motion of the motor 141.

The chopper control device 143 is connected to the motor 141, and sends a signal (control signal) to the motor 141 so as to control the rotating speed of the motor 141.

In addition, the chopper control device 143 outputs a signal indicating a switching motion of the chopper device 140 as a reference signal.

The reference signal is outputted when the rotating disc 142 is in a predetermined phase. The period between outputs of the reference signal corresponds to the time required for switching from the situation (i) where the light from the infrared radiator 130 irradiates the measurement target gas in the internal space 121a of the gas accommodating section 120 to the situation (ii) where the light does not irradiate the measurement target gas, and again switching to the situation (i) where the light irradiates the measurement target gas in the internal space 121 a of the gas accommodating section 120.

The chopper device 140 in this embodiment is configured such that the rotating disc 142 having a plurality of holes formed therein is arranged so as to intersect the optical path, and rotation of the rotating disc 142 allows transmission of light or blocks light, whereby the light is chopped (switching is performed between the situation where the light irradiates the measurement target gas and the situation where the light does not irradiate the measurement target gas). According to the present invention, the chopping section is not limited to this, but may be configured such that a rotating disc having a plurality of slits (slots) formed therein rotates, thereby chopping light by transmitting or blocking the light. Further, a configuration using an electro-optic element or the like for chopping light may be applied as another example of the chopping section according to the present invention.

The lens 151 is used to converge (narrowing down) the light having passed through the detection-side window 123 of the gas accommodating section 120 to thereby be led to the outside of the gas accommodating section 120. If the light having passed through the detection-side window 123 of the gas accommodating section 120 to the outside the gas accommodating section 120 has a sufficient intensity, the lens 151 is not necessary.

The diffraction grating 152 is an example of a splitter according to the present invention, and is designed to diffract and split the light converged by the lens 151 into respective wavelengths to thereby irradiate the line sensor 160. The diffraction grating 152 is made of a metal plate having numerous grooves (about several thousands grooves in 1mm) formed mutually in parallel on a mirror-like finished surface thereof. The light incident on the diffraction grating 152 is diffracted and split into each wavelength, and the split light is outputted to the line sensor 160, at various angles of reflection depending on the wavelengths.

The diffraction grating 152 of this embodiment is made of a metal plate having a myriad of grooves formed mutually in parallel on its surface. However, the splitter according to the present invention is not limited thereto, but may have any configuration, as long as it is capable of splitting light incident thereon into respective wavelengths.

Other examples of the splitter according to the present invention include a diffraction grating having a large number of slits formed mutually in parallel, and a prism (that splits light using a refractive index of a medium).

The line sensor 160 is one example of a detection section according to the present invention, and is designed to detect the light radiated from the infrared radiator 130 to irradiate the measurement target gas.

The line sensor 160 is formed of multiple light receiving elements (pixels) for receiving light (infrared radiation) which are arranged in a line, and the positional relation (postures) of the diffraction grating 152 and the line sensor 160 are determined so that light beams having respective wavelengths obtained as a result of splitting by the diffraction grating 152 are respectively outputted to different light receiving elements.

In this embodiment, the line sensor 160 has a total of 200 light receiving elements (pixels), respectively having pixel numbers No.1 to No.200, arranged in a line.

Of the light receiving elements included in the line sensor 160, light receiving elements No.83 to No.117 correspond to a waveband ranging, in terms of wavenumber, from 2800cm$^{-1}$ to 3000cm$^{-1}$, i.e., the "common absorption region where the group consisting of alkanes and alkenes absorb light".

Of the light receiving elements included in the line sensor 160, light receiving elements No. 118 to No.150 correspond to a waveband ranging, in terms of wavenumber, from 3000cm$^{-1}$ to 3200cm$^{-1}$, i.e., the "common absorption region where the chemical species belonging to the group consisting of aromatic hydrocarbons absorb light".

Of the light receiving elements included in the line sensor 160, light receiving elements No.151 to No.184 correspond to a waveband ranging, from in terms of wavenumber, from 3200cm$^{-1}$ to 3400cm$^{-1}$, i.e., the "common absorption region where the chemical species belonging to the group consisting of alkynes absorb light".

A sweep frequency for sweeping all the pixels (No.1 -> 200) of the line sensor 160 in this embodiment is preferably set sufficiently higher than the light chopping frequency generated by the rotating disc 142 and the chopper control device 143 (equal to or more than twice, more preferably equal to or more than several tens of times the level of the chopping frequency, based on the measurement at the time of turning ON/OFF the light). Alternatively, the sweep frequency for sweeping all the pixels (No.1→200) of the line sensor 160 in this embodiment is preferably set sufficiently lower than the light chopping frequency by the rotating disc 142 and the chopper control device 143 (preferably, equal to or less than one millionth the level of the chopping frequency).

Further, the line sensor 160 is configured such that multiple light receiving elements are arranged in a line, however, the detection section according to the present invention is not limited thereto. Other examples of the configuration of the detection section according to the present invention include a configuration including a single light receiving element, a configuration including multiple light receiving elements, and the like.

The sensor control device 170 is designed to control the motion of the line sensor 160, and is formed of a Programmable Logic Controller (PLC) having stored therein a program for controlling the motion of the line sensor 160. The sensor control device 170 obtains (receives) from the line sensor 160 a received-light-intensity-signal which is information on a received light intensity at each of the plurality of light receiving elements (pixels) included in the line sensor 160. In this embodiment, the received-light-intensity-signal is an electrical signal having a voltage substantially proportional to the received light intensity of the light received by each light receiving element.

Each of the light receiving elements included in the line sensor 160 has in advance allocated thereto a specific number (light receiving element number), and the sensor control device 170 sends the received-light-intensity-signal to the signal processing circuit 180 in order of the numbers specific to the respective light receiving elements.

The sensor control device 170 also sends to the analyzer 190 a signal (pixel No. signal) indicating which one of the multiple light receiving elements in the line sensor 160 corresponds to the received-light-intensity-signal sent to the signal processing circuit 180.

The signal processing circuit 180 is designed to remove noises from the received-light-intensity-signal obtained from the sensor control device 170.

The signal processing circuit 180 is connected to the chopper device 140, and obtains (receives) a reference signal from the chopper device 140.

The signal processing circuit 180 is connected to the sensor control device 170, and obtains (receives) the received-light-intensity-signal from the sensor control device 170.

The signal processing circuit 180 extracts an "element that is in synchronism with a cyclic intensity change" from the received-light-intensity-signal, based on the reference signal and the received-light-intensity-signal, thereby removing a noise element included in the received-light-intensity-signal.

The signal processing circuit 180 sends to the analyzer 190 the received-light-intensity-signal having removed therefrom the noise element. The signal processing circuit 180 removes noises from the received-light-intensity-signal, whereby resolution of the received-light-intensity-signal is improved, and accordingly, a minute change in the hydrocarbon concentration (or a minute hydrocarbon concentration) can be measured with excellent accuracy.

The signal processing circuit 180 of this embodiment may be a dedicated component. However, a commercially available signal processing circuit is also applicable.

The analyzer 190 is one example of an analyzing section according to the present invention, and designed to calculate, with respect to the measurement target gas, the absorbance in the "common absorption region where the chemical species belonging to each of the groups absorb light", based on the light detected by the line sensor 160, thereby calculating the sum of the concentration of the chemical species belonging to each of the groups corresponding to each absorption region.

The analyzer 190 generally includes an analyzing section 191, an input 192, a display section 193, and the like.

The analyzing section 191 stores therein various programs or the like (e.g., an absorbance calculation program and concentration calculation program to be described later), expands these programs, performs predetermined calculations in accordance with these programs, and stores results of the calculations.

The analyzing section 191 may substantially have a configuration in which a CPU, a ROM, a RAM, an HDD, and the like are connected via a bus, or alternatively have a configuration composed of a chip of an LSI or the like.

The analyzing section 191 in this embodiment is a dedicated component. However, the prevent invention may be achieved by storing the above programs or the like in a personal computer, a workstation, or the like, all of which are commercially available.

The analyzing section 191 is connected to the sensor control device 170, and is capable of obtaining (receiving) the pixel No. signal.

The analyzing section 191 is also connected to the signal processing circuit 180, and is capable of obtaining (receiving) the received-light-intensity-signal (more precisely, having removed therefrom the noise element).

The input 192 is connected to the analyzing section 191, and inputs to the analyzing section 191 various pieces of information and instructions relating to an analysis by the hydrocarbon concentration measuring apparatus 100.

The input 192 of this embodiment is a dedicated component. A similar advantageous effect can be also achieved by using a keyboard, a mouse pointing device, a button, a switch, or the like, all of which are commercially available.

The display section 193 is designed to display details of inputs from the input 192 to analyzing section 191, analysis results (measurement results of the hydrocarbon concentration) by the analyzing section 191, and the like.

The display section 193 of this embodiment is a dedicated component. A similar advantageous effect can be also achieved by using a monitor, a liquid crystal display, or the like all of which are commercially available.

Hereinafter, the configuration of the analyzing section 191 will be described in detail.

The analyzing section 191 functionally includes a storage section 191a, an absorbance calculation section 191b, a concentration calculation section 191c, and the like.

The storage section 191a stores information, calculation results, and the like which are used in various calculations performed by the analyzing section 191.

The storage section 191a stores a spectrum of a gas for reference (hereinafter referred to as a reference gas). The "reference gas" is a gas that is already known as not to absorb light in the three absorption regions where the hydrocarbons contained in the measurement target gas absorb light. Specific examples of the reference gas include a nitrogen gas.

The "spectrum of the reference gas" indicates the relation between the wavelength and the intensity of light when the reference gas is irradiated with the light.

In this embodiment, the waveband of the spectrum of the reference gas is set in a range, in terms of wavenumber, from $2000cm^{-1}$ to $4000cm^{-1}$. The range is set so as to include all the absorption regions of the three groups in hydrocarbons.

Preferably, the spectrum of the reference gas is obtained and updated (i) regularly (e.g., one per month), or (ii) prior to each measurement of the hydrocarbon concentration by the hydrocarbon concentration measuring apparatus 100.

Appropriate updating of the spectrum of the reference gas makes it possible to prevent deterioration in the measurement accuracy which results from: for example, stain adhesion on the optical system such as the radiation-side window 122, the detection-side window 123, the lens 151, and the like; deterioration in the semiconductor devices in the infrared radiator 130; deterioration in the light receiving elements in the line sensor 160; and deterioration in filters or the like (not shown) intersecting the optical path.

The absorbance calculation section 191b calculates the absorbance by the measurement target gas in a common absorption region in accordance with the light detected by the line sensor 160.

Substantially, the function of the absorbance calculation section 191b is attained by the analyzing section 191 performing predetermined calculations in accordance with the absorbance calculation program.

The absorbance calculation section 191b obtains the pixel No. signal from the sensor control device 170, and also obtains the received-light-intensity-signal from the signal processing circuit 180.

The pixel No. signal obtained from the sensor control device 170 is information representing the geometrical positional relation between a light receiving element corresponding to each pixel No. and the diffraction grating 152, that is, the diffraction angle of the light diffracted by the diffraction grating 152, and also represents the wavelength of the light received by each of the light receiving elements.

Therefore, the absorbance calculation section 191b is capable of specifying a wavelength (waveband) corresponding to the obtained received-light-intensity-signal by comparing the pixel No. signal with the received-light-intensity-signal.

In accordance with the "received-light-intensity-signal whose wavelength (waveband) has been specified" and the "spectrum of the reference gas", the absorbance calculation section 191b calculates the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light", with respect to the measurement target gas.

More specifically, the absorbance calculation section 191b uses the sum of the received-light-intensity-signals corresponding to the light receiving elements having pixel numbers No.83 to No.117, to thereby calculate the "received light intensity in the common absorption region where the chemical species belonging to the group consisting of alkanes and alkenes absorb light".

Further, the absorbance calculation section 191b uses the sum of the received-light-intensity-signals corresponding to the light receiving elements having pixel numbers No.118 to No.150, to thereby calculate the "received light intensity in the common absorption region where the chemical species belonging to the group consisting of aromatic hydrocarbons absorb light".

Further, the absorbance calculation section 191b uses the sum of the received-light-intensity-signals corresponding to the light receiving elements having pixel numbers No.151 to No.184, to thereby calculate the "received light intensity in the common absorption region where the chemical species belonging to the group consisting of alkynes absorb light".

Next, in accordance with the calculated "received light intensity in the common absorption region where the chemical species belonging to the group consisting of alkanes and alkenes absorb light" and the "intensity of light having a waveband, in the spectrum of the reference gas, corresponding to the common absorption region where the chemical species belonging to the group consisting of alkanes and alkenes absorb light", the absorbance calculation section 191b calculates the "absorbance in the common absorption region where the chemical species belonging to the group consisting of alkanes and alkenes absorb light", with respect to the measurement target gas.

Similarly, the absorbance calculation section 191b calculates, with respect to the measurement target gas, the "absorbance in the common absorption region where the chemical species belonging to the group consisting of aromatic hydrocarbons absorb light" and the "absorbance in the common absorption region where the chemical species belonging to the group consisting of alkynes absorb light".

With the use of the following Equation 1, calculations are performed, with respect to the measurement target gas, on the "absorbance in the common absorption region where the chemical species belonging to the group consisting of alkanes and alkenes absorb light", and the "absorbance in the common absorption region where the chemical species belonging to the group consisting of aromatic hydrocarbons absorb light", and the "absorbance in the common absorption region where the chemical species belonging to the group consisting of alkynes absorb light".

[Equation 1]

$$An = \mathrm{Log}\left(\frac{In}{(In)_0}\right) \qquad \left\{ \begin{array}{l} n=1: \text{alkanes} \cdot \text{alkenes,} \\ n=2: \text{aromatic hydrocarbons,} \\ n=3: \text{alkynes} \end{array} \right\}$$

In Equation 1, "An" indicates the absorbance, "In" indicates the intensity of light passing through an absorption waveband to be targeted when the measurement target gas is irradiated with light (the received light intensity of transmitted light, hereinafter referred to as the "received light intensity"), and "$(In)_0$" indicates the intensity of light passing through an absorption waveband to be targeted when the reference gas (normally, a gas containing no hydrocarbon) is irradiated with light.

The concentration calculation section 191c calculates the "sum of the concentration of the chemical species belonging to the group consisting of alkanes and alkenes" in accordance with the "absorbance in the common absorption region where the chemical species belonging to the group consisting of alkanes and alkenes absorb light", calculates the "sum of the concentration of the chemical species belonging to the group consisting of aromatic hydrocarbons" in accordance with the "absorbance in the common absorption region where the chemical species belonging to the group consisting of aromatic hydrocarbons absorb light", and calculates the "sum of the concentration of the chemical species belonging to the group consisting of alkynes" in accordance with the "absorbance in the common absorption region where the chemical species belonging to the group consisting of alkynes absorb light", all the absorbance having been calculated by the absorbance calculation section 191b.

Substantially, the function of the concentration calculation section 191c is attained by the analyzing section 191 performing predetermined calculations in accordance with the concentration calculation program.

Specifically, the concentration calculation section 191 c calculates the "sum of the concentration of the chemical species belonging to the group consisting of alkanes and alkenes" included in the measurement target gas as a product between Coefficient A stored in advance in the storage section 191 a and the "absorbance in the common absorption region where the chemical species belonging to the group consisting of alkanes and alkenes absorb light".

Similarly, the concentration calculation section 191c calculates the "sum of the concentration of the chemical species belonging to the group consisting of aromatic hydrocarbons" included in the measurement target gas as a product between Coefficient B stored in advance in the storage section 191 a and the "absorbance in the common absorption region where the chemical species belonging to the group consisting of aromatic hydrocarbons absorb light".

Similarly, the concentration calculation section 191c calculates the "sum of the concentration of the chemical species belonging to the group consisting of alkynes" included in the measurement target gas as a product between Coefficient C stored in advance in the storage section 191a and the "absorbance in the common absorption region where the chemical species belonging to the group consisting of alkynes absorb light".

Further, the concentration calculation section 191c calculates "total hydrocarbon concentration of the measurement target gas" as a total sum of the "sum of the concentration of the chemical species belonging to the group consisting of alkanes and alkenes", the "sum of the concentration of the chemical species belonging to the group consisting of aromatic hydrocarbons", and the "sum of the concentration of the chemical species belonging to the group consisting of alkynes".

The Coefficient A, Coefficient B, and Coefficient C stored in the storage section 191a in advance may vary depending on the amount of light (light quantity) radiated from the infrared radiator 130, a measurement length (in this example, corresponding to the distance between the radiation-side window 122 and the detection-side window 123 of the gas accommodating section 120), and the like. Thus, the coefficients are determined experimentally based on the calculation results of the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light", which are obtained by measuring a gas whose hydrocarbon composition is obtained in advance by FID-GC or the like using the hydrocarbon concentration measuring apparatus 100.

Further, in this example, the sum of the concentration of the chemical species belonging to the respective groups and the total hydrocarbon concentration, which are calculated by the concentration calculation section 191c, are calculated in the form of methane equivalent concentration value (ppmC). However, the present invention is not limited to this, but may be calculated in the form of a volume ratio or the like.

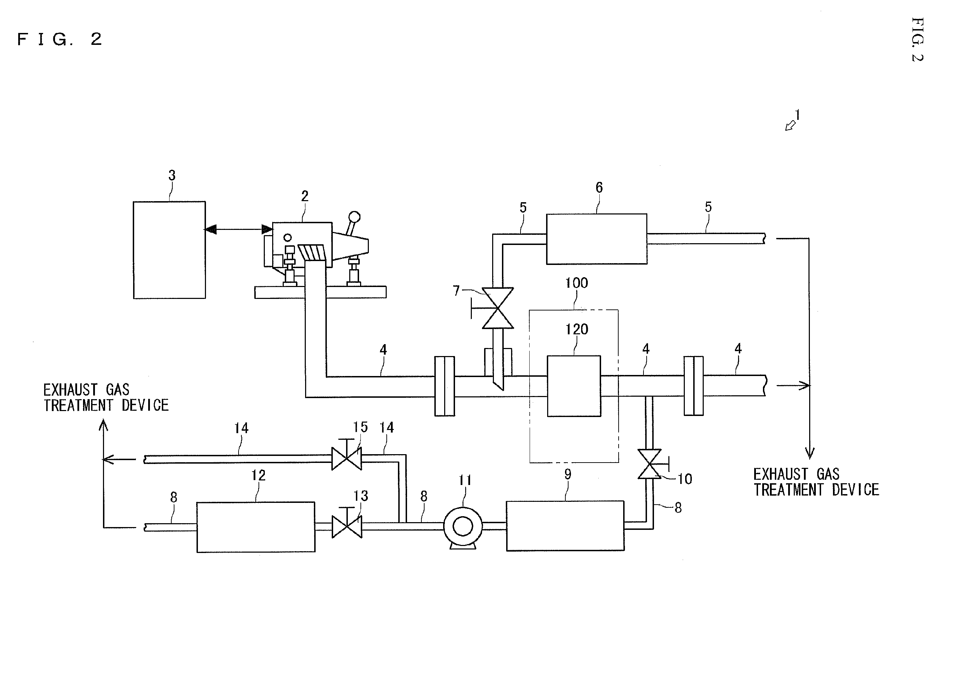

Hereinafter, with reference to Figs. 2 to 5, an example of a hydrocarbon concentration measuring experiment performed by the hydrocarbon concentration measuring apparatus 100 will be described.

As shown in Fig. 2, the example of the hydrocarbon concentration measuring experiment performed by the hydrocarbon concentration measuring apparatus 100 uses an experimental facility 1.

The experimental facility 1 includes the hydrocarbon concentration measuring apparatus 100, an engine 2, an engine control device 3 a main exhaust path 4, a sub exhaust path 5, a GC analysis gas bag 6, a valve 7, a sub exhaust path 8, a pretreatment device 9, a valve 10, a pump 11, a THC meter 12, a valve 13, a sub exhaust path 14, a valve 15, and the like.

The engine 2 generates an exhaust gas which is a measurement target gas in this experiment.

The engine control device 3 is connected to the engine 2, and controls an operational condition of the engine 2 such as the rotating speed and the like.

The main exhaust path 4 is piping whose one end is communicably connected to an exhaust manifold of the engine 2, and whose other end is communicably connected to an exhaust treatment device (a device for eliminating fine particles and hydrocarbons in exhaust gas and discharging the remaining gas to the air) not shown in the drawing. A large proportion of the exhaust gas generated by the engine 2 is transferred to the exhaust treatment device through the main exhaust path 4.

The hydrocarbon concentration measuring apparatus 100 is arranged medially along the main exhaust path 4. Precisely, along the main exhaust path 4, the gas accommodating section 120 of the hydrocarbon concentration measuring apparatus 100 is arranged, and an exhaust gas passes through the internal space 121a of the gas accommodating section 120 (gas accommodating container 121).

The sub exhaust path 5 is piping whose one end is communicably connected to the main exhaust path 4 at a position on the upstream side (a position proximal to the engine 2) from the gas accommodating section 120, and whose other end is communicably connected to the exhaust treatment device not shown in the drawing.

The GC analysis gas bag 6 is a container (or a bag) for sampling an exhaust gas, and the sampled exhaust gas is subjected to composition analysis by a GC (Gas Chromatograph) not shown. The GC analysis gas bag 6 is arranged medially along the sub exhaust path 5.

The valve 7 is arranged medially along the sub exhaust path 5 on the upstream side (a position closer to the engine 2) from the GC analysis gas bag 6. When the valve 7 is opened, the exhaust gas passing through the main exhaust path 4 partially passes through the GC analysis gas bag 6. When the valve 7 is closed, the exhaust gas passing through the main exhaust path 4 stops passing through the GC analysis gas bag 6.

The sub exhaust path 8 is piping whose one end is communicably connected to the main exhaust path 4 at a position on the downstream side (a position distal to the engine 2) from the gas accommodating section 120, and whose other end is communicably connected to the exhaust treatment device not shown.

The pretreatment device removes fine particles (dust) and moisture included in an exhaust gas, and is formed by combining, for example a filter for trapping fine particles and a drying agent. The pretreatment device 9 is arranged medially along the sub exhaust path 8.

The valve 10 is arranged medially along the sub exhaust path 8 at a position on the upstream side (a position closer to the engine 2) from the pretreatment device 9. When the valve 10 is opened, an exhaust gas passing through the main exhaust path 4 partially passes through the pretreatment device 9. When the valve 10 is closed, the exhaust gas passing through the main exhaust path 4 stops passing through the pretreatment device 9.

The pump 11 is arranged medially along the sub exhaust path 8 at a position on the downstream side (a position distanced from the engine 2) from the pretreatment device 9. The pump 11 intakes an exhaust gas from a port of the sub exhaust path 8 provided on the side of the main exhaust path 4, and discharges the exhaust gas from a port of the sub exhaust path 8 provided on the side of the exhaust treatment device not shown, thereby enhancing flow of the exhaust gas into the sub exhaust path 8.

The THC meter 12 is a device for measuring total hydrocarbon concentration based on the Hydrogen Flame Ionization Detector method (FID). The THC meter 12 may be a dedicated component, or alternatively, a commercially available THC meter or the like may be applicable.

The valve 13 is arranged medially along the sub exhaust path 8 at a position on the downstream side from the pump 11 and on the upstream side from the THC meter 12. When the valve 13 is opened, an exhaust gas having passed through the pretreatment device 9 and the pump 11 passes through the THC meter 12. When the valve 13 is closed, the exhaust gas having passed through the pretreatment device 9 and the pump 11 stops passing through the THC meter 12.

The sub exhaust path 14 is piping whose one end is communicably connected to the sub exhaust path 8 at a position on the downstream side from the pump 11 and on the upstream side from the valve 13, and whose other end is communicably connected to the exhaust treatment device not shown.

The valve 15 is arranged medially along the sub exhaust path 14. When the valve 15 is opened, an exhaust gas having passed through the pretreatment device 9 and the pump 11 partially passes through the sub exhaust path 14. When the valve 15 is closed, the exhaust gas having passed through the pretreatment device 9 and the pump 11 stops passing through the sub exhaust path 14.

Hereinafter, the procedure of the hydrocarbon concentration measuring experiment performed by the hydrocarbon concentration measuring apparatus 100 and the experimental result will be described.

The hydrocarbon concentration measuring experiment by the hydrocarbon concentration measuring apparatus 100 is divided into (1) responsivity validation test, and (2) measurement accuracy validation test in the case where the engine is in a steady operation, and the tests will be described in this order.

The procedure of (1) responsivity validation test will be described hereinbelow.

First, the engine 2 was started with the valve 7, valve 10, valve 13, and valve 15 being closed, and was then shifted to an idling state.

Next, when the rotating speed of the engine 2 was stabilized in the idling state, the valve 10, valve 13, and valve 15 were opened, to thereby start the hydrocarbon concentration measuring by the hydrocarbon concentration measuring apparatus 100 and the hydrocarbon concentration measuring by the THC meter 12.

Subsequently, when a predetermined period of time had elapsed after the start of the hydrocarbon concentration measuring by the hydrocarbon concentration measuring apparatus 100 and the hydrocarbon concentration measuring by the THC meter 12, the rotating speed of the engine 2 was increased to a predetermined rotating speed.

Subsequently, when a predetermined period of time had elapsed after the rotating speed of the engine 2 was increased to the predetermined rotating speed, the engine 2 was stopped, to thereby end the hydrocarbon concentration measuring by the hydrocarbon concentration measuring apparatus 100 and the hydrocarbon concentration measuring by the THC meter 12.

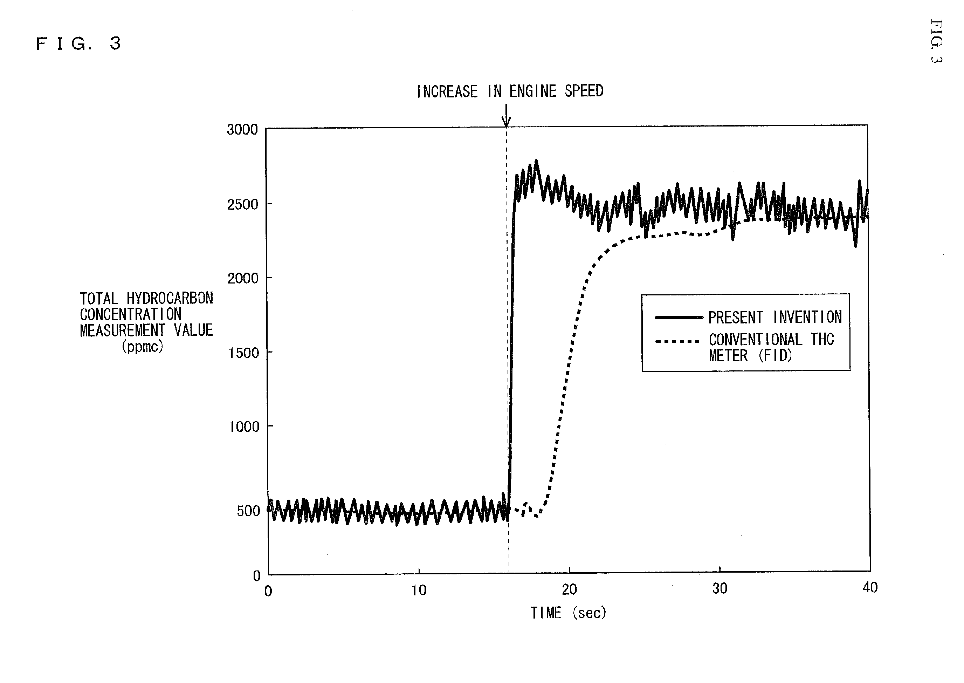

As shown in Fig. 3, the measurement result (indicated by a bold dotted line in Fig. 3) of the total hydrocarbon concentration measured by the THC meter 12 indicates that the total hydrocarbon concentration rises several seconds after the rotating speed of the engine 2 has been increased, which represents a response delay.

On the other hand, the measurement result (indicated by a bold solid line in Fig. 3) of the total hydrocarbon concentration measured by the hydrocarbon concentration measuring apparatus 100 indicates that the total hydrocarbon concentration rises concurrently with the increase of the rotating speed of the engine 2, which indicates no response delay.

Therefore, it is obvious that the hydrocarbon concentration measuring apparatus 100 exhibits high responsivity in the hydrocarbon concentration measuring.

Further, according to the measurement result of the total hydrocarbon concentration by the THC meter 12, the total hydrocarbon concentration changes smoothly which results from the response delay, and thus it is difficult to grasp a slight change in the concentration.

On the other hand, the measurement result of the total hydrocarbon concentration by the hydrocarbon concentration measuring apparatus 100 grasps a slight change in the total hydrocarbon concentration immediately after the total hydrocarbon concentration has risen as shown in Fig. 3.

Hereinbelow, the procedure of (2) measurement accuracy validation test in the case where the engine is in a steady operation will be described.

First, the engine 2 was started with the valve 7, valve 10, valve 13, and valve 15 being closed, so that the engine 2 reaches a predetermined rotating speed.

Next, when the rotating speed of the engine 2 was stabilized at the predetermined rotating speed, the valve 7, valve 10, valve 13, and valve 15 were opened, to thereby start the hydrocarbon concentration measuring by the hydrocarbon concentration measuring apparatus 100 and the hydrocarbon concentration measuring by the THC meter 12. In addition, sampling of respective chemical species was started using the GC analysis gas bag 6.

Subsequently, when a predetermined period of time had elapsed after the hydrocarbon concentration measurings by the hydrocarbon concentration measuring apparatus 100 and by the THC meter 12, and sampling of the respective chemical species using the GC analysis gas bag 6 were started, the hydrocarbon concentration measurings by the hydrocarbon concentration measuring apparatus 100 and by the THC meter 12, and the sampling of the respective chemical species using the GC analysis gas bag 6 were ended, to thereby stop the engine 2.

As to (2) measurement accuracy validation test in the case where the engine is in a steady operation, the experiment was performed by setting four types of experimental conditions, i.e., by changing the "predetermined rotating speed" of the engine, and the concentration (composition) of the fuel supplied to the engine.

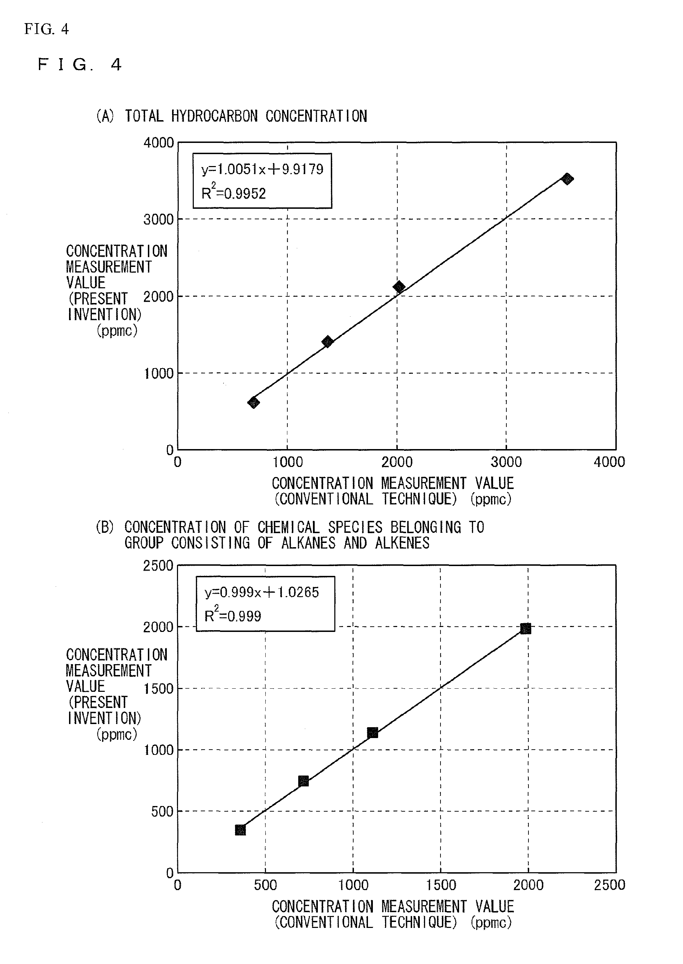

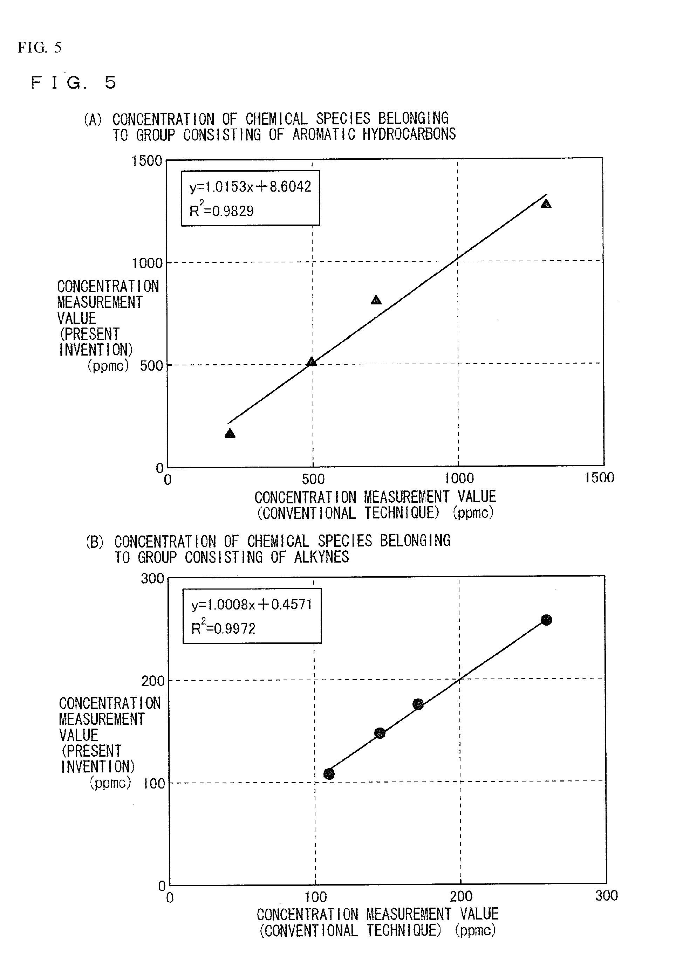

Fig. 4 and Fig. 5 are diagrams each illustrating experimental results of (2) measurement accuracy validation test in the case where the engine is in a steady operation.

(A) of Fig. 4 is plotted, where the horizontal axis (X-axis) represents the measurement results of the total hydrocarbon concentration measured by the THC meter 12, and the vertical axis (Y-axis) represents the measurement results of the total hydrocarbon concentration measured by the hydrocarbon concentration measuring apparatus 100.

(B) of Fig. 4 is plotted, where horizontal axis (X-axis) represents the "sum of the concentration of the chemical species belonging to the group consisting of alkanes and alkenes", the sum having been calculated from the results of the concentration measuring by GC of the respective chemical species sampled using the GC analysis gas bag 6, and the vertical axis (Y-axis) represents the measurement results of the "sum of the concentration of the chemical species belonging to the group consisting of alkanes and alkenes", the concentration having been measured by the hydrocarbon concentration measuring apparatus 100 under the same experimental condition.

(A) of Fig. 5 is plotted, where the horizontal axis (X-axis) represents the "sum of the concentration of the chemical species belonging to the group consisting of aromatic hydrocarbons", the sum having been calculated from the results of the concentration measuring by GC of the respective chemical species sampled using the GC analysis gas bag 6, and the vertical axis (Y-axis) represents the measurement results of the "sum of the concentration of the chemical species belonging to the group consisting of aromatic hydrocarbons", the concentration having been measured by the hydrocarbon concentration measuring apparatus 100 under the same condition.

(B) of Fig. 5 is plotted, where the horizontal axis (X-axis) represents the "sum of the concentration of the chemical species belonging to the group consisting of alkynes", the sum having been calculated from the results of the concentration measuring by GC of the respective chemical species sampled using the GC analysis gas bag 6, and the vertical axis (Y-axis) represents the measurement results of the "sum of the concentration of the chemical species belonging to the group consisting of alkynes", the concentration having been measured by the hydrocarbon concentration measuring apparatus 100 under the same condition.

As shown in Figs. 4, and 5, the total hydrocarbon concentration and the sum of the concentration of the chemical species belonging to each of the groups are both plotted in the vicinity of the straight line Y = X.

Therefore, the measurement results of the "total hydrocarbon concentration" measured by the hydrocarbon concentration measuring apparatus 100 and the "sum of the concentration of the chemical species belonging to each group" coincide with their corresponding "measurement results of the total hydrocarbon concentration measured by the THC meter 12" and the "sum of the concentration of the chemical species belonging to each group, the sum being calculated from the results of the concentration measuring by GC", respectively.

As described above, the hydrocarbon concentration measuring apparatus 100 includes the infrared radiator 130 which irradiates the measurement target gas (a gas containing a hydrocarbon composed of a single or multiple chemical species) with light having a waveband including an absorption region which is common to the single or multiple chemical species (in the embodiment, the light having the waveband, in terms of wavenumber, from $2000cm^{-1}$ to $4000cm^{-1}$), the line sensor 160 which detects light radiated from the infrared radiator 130 to the gas, and the analyzer 190 which calculates absorbance in the common absorption region in accordance with the light detected by the line sensor 160, and calculates, in accordance with the absorbance, a sum of concentration of the chemical species, which absorb light having a waveband in the common absorption region (the chemical species belonging to the group corresponding to the common absorption region).

With this configuration, it is possible to measure the concentration of the hydrocarbon in real time, in non-delayed response to the change in the concentration or composition of the measurement target gas, and also possible to secure responsivity in measurement.

Further, even when the concentration or composition of the measurement target gas has changed, it is possible to calculate with accuracy the sum of the concentration of the chemical species which absorb light in the common absorption region (i.e., the chemical species belonging to the group corresponding to the common absorption region).

In this example, calculated is the sum of the concentration of the respective chemical species belonging to each of the group (a) consisting of alkanes and alkenes, the group (b) consisting of aromatic hydrocarbons, and the group (c) consisting of alkynes, and is also calculated the total hydrocarbon concentration as a total sum of these calculation results. However, the present invention is not limited thereto. Instead, the present invention may be achieved by a configuration in which a measurement target gas is irradiated with light having a wavelength including an absorption region corresponding to some of the group (a) consisting of alkanes and alkenes, the group (b) consisting of aromatic hydrocarbons, and the group (c) consisting of alkynes, and the absorbance in the absorption region where the detected light is absorbed is used to calculate only the sum of the concentration of the chemical species belonging to the corresponding group.

For example, when the concentration of the aromatic hydrocarbons itself is to be measured since it is desired that the concentration thereof in an exhaust gas should be low from the environmental viewpoint, it is possible to irradiate an exhaust gas with light including the absorption region corresponding to the group consisting of aromatic hydrocarbons, and to calculate the sum of the concentration of the chemical species belonging to the group consisting of aromatic hydrocarbons based on the absorbance in the absorption region where the detected light is absorbed.

The common absorption region of the radiated light from the infrared radiator 130 of the hydrocarbon concentration measuring apparatus 100 includes a wavelength corresponding to a C-H stretching vibration mode of at least one of the groups: (a) the group consisting of alkanes and alkenes; (b) the group consisting of aromatic hydrocarbons; and (c) the group consisting of alkynes.

With the configuration as described above, it is possible to measure the sum of the concentration of the chemical species belonging to each of the above-described groups with excellent responsivity and accuracy.

In this embodiment, the measurement target gas is irradiated with light having a waveband including all the absorption regions corresponding to the three groups, however, the present invention is not limited thereto. Instead, it may be possible to irradiate the measurement target gas with light including a wavelength corresponding to the C-H stretching vibration mode of any one or two of the three groups, to thereby measure the sum of the concentration of the chemical species belonging to the corresponding group.

In the hydrocarbon concentration measuring apparatus 100, (a) a wavelength corresponding to a C-H stretching vibration mode of the group consisting of alkanes and alkenes ranges, in terms of wavenumber, from $2800cm^{-1}$ to $3000cm^{-1}$, (b) a wavelength corresponding to a C-H stretching vibration mode of the group consisting of aromatic hydrocarbons ranges, in terms of wavenumber, from $3000cm^{-1}$ to $3200cm^{-1}$, and (c) a wavelength corresponding to a C-H stretching vibration mode of the group consisting of alkynes ranges, in terms of wavenumber, from $3200cm^{-1}$ to $3400cm^{-1}$.

With the configuration as described above, it is possible to measure the sum of the concentration of the chemical species belonging to each of the above-described groups with excellent responsivity and accuracy.

The hydrocarbon concentration measuring apparatus 100 includes a gas accommodating section 120 provided along a path of the light which is radiated from the infrared radiator 130 and detected by the line sensor 160, which includes a gas accommodating container 121 having an internal space 121a which is capable of accommodating gas containing hydrocarbons composed of the single or multiple chemical species, a radiation-side window 122 provided in the gas accommodating container 121 for causing the light radiated from the infrared radiator 130 to pass therethrough to enter the internal space 121 a, and a detection-side window 123 provided in the gas accommodating container 121 for causing the light having passed through the radiation-side window 122 and entered the internal space 121a to pass therethrough to the outside.

With the configuration as described above, it is possible to measure the concentration of hydrocarbons in real time in non-delayed response to the change in the concentration or composition of the measurement target gas introduced into the gas accommodating section 120, and also possible to secure responsivity in measurement.

Further, even when the concentration or composition of the measurement target gas has changed, it is possible to calculate with accuracy the sum of the concentration of the chemical species which absorb light in the common absorption region (i.e., chemical species belonging to the group corresponding to the common absorption region).

The hydrocarbon concentration measuring apparatus 100 includes a chopper device 140 arranged between the infrared radiator 130 and the measurement target gas for alternately switching between a situation where the gas is irradiated with the light from the infrared radiator 130 and a situation where the gas is not irradiated with the light, and a signal processing circuit 180 for removing a noise element included in the light detected by the line sensor 160, in accordance with a signal indicating a switching operation by the chopper device 140 and the light detected by the line sensor 160.

With this configuration, the resolution of the intensity of light detected by the line sensor 160 is improved, and consequently, the measurement accuracy of the hydrocarbon concentration is improved.

In the hydrocarbon concentration measuring apparatus 100, the detection section (for detecting the irradiated light to the measurement target gas) is the line sensor 160, and the hydrocarbon concentration measuring apparatus 100 further includes a diffraction grating 152 which splits the light having irradiated the gas containing hydrocarbons composed of the single or multiple chemical species, based on respective wavelengths, so that the line sensor 160 is irradiated with split light beams.

Accordingly, it is possible to detect light in a desired absorption region with a simple configuration.

Further, it is possible to detect the light in a plurality of absorption regions simultaneously, which contributes to improvement in responsivity in carbon concentration measurement.

Still further, an increase in the number of pixels of the line sensor 160 contributes to improvement in wavelength resolution of detected light, and also contributes to improvement in measurement accuracy.

The absorbance calculation section 191b of the hydrocarbon concentration measuring apparatus 100 corrects the absorbance of the light detected by the line sensor 160 on the basis of the intensity of the light in a non-absorption waveband (correction region) where no absorption of the light due to the hydrocarbon contained in the measurement target gas occurs in the light detected by the line sensor 160.

With this configuration, it is possible to prevent deterioration in accuracy in the hydrocarbon concentration measuring, the deterioration resulting from a change in quantity of light.

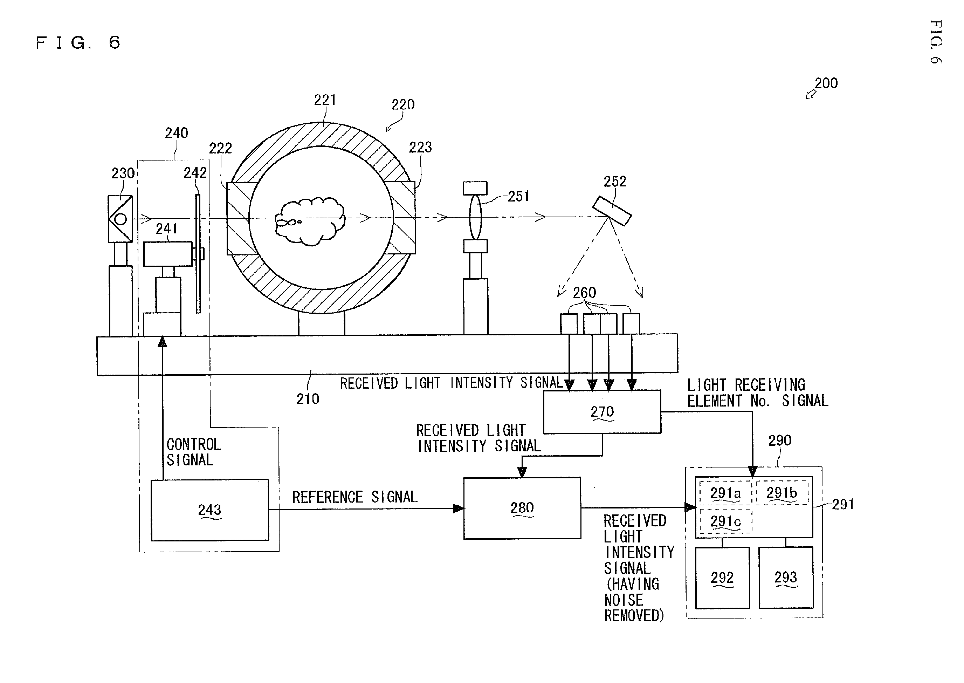

Hereinafter, with reference to Fig. 6, a hydrocarbon concentration measuring apparatus 200 will be described which is a second embodiment of the hydrocarbon concentration measuring apparatus according to the present invention.

The hydrocarbon concentration measuring apparatus 200 is designed to measure the concentration of hydrocarbons contained in a measurement target gas.

As shown in Fig. 6, the hydrocarbon concentration measuring apparatus 200 generally includes: an optical rail 210; a gas accommodating section 220 including a gas accommodating container 221, a radiation-side window 222, a detection-side window 223; an infrared radiator 230; a chopper device 240 including a motor 241, a rotating disc 242, and a chopper control device 243; a lens 251; a diffraction grating 252; photodiodes 260; a signal switching device 270; a signal processing circuit 280; an analyzer 290; and the like.

Of the components included in the hydrocarbon concentration measuring apparatus 200, the optical rail 210, the gas accommodating section 220, the infrared radiator 230, the chopper device 240, the lens 251, and the diffraction grating 252 are configured substantially the same as the optical rail 110, the gas accommodating section 120, the infrared radiator 130, the chopper device 140, the lens 151, the diffraction grating 152, respectively, in the hydrocarbon concentration measuring apparatus 100 shown in Fig. 1, and thus no detailed description of these will be given.

The photodiodes 260 represent an example of the detection section according to the present invention, and are designed to detect light radiated from the infrared radiator 230 to irradiate a measurement target gas.
The photodiodes 260 are each an element generating an electrical signal (received-light-intensity-signal) corresponding to the intensity of the received light. Light is split by the diffraction grating 252 into light beams depending on respective wavelengths. The positional relation (orientation) between the diffraction grating 252 and the photodiodes 260 is determined so that the respective photodiodes 260 are irradiated with the split light beams.

The signal switching device 270 is connected to the photodiodes 260, and obtains from the photodiodes 260 the received-light-intensity-signals.
The signal switching device 270 successively (switches and) selects a received-light-intensity-signal of any one photodiode 260, from among the obtained received-light-intensity-signals from the photodiodes 260, so as to be sent to the signal processing circuit 280. At this time, the signal switching frequency need be set sufficiently lower than the light chopping frequency (preferably, one several tenth of the light chopping frequency) generated by the rotating disc 242 and the chopper control device 243.
Further, the signal switching device 270 sends to the analyzer 290 a signal (light receiving element No. signal) indicating which one of the photodiodes 260 corresponds to the received-light-intensity-signal sent to the signal processing circuit 280.

The signal processing circuit 280 is designed to remove noises from the received-light-intensity-signal obtained from the signal switching device 270.
The signal processing circuit 280 is connected to the chopper device 240, and obtains (receives) from the chopper device 240 a reference signal.
The signal processing circuit 280 is connected to the signal switching device 270, and obtains (receives) from the signal switching device 270 the received-light-intensity-signal.
The signal processing circuit 280 extracts an "element that is in synchronism with a cyclic intensity change" from the received-light-intensity-signal, based on the reference signal and the received-light-intensity-signal, thereby removing a noise element included in the received-light-intensity-signal.
The signal processing circuit 280 sends to the analyzer 290 the received-light-intensity-signal having removed therefrom the noise element. The signal processing circuit 280 removes noises from the received-light-intensity-signal, whereby resolution of the received-light-intensity-signal is improved, and accordingly, a minute change in the hydrocarbon concentration (or a minute hydrocarbon concentration) can be measured with excellent accuracy.

The analyzer 290 is one example of the analyzing section according to the present invention, and is designed to calculate, with respect to a measurement target gas, the absorbance in the absorption region where the "chemical species belonging to each of the groups absorb light", based on the light detected by the photodiodes 260, thereby calculating the sum of the concentration of the chemical species belonging to each group corresponding to each absorption region.
The analyzer 290 generally includes an analyzing section 291, an input 292, a display section 293, and the like.

The analyzing section 291 stores therein various programs or the like (e.g., an absorbance calculation program and a concentration calculation program to be described later), expands these programs, performs predetermined calculations in accordance with these programs, and stores results of the calculations.

The analyzing section 291 may substantially have a configuration in which a CPU, a ROM, a RAM, an HDD, and the like are connected via a bus, or alternatively have a configuration compose of a chip of an LSI or the like.
The analyzing section 291 in this example is dedicated component. However, the present invention may be achieved by storing the above programs or the like in a personal computer, a workstation, or the like, all of which are commercially available.

The analyzing section 291 is connected to the signal switching device 270, and is capable of obtaining (receiving) the light receiving element No. signal.
Further, the analyzing section 291 is connected to the signal processing circuit 280, and is capable of obtaining (receiving) the received-light-intensity-signal (having removed therefrom the noise element, more precisely).

The input 292 and the display section 293 are configured substantially the same as the input 192 and the display section 193, respectively, shown in Fig. 1, and thus no description of these will be given.

The configuration of the analyzing section 291 will be described below in detail.
The analyzing section 291 functionally includes a storage section 291a, an absorbance calculation section 291b, a concentration calculation section 291c, and the like.

The storage section 291a stores information, calculation results, and the like which are used in various calculations performed by the analyzing section 291.

The storage section 291 a stores a spectrum of a reference gas.

A method for obtaining the spectrum of the reference gas is substantially the same as that performed by the hydrocarbon concentration measuring apparatus 100 shown in Fig. 1, and thus no description thereof will be given.

The absorbance calculation section 291b calculates the absorbance by the measurement target gas in a common absorption region in accordance with light detected by the photodiodes 260.

Substantially, the function of the absorbance calculation section 291b is attained by the analyzing section 291 performing predetermined calculations in accordance with the absorbance calculation program.

The absorbance calculation section 291 b obtains from the signal switching device 270 the light receiving element No. signal , and also obtains from the signal processing circuit 280 the received-light-intensity-signal.

The light receiving element No. signal obtained from the signal switching device 270 is information substantially representing the geometrical positional relation between the corresponding photodiode 260 and the diffraction grating 252, that is, the diffraction angle of the light diffracted by the diffraction grating 252, and also represents the wavelength of the light received by the corresponding photodiode 260.

Therefore, the absorbance calculation section 291b is capable of specifying a wavelength (waveband) corresponding to the obtained received-light-intensity-signal by comparing the light receiving element No. signal with the received-light-intensity-signal.

In accordance with the "received-light-intensity-signal whose wavelength (waveband) has been specified" and the "spectrum of the reference gas", the absorbance calculation section 291b calculates the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light", with respect to the measurement target gas.

More specifically, the absorbance calculation section 291b uses the sum of the received-light-intensity-signals corresponding to the waveband ranging, in terms of wavenumber, from $2800cm^{-1}$ to $3000cm^{-1}$ among the "received-light-intensity-signals whose wavelengths (wavebands) have been specified", to thereby calculate the "received light intensity in the common absorption region where the chemical species belonging to the group consisting of alkanes and alkenes absorb light".

Further, the absorbance calculation section 291b uses the sum of the received-light-intensity-signals corresponding to the waveband ranging, in terms of wavenumber, from $3000cm^{-1}$ to $3200cm^{-1}$ among the "received-light-intensity-signals whose wavelengths (wavebands) have been specified", to thereby calculate the "received light intensity in the common absorption region where the chemical species belonging to the group consisting of aromatic hydrocarbons absorb light".

Further, the absorbance calculation section 291b uses the sum of the received-light-intensity-signals corresponding to the waveband ranging, in terms of wavenumber, from $3200cm^{-1}$ to $3400cm^{-1}$ among the "received-light-intensity-signals whose wavelengths (wavebands) have been specified", to thereby calculate the "received light intensity in the common absorption region where the chemical species belonging to the group consisting of alkynes absorb light".

Next, the absorbance calculation section 291b calculates the "absorbance in the common absorption region where the chemical species belonging to the group consisting of alkanes and alkenes absorb light" with respect to the measurement target gas, in accordance with the calculated "received light intensity in the common absorption region where the chemical species belonging to the group consisting of alkanes and alkenes absorb light" and the "intensity of the light in a waveband, in the spectrum of the reference gas, corresponding to the common absorption region where the chemical species belonging to the group consisting of alkanes and alkenes absorb light".

Similarly, the absorbance calculation section 291b calculates, with respect to the measurement target gas, the "absorbance in the common absorption region where the chemical species belonging to the group consisting of aromatic hydrocarbons absorb light" and the "absorbance in the common absorption region where the chemical species belonging to the group consisting of alkynes absorb light".

With the use of above-described Equation 1, calculations are performed, with respect to the measurement target gas, on the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light".

The concentration calculation section 291c calculates the "sum of the concentration of the chemical species belonging to the group consisting of alkanes and alkenes" in accordance with the "absorbance in the common absorption region where the chemical species belonging to the group consisting of alkanes and alkenes absorb light", calculates the "sum of the concentration of the chemical species belonging to the group consisting of aromatic hydrocarbons" in accordance with the "absorbance in the common absorption region where the chemical species belonging to the group consisting of aromatic hydrocarbons absorb light", and calculates the "sum of the concentration of the chemical species belonging to the group consisting of alkynes" in accordance with the "absorbance in the common absorption region where the chemical species belonging to the group consisting of alkynes absorb light", all the absorbance having been calculated by the absorbance calculation section 291b.

Substantially, the function of the concentration calculation section 291 is attained by the analyzing section 291 performing predetermined calculation in accordance with the concentration calculation program.

Note that the configuration of the concentration calculation section 291c is substantially the same as that of the concentration calculation section 191 c shown in Fig. 1, and thus no description thereof will be given.

As described above, the hydrocarbon concentration measuring apparatus 200 includes the infrared radiator 230 which irradiates the measurement target gas (a gas containing a hydrocarbon composed of a single or multiple chemical species) with light having a waveband including an absorption region which is common to the single or multiple chemical species (in the embodiment, the light having the waveband, in terms of wavenumber, from $2000cm^{-1}$ to $4000cm^{-1}$), the photodiodes 260 which detect light radiated from the infrared radiator 230 to the gas, and the analyzer 290 which calculates absorbance in the common absorption region in accordance with the light detected by the photodiodes 260, and calculates, in accordance with the absorbance, a sum of concentration of the chemical species, which absorb light having a waveband in the common absorption region (the chemical species belonging to the group corresponding to the common absorption region).

With this configuration, it is possible to measure the concentration of hydrocarbons in real time in non-delayed response to the change in the concentration or composition of a measurement target gas, and also possible to secure responsivity in measurement.

Further, even when the concentration or composition of the measurement target gas has changed, it is possible to calculate with accuracy the sum of the concentration of the chemical species which absorb light in the common absorption region (i.e., chemical species belonging to the group corresponding to the common absorption region).

In the hydrocarbon concentration measuring apparatus 200, the detection section (for detecting the irradiated light to the measurement target gas) is configured as the photodiodes 260, and the hydrocarbon concentration measuring apparatus 200 further includes a diffraction grating 252 which splits the light having irradiated the gas containing hydrocarbons composed of the single or multiple chemical species, based on respective wavelengths, so that the photodiodes 260 are irradiated with split light beams.

With this configuration, it is possible to detect light in a desired absorption region with a simple configuration.

Further, it is possible to detect the light in a plurality of absorption regions simultaneously, which contributes to improvement in responsivity in carbon concentration measurement.

Further, in this embodiment, the signal switching device 270 selects a received-light-intensity-signal corresponding to any one of the photodiodes 260, of the received-light-intensity-signals obtained from the plurality of photodiodes 260, thereby inputting the signal into one signal processing circuit 280. Alternatively, it may be possible to arrange the same number of signal processing circuits as the number of the photodiodes, and removes the signal switching device, to thereby input the received-light-intensity-signals from the respective photodiodes to the corresponding signal processing circuits.

In this case, the time lag caused by switching of output signals performed by the signal switching device can be solved, and thus it is possible to further improve the responsivity in the hydrocarbon concentration measuring.

Further, in this example, a plurality of photodiodes 260 detects light. However, it may be also possible to detect light beams having different wavebands by moving a single photodiode relative to the diffraction grating. Note that, in this case, light beams are received by only one photodiode, and thus it is impossible to detect a plurality of "common absorption regions" where the light is absorbed simultaneously.

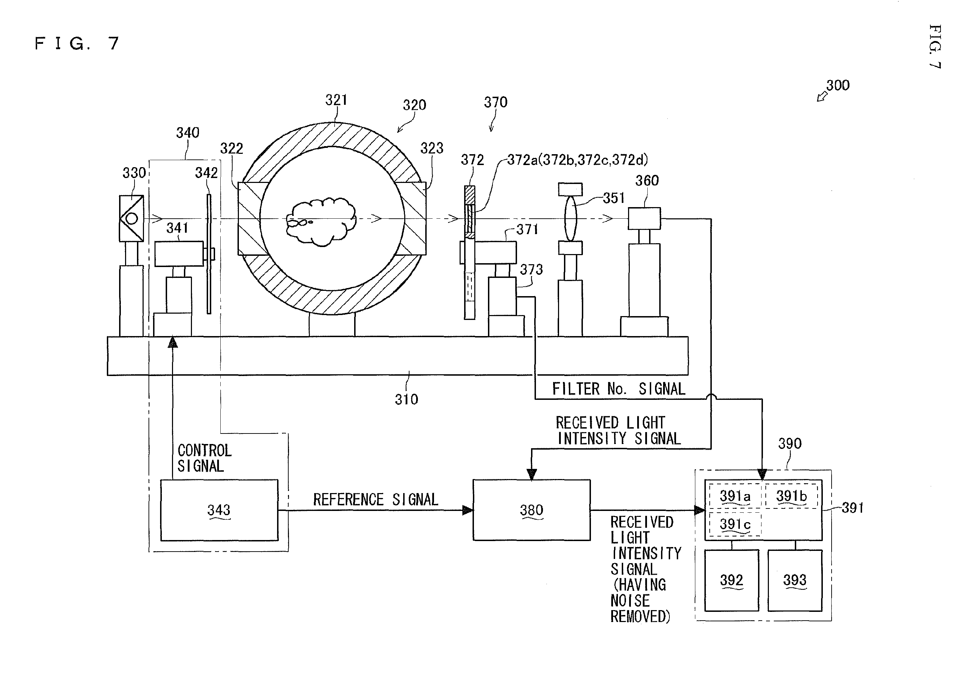

Hereinafter, with reference to Fig. 7, a hydrocarbon concentration measuring apparatus 300 will be described, which is a third embodiment of the hydrocarbon concentration measuring apparatus according to the present invention.

The hydrocarbon concentration measuring apparatus 300 is designed to measure the concentration of hydrocarbons contained in a measurement target gas.

As shown in Fig. 7, the hydrocarbon concentration measuring apparatus 300 generally includes: an optical rail 310; a gas accommodating section 320 including a gas accommodating container 321, a radiation-side window 322, a detection-side window 323, an infrared radiator 330; a chopper device 340 including a motor 341, a rotating disc 342, and a chopper control device 343; a lens 351; a photodiode 360; a filter switching device 370; a signal processing circuit 380; an analyzer 390; and the like.

Of the components included in the hydrocarbon concentration measuring apparatus 300, the optical rail 310, the gas accommodating section 320, the infrared radiator 330, the chopper device 340, and the lens 351 are substantially the same as the optical rail 110, the gas accommodating section 120, the infrared radiator 130, the chopper device 140, and the lens 151, respectively, in hydrocarbon concentration measuring apparatus 100 shown in Fig. 1, and thus no detailed description of these will be given.

The photodiode 360 is one example of the detection section according to the present invention, and is designed to detect the light radiated from the infrared radiator 330 to irradiate a measurement target gas.

The photodiode 360 is a semiconductor device generating an electrical signal (received-light-intensity-signal) corresponding to the intensity of the received light.

The filter switching device 370 is arranged medially along an optical path of light radiated from the infrared radiator 330, and is designed to switch a waveband of light detected by the photodiode 360.

The filter switching device 370 generally includes a motor 371, a filter disc 372, a filter control device 373, and the like.

The motor 371 is an electric motor, and a driving shaft thereof is fixed to the center of the filter disc 372.

The filter disc 372 is a substantially disc-shaped member, and has a total of five holes formed in the disc in a manner as to pass through the front and back surfaces of the disc. The five holes formed in the filter disc 372 are arranged at regular intervals in a circumferential direction of the filter disc 372. The filter disc 372 is made of a material that does not transmit light radiated from the infrared radiator 330.

Of the five holes formed in the filter disc 372, one hole has fitted thereinto a band-pass filter 372a which transmits light having a waveband ranging, in terms of wavenumber, from 2800cm$^{-1}$ to 3000cm$^{-1}$ (the common absorption region where the chemical species belonging to the group consisting of alkanes and alkenes absorb light), one hole has fitted thereinto a band-pass filter 372b which transmits light having a waveband ranging, in terms of wavenumber, from 3000cm$^{-1}$ to 3200cm$^{-1}$ (the common absorption region where the chemical species belonging to the group consisting of aromatic hydrocarbons absorb light), one hole has fitted thereinto a band-pass filter 372c which transmits light having a waveband ranging, in terms of wavenumber, from 3200cm$^{-1}$ to 3400cm$^{-1}$ (the common absorption region where the chemical species belonging to the group consisting of alkynes absorb light), and one hole has fitted thereinto a band-pass filter 372d which transmits light having a waveband ranging, in terms of wavenumber, from 2450cm$^{-1}$ to 2550cm$^{-1}$ (correction region). Further, the remaining hole, of the five holes formed in the filter disc 372, has nothing fitted thereinto.

The filter disc 372 is arranged between the gas accommodating section 320 (more precisely, the measurement target gas) and the lens 351 so as to intersect the optical path of the light radiated from the infrared radiator 330.

When the motor 371 is driven to rotate, the filter disc 372 rotates, and the following situations occur successively: a situation ($\alpha$) where the band-pass filter 372a intersects the optical path; a situation ($\beta$) where the band-pass filter 372b intersects the optical path; a situation ($\gamma$) where the band-pass filter 372c intersects the optical path; a situation ($\delta$) where the band-pass filter 372d intersects the optical path; and a situation ($\epsilon$) where a hole with nothing fitted thereinto in the filter disc 372 intersects the optical path.

In the situation ($\alpha$) where the band-pass filter 372a intersects the optical path, of the light led to the outside from the gas accommodating section 320, only light having a waveband ranging, in terms of wavenumber, from 2800cm$^{-1}$ to 3000cm$^{-1}$ passes through the band-pass filter 372a.

In the situation ($\beta$) where the band-pass filter 372b intersects the optical path, of the light led to the outside from the gas accommodating section 320, only light having a waveband ranging, in terms of wavenumber, from 3000cm$^{-1}$ to 3200cm$^{-1}$ passes through the band-pass filter 372b.

In the situation ($\gamma$) where the band-pass filter 372c intersects the optical path, of the light led to the outside from the gas accommodating section 320, only light having a waveband ranging, in terms of wavenumber, from 3200cm$^{-1}$ to 3400cm$^{-1}$ passes through the band-pass filter 372c.

In the situation ($\delta$) where the band-pass filter 372d intersects the optical path, of the light led to the outside from the gas accommodating section 320, only light having a waveband ranging, in terms of wavenumber, from 2450cm$^{-1}$ to 2550cm$^{-1}$ passes through the band-pass filter 372d.

In the situation ($\epsilon$) where the hole with nothing fitted thereinto in the filter disc 372 intersects the optical path, the light led to the outside from the gas accommodating section 320 passes through the hole.

The light having passed through any of the filters fitted into the holes formed in the filter disc 372 or through the hole is detected by the photodiode 360 after passing through the lens 351. In this manner, the filter switching device 370 switches the waveband of light detected by the photodiode 360.

The filter control device 373 controls the rotation and the stop of rotation of the motor 371, to thereby switch the filters (or the hole) intersecting the optical path, and is formed of a Programmable Logic Controller (PLC) having stored therein a program for controlling the motion of the motor 371.

The filter control device 373 is connected to the motor 371, and sends to the motor 371 a signal (control signal) for controlling the rotating speed of the motor 371.

Further, the filter control device 373 outputs a filter No. signal indicating the filter (or the hole) intersecting the optical path. Note that the filter switching frequency generated by the filter disc 372 and the filter control device 373 need be sufficiently lower than the light chopping frequency (preferably, one several tenth of the light chopping frequency) generated by the rotating disc 342 and the chopper control device 343.

The signal processing circuit 380 is designed to remove noises from a received-light-intensity-signal obtained from the photodiode 360.

The signal processing circuit 380 is connected to the chopper device 340, and obtains (receives) a reference signal from the chopper device 340.

The signal processing circuit 380 is connected to the photodiode 360, and obtains (receives) a received-light-intensity-signal from the photodiode 360.

The signal processing circuit 380 extracts an "element that is in synchronism with a cyclic intensity change" from the received-light-intensity-signal, based on the reference signal and the received-light-intensity-signal, thereby removing a noise element included in the received-light-intensity-signal.

The signal processing circuit 380 sends to the analyzer 390 the received-light-intensity-signal having removed therefrom the noise element. The signal processing circuit 380 removes noises from the received-light-intensity-signal, whereby resolution of the received-light-intensity-signal is improved, and accordingly a minute change in the hydrocarbon concentration (or a minute hydrocarbon concentration) can be measured with excellent accuracy.

The analyzer 390 is one example of an analyzing section according to the present invention, and designed to calculate, with respect to the measurement target gas, the absorbance in the common absorption region where the "chemical species belonging to each of the groups absorb light, based on the light detected by the photodiode 360, thereby calculating the sum of the concentration of the chemical species belonging to each group corresponding to each absorption region.

The analyzer 390 generally includes an analyzing section 391, an input 392, a display section 393, and the like.

The analyzing section 391 stores therein various programs or the like (e.g., an absorbance calculation and a concentration calculation program to be described later), expands these programs, performs predetermined calculations in accordance with the programs, and stores results of the calculations.

The analyzing section 391 may substantially have a configuration in which a CPU, a ROM, a RAM, an HDD, and the like are connected via a bus, or have a configuration composed of a chip of an LSI or the like.

The analyzing section 391 in this embodiment is a dedicated component. However, the present invention may be achieved by storing the above programs or the like in a personal computer, a workstation, or the like, all of which are commercially available.

The analyzing section 391 is connected to the filter switching device 370 (more precisely, the filter control device 373), and is capable of obtaining (receiving) a filter No. signal.

Further, the analyzing section 391 is connected to the signal processing circuit 380, and is capable of obtaining (receiving) a received-light-intensity-signal (more precisely, having removed therefrom the noise element).

The input 392 and the display section 393 are configured in the same manner as the input 192 and the display section 193, respectively, in Fig. 1, and thus no description thereof will be given.

The configuration of the analyzing section 391 will be described in detail below.

The analyzing section 391 functionally includes a storage section 391a, an absorbance calculation section 391b, a concentration calculation section 391c, and the like.

The storage section 391a stores information, calculation results, and the like which are used in various calculations performed by the analyzing section 391.

The storage section 391a stores a spectrum of a reference gas.

Note that a method of obtaining the spectrum of the reference gas is substantially the same as that performed by the hydrocarbon concentration measuring apparatus 100 shown in Fig. 1, and thus no description thereof will be given.

The absorbance calculation section 391b calculates, in accordance with the light detected by the photodiode 360, the absorbance by the measurement target gas in a common absorption region.

Substantially, the function of the absorbance calculation section 391b is attained by the analyzing section 391 performing predetermined calculations in accordance with the absorbance calculation program.

The absorbance calculation section 391b obtains a filter No. signal from the filter switching device 370, and also obtains a received-light-intensity-signal from the signal processing circuit 380.

The filter No. signal obtained from the filter switching device 370 is information substantially indicating the waveband of a signal received by the photodiode 360.

Therefore, the absorbance calculation section 391b is capable of specifying a wavelength (waveband) corresponding to the obtained received-light-intensity-signal by comparing the filter No. signal with the received-light-intensity-signal.

The absorbance calculation section 391b calculates the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light", with respect to the measurement target gas, in accordance with the "received-light-intensity-signal whose wavelength (waveband) has been specified" and the "spectrum of the reference gas".

More specifically, the absorbance calculation section 391b uses, of "received-light-intensity-signals whose wavelengths (wavebands) having been specified", a received-light-intensity-signal corresponding to a waveband ranging, in terms of wavenumber, from 2800cm$^{-1}$ to 3000cm$^{-1}$, to thereby calculate the "received light intensity in the common absorption region where the chemical species belonging to the group consisting of alkanes and alkenes absorb light".

Further, the absorbance calculation section 391b uses, of the "received-light-intensity-signals whose wavelengths (wavebands) having been specified", a received-light-intensity-signal corresponding to a waveband ranging, in terms of wavenumber, from 3000cm$^{-1}$ to 3200cm$^{-1}$, to thereby calculate the "received light intensity in the common absorption region where chemical species belonging to the group consisting of aromatic hydrocarbons absorb light".

Further, the absorbance calculation section 391b uses, of the "received-light-intensity-signals whose wavelengths (wavebands) having been specified", a received-light-intensity-signal having a waveband ranging, in terms of wavenumber, from $3200cm^{-1}$ to $3400cm^{-1}$, to thereby calculate the "received light intensity in the common absorption region where the chemical species belonging to the group consisting of alkynes absorb light".

Next, the absorbance calculation section 391b calculates the "absorbance in the common absorption region where the chemical species belonging to the group consisting of alkanes and alkenes absorb light", with respect to the measurement target gas, in accordance with the calculated received "light intensity in the common absorption region where the chemical species belonging to the group consisting of alkanes and alkenes absorb light", and "the intensity of light having a waveband, in the spectrum of the reference gas, corresponding to the common absorption region where the chemical species belonging to the group consisting of alkanes and alkenes absorb light".

Similarly, the absorbance calculation section 391b calculates the "absorbance in the common absorption region where the chemical species belonging to the group consisting of aromatic hydrocarbons absorb light" and the "absorbance in the common absorption region where the chemical species belonging to the group consisting of alkynes absorb light", with respect to the measurement target gas.

Above Equation 1 is used to calculate, with respect to the measurement target gas, the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light".

The concentration calculation section 391c calculates the "sum of the concentration of the chemical species belonging to the group consisting of alkanes and alkenes" in accordance with the "absorbance in the common absorption region where the chemical species belonging to the group consisting of alkanes and alkenes absorb light"; calculates the "sum of the concentration of the chemical species belonging to the group consisting of aromatic hydrocarbons" in accordance with the "absorbance in the common absorption region where the chemical species belonging to the group consisting of aromatic hydrocarbons absorb light"; and calculates the "sum of the concentration of the chemical species belonging to the group consisting of alkynes" in accordance with the "absorbance in the common absorption region where the chemical species belonging to the group consisting of alkynes absorb light" all the absorbance having been calculated by the absorbance calculation section 391b.

Substantially, the function of the concentration calculation section 391c is attained by the analyzing section 391 performing predetermined calculation in accordance with the concentration calculation program.

Note that the configuration of the concentration calculation section 391c is substantially the same as that of the concentration calculation section 191c shown in Fig. 1, and thus no description thereof will be given.

As described above, the hydrocarbon concentration measuring apparatus 300 includes the infrared radiator 330 which irradiates the measurement target gas (a gas containing a hydrocarbon composed of a single or multiple chemical species) with light having a waveband including an absorption region which is common to the single or multiple chemical species (in the embodiment, the light having the waveband, in terms of wavenumber, from $2000cm^{-1}$ to $4000cm^{-1}$), the photodiode 360 which detects light radiated from the infrared radiator 330 to the gas, and the analyzer 390 which calculates absorbance in the common absorption region in accordance with the light detected by the photodiode 360, and calculates, in accordance with the absorbance, a sum of concentration of the chemical species, which absorb light having a waveband in the common absorption region (the chemical species belonging to the group corresponding to the common absorption region).

With this configuration, it is possible to measure the concentration of hydrocarbons in real time in non-delayed response to the change in the concentration or composition of a measurement target gas, and also possible to secure responsivity in measurement.

Further, even when the concentration or composition of the measurement target gas has changed, it is possible to calculate with accuracy the sum of the concentration of the chemical species which absorb light in the common absorption region (i.e., chemical species belonging to the group corresponding to the common absorption region).

Note that, in this embodiment, the filter switching device 370 switches a waveband of light detected by a single photodiode 360. However, the present invention is not limited thereto. It may be possible to omit the filter switching device 370 by providing a plurality of photodiodes with band-pass filters which respectively transmit different wavebands (absorption regions).

In this case, it is possible to measure a plurality of absorption regions simultaneously, and thus responsivity in measuring the hydrocarbon concentration can be improved.

Further, it may be possible to omit the band-pass filters, by arranging a plurality of photodiodes which are capable of detecting different wavebands, and associating the wavebands detectable by the photodiodes with respectively different "common absorption regions".

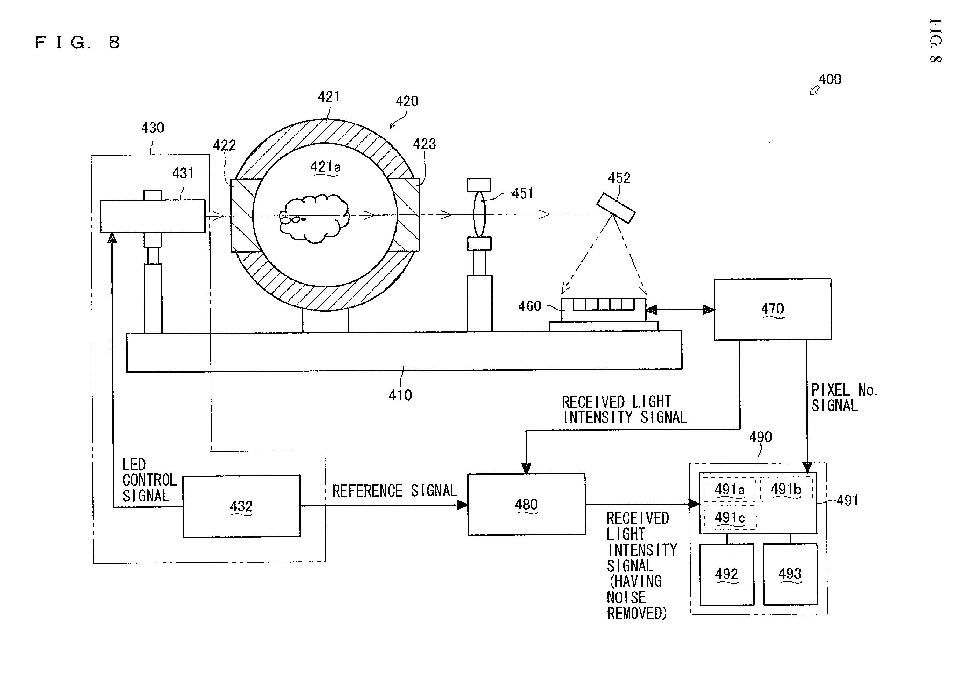

Hereinafter, with reference to Fig. 8, a hydrocarbon concentration measuring apparatus 400 will be described, which is a fourth embodiment of the hydrocarbon concentration measuring apparatus according to the present invention.

The hydrocarbon concentration measuring apparatus 400 is designed to measure the concentration of hydrocarbons contained in a measurement target gas.

As shown in Fig. 8, the hydrocarbon concentration measuring apparatus 400 generally includes: an optical rail 410; a gas accommodating section 420 including a gas accommodating container 421, a radiation-side window 422, and a detection-side window 423; an infrared radiator 430; a lens 451; a diffraction grating 452; a line sensor 460; a sensor control device 470; a signal processing circuit 480; an analyzer490; and the like.

Of the components included in the hydrocarbon concentration measuring apparatus 400, the optical rail 410, the gas accommodating section 420, the lens451, the diffraction grating 452, the sensor control device 470, and the signal processing circuit 480 are substantially the same as the optical rail 110, the gas accommodating section 120, the lens 151, the diffraction grating 152, the sensor control device 170, the signal processing circuit 180, respectively, in the hydrocarbon concentration measuring apparatus 100 shown in Fig. 1, and thus no detailed description of these will be given.

The analyzer 490 includes an analyzing section 491, an input 492, and a display section 493. The analyzing section 491 functionally includes a storage section 491 a, an absorbance calculation section 491b, a concentration calculation section 491 c, and the like. This configuration is substantially the same as that of the analyzer 190 shown in Fig. 1, and thus no detailed description thereof will be given.

The infrared radiator 430 is one example of the radiating section according to the present invention, and irradiates a measurement target gas introduced into an internal space 421a of the gas accommodating container 421 with light having a waveband including: a common absorption region where chemical species belonging to the group (a) consisting of alkanes and alkenes absorb light; a common absorption region where chemical species belonging to the group (b) consisting of aromatic hydrocarbons absorb light; and a common absorption region where chemical species belonging to the group (c) consisting of alkynes absorb light.

The infrared radiator 430 includes a BB-MIR-LED (Broad Band Mid-IR Light Emission Diode) 431 and an LED control device 432.

The BB-MIR-LED (Broad Band Mid-IR Light Emission Diode) 431 is capable of generating infrared radiation having a waveband ranging, in terms of wavenumber, from $2800cm^{-1}$ to $3400cm^{-1}$, and is a semiconductor device capable of changing the intensity of the infrared radiation (light intensity) radiated therefrom.

The LED control device 432 is a device for controlling the intensity of light radiated from the BB-MIR-LED 431. The LED control device 432 is connected to the BB-MIR-LED 431, and sends an LED control signal which is a signal for controlling the intensity (quantity) of light radiated from the BB-MIR-LED 431. Based on the LED control signal, the intensity of light radiated from the BB-MIR-LED 431 is modulated in a predetermined cycle (i.e., the intensity of light is changed to switch between strong and weak alternately).

Further, the LED control device 432 is connected to the signal processing circuit 480, and sends to the signal processing circuit 480 a signal, which indicates a modulating frequency (a reciprocal of the modulation cycle) for modulating the intensity of light radiated from the BB-MIR-LED431, as a reference signal.

The light (infrared radiation) radiated from the BB-MIR-LED 431 passes through the radiation-side window 422 of the gas accommodating section 420, enters the internal space 421a of the gas accommodating container 421, and irradiates a measurement target gas in the internal space 421a. The light having irradiated the measurement target gas passes through the detection-side window 423 of the gas accommodating section 420, and is led to the outside of the gas accommodating section 420.

As described above, the hydrocarbon concentration measuring apparatus 400 includes the infrared radiator 430 which irradiates the measurement target gas (a gas containing a hydrocarbon composed of a single or multiple chemical species) with light having a waveband including an absorption region which is common to the single or multiple chemical species (in the embodiment, the light having the waveband, in terms of wavenumber, from $2000cm^{-1}$ to $4000cm^{-1}$), the line sensor 460 which detects light radiated from the infrared radiator 130 to the gas, and the analyzer 490 which calculates absorbance in the common absorption region in accordance with the light detected by the line sensor 460, and calculates, in accordance with the absorbance, a sum of concentration of the chemical species, which absorb light having a waveband in the common absorption region (the chemical species belonging to the group corresponding to the common absorption region).

With this configuration, it is possible to measure the concentration of hydrocarbons in real time in non-delayed response to the change in the concentration or composition of a measurement target gas, and also possible to secure responsivity in measurement.

Further, even when the concentration or composition of the measurement target gas has changed, it is possible to calculate with accuracy the sum of the concentration of the chemical species which absorb light in the common absorption region (i.e., chemical species belonging to the group corresponding to the common absorption region).

The infrared radiator 430 of the hydrocarbon concentration measuring apparatus 400 includes a BB-MIR-LED 431 capable of changing the intensity of the infrared radiation (light intensity) radiated therefrom and an LED control device 432 for controlling the intensity of light radiated from the BB-MIR-LED 431.

With this configuration, it is possible to generate a higher modulating frequency (about several GHz) for modulating the intensity of light, as compared to the modulating frequency (about 1kHz) generated when the chopper device 140 shown in Fig. 1 mechanically performs modulation of light, and thus it is possible to improve accuracy in measurement of hydrocarbons.

Further, neither of the BB-MIR-LED 431 nor the LED control device 432 includes a mechanical driving component similar to the motor 141 in chopper device 140 shown in Fig. 1, and thus reliability (stability and maintenance) of the device can be improved.

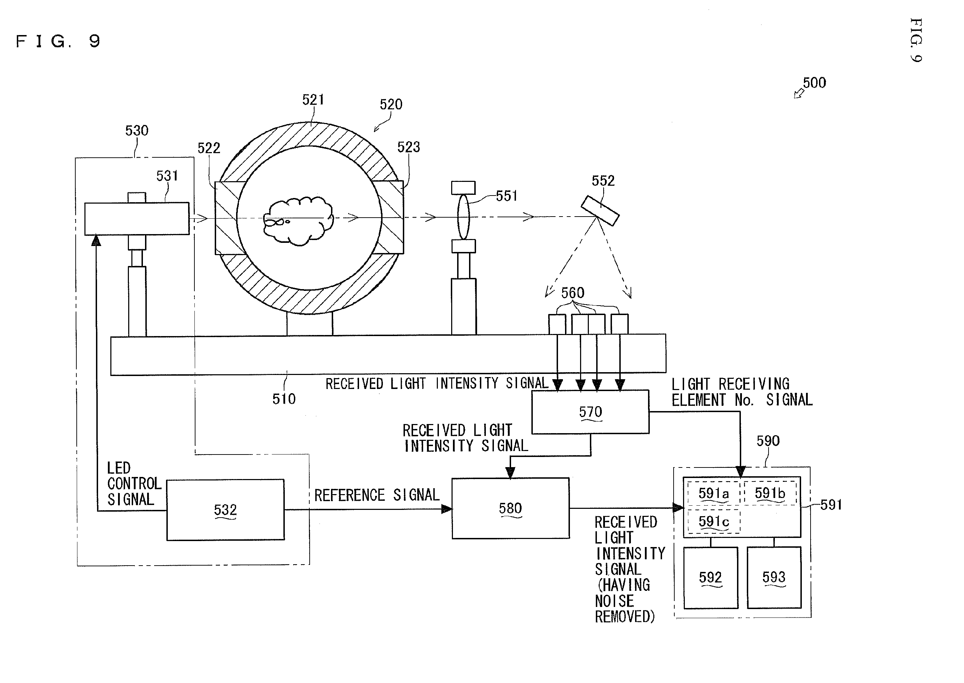

Hereinafter, with reference to Fig. 9, a hydrocarbon concentration measuring apparatus 500 will be described, which is a fifth embodiment of the hydrocarbon concentration measuring apparatus according to the present invention.

The hydrocarbon concentration measuring apparatus 500 is designed to measure the concentration of hydrocarbons contained in a measurement target gas.

As shown in Fig. 9, the hydrocarbon concentration measuring apparatus 500 generally includes: an optical rail 510; a gas accommodating section 520 including a gas accommodating container 521, a radiation-side window 522, and a detection-side window 523; an infrared radiator 530 including a BB-MIR-LED 531, and an LED control device 532; a lens 551; a diffraction grating 552; a photodiodes 560; a signal switching device 570; a signal processing circuit 580; an analyzer 590; and the like.

Of the components included in the hydrocarbon concentration measuring apparatus 500, the optical rail 510, the gas accommodating section 520, the lens 551, and the diffraction grating 552 are configured substantially the same as the optical rail 110, the gas accommodating section 120, the lens 151, the diffraction grating 152, respectively, in the hydrocarbon concentration measuring apparatus 100 shown in Fig. 1, and thus no detailed description of these will be given.

Of the components included in the hydrocarbon concentration measuring apparatus 500, the photodiodes 560, the signal switching device 570, and the signal processing circuit 580 are configured substantially the same as the photodiodes 260, the signal switching device 270, and the signal processing circuit 280, respectively, in the hydrocarbon concentration measuring apparatus 200 shown in Fig. 6, and thus no detailed description of these will be given.

The analyzer 590 includes an analyzing section 591, an input 592, and a display section 593. The analyzing section 591 functionally includes a storage section 591a, an absorbance calculation section 591b, a concentration calculation section 591c, and the like. The configuration is also substantially the same as that of the analyzer 290 shown in Fig. 6, and thus no detailed description thereof will be given.

Of the components included in the hydrocarbon concentration measuring apparatus 500, the infrared radiator 530 is configured substantially the same as the infrared radiator 430 in hydrocarbon concentration measuring apparatus 400 shown in Fig. 8, and thus no detailed description thereof will be given.

As described above, the hydrocarbon concentration measuring apparatus 500 includes the infrared radiator 530 which irradiates the measurement target gas (a gas containing a hydrocarbon composed of a single or multiple chemical species) with light having a waveband including an absorption region which is common to the single or multiple chemical species (in the embodiment, the light having the waveband, in terms of wavenumber, from $2000cm^{-1}$ to $4000cm^{-1}$), the photodiodes 560 which detect light radiated from the infrared radiator 530 to the gas, and the analyzer 590 which calculates absorbance in the common absorption region in accordance with the light detected by the photodiodes 560, and calculates, in accordance with the absorbance, a sum of concentration of the chemical species, which absorb light having a waveband in the common absorption region (the chemical species belonging to the group corresponding to the common absorption region).

With this configuration, it is possible to measure the concentration of hydrocarbons in real time in non-delayed response to the change in the concentration or composition of a measurement target gas, and also possible to secure responsivity in measurement.

Further, even when the concentration or composition of the measurement target gas has changed, it is possible to calculate with accuracy the sum of the concentration of the chemical species which absorb light in the common absorption region (i.e., the chemical species belonging to the group corresponding to the common absorption region).

The infrared radiator 530 of the hydrocarbon concentration measuring apparatus 500 includes a BB-MIR-LED 531 capable of changing the intensity of the infrared radiation (light intensity) radiated therefrom and an LED control device 532 for controlling the intensity of light radiated from the BB-MIR-LED 531.

With this configuration, it is possible to generate a higher modulating frequency (about several GHz) for modulating the intensity of light, as compared to the modulating frequency (about 1kHz) generated when the chopper device 140 shown in Fig. 1 mechanically performs modulation of light, and thus it is possible to improve accuracy in measurement of hydrocarbons.

Further, neither of the BB-MIR-LED 531 nor the LED control device 532 includes a mechanical driving component similar to the motor 241 in chopper device 240 shown in Fig. 6, and thus reliability (stability and maintenance) of the device can be improved.

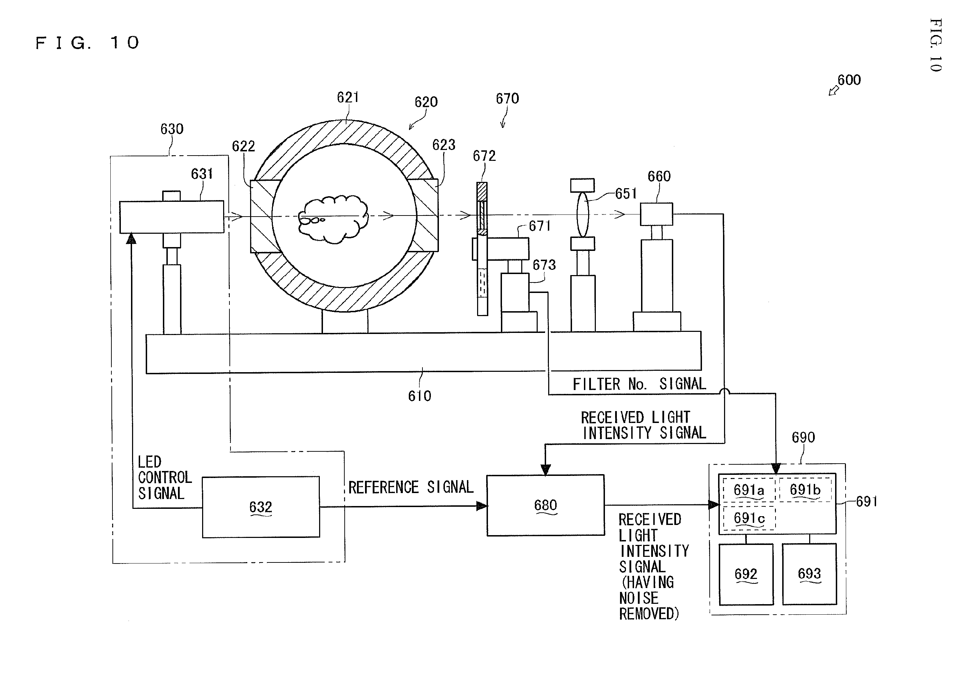

With reference to Fig. 10, a hydrocarbon concentration measuring apparatus 600 will be described, which is a sixth embodiment of the hydrocarbon concentration measuring apparatus according to the present invention.

The hydrocarbon concentration measuring apparatus 600 is designed to measure the concentration of hydrocarbons contained in a measurement target gas.

As shown in Fig. 10, the hydrocarbon concentration measuring apparatus 600 generally includes: an optical rail 610; a gas accommodating section 620 including a gas accommodating container 621, a radiation-side window 622, and a detection-side window 623; an infrared radiator 630 including a BB-MIR-LED 631, and an LED control device 632; a lens 651; a photodiode 660; a filter switching device 670 including a motor 671, a filter disc 672, and a filter control device 673; a signal processing circuit 680; an analyzer 690; and the like.

Of the components included in the hydrocarbon concentration measuring apparatus 600, the optical rail 610, the gas accommodating section 620, the lens 651, and the diffraction grating 652 are configured substantially the same as the optical rail 110, the gas accommodating section 120, the lens 151, the diffraction grating 152, respectively, in the hydrocarbon concentration measuring apparatus 100 shown in Fig. 1, and thus no detailed description of these will be given.

Of the components included in the hydrocarbon concentration measuring apparatus 600, the photodiode 660, the filter switching device 670, and the signal processing circuit 680 are configured substantially the same as the photodiode 360, the filter switching device 370, and the signal processing circuit 380, respectively, in the hydrocarbon concentration measuring apparatus 300 shown in Fig. 7, and thus no detailed description of these will be given.

The analyzer 690 includes an analyzing section 691, an input 692, and a display section 693. The analyzing section 691 functionally includes a storage section 691 a, an absorbance calculation section 691b, a concentration calculation section 691c, and the like. This configuration is also substantially the same as that of the analyzer 390 shown in Fig. 7, and thus no detailed description thereof will be given.

Of the components included in the hydrocarbon concentration measuring apparatus 600, the infrared radiator 630 is configured substantially the same as the infrared radiator 430 in the hydrocarbon concentration measuring apparatus 400 shown in Fig. 8, and thus no detailed description thereof will be given.

As described above, the hydrocarbon concentration measuring apparatus 600 includes the infrared radiator 630 which irradiates the measurement target gas (a gas containing a hydrocarbon composed of a single or multiple chemical species) with light having a waveband including an absorption region which is common to the single or multiple chemical species (in the embodiment, the light having the waveband, in terms of wavenumber, from $2000cm^{-1}$ to $4000cm^{-1}$), the photodiode 660 which detects light radiated from the infrared radiator 630 to the gas, and the analyzer 690 which calculates absorbance in the common absorption region in accordance with the light detected by the photodiode 660, and calculates, in accordance with the absorbance, a sum of concentration of the chemical species, which absorb light having a waveband in the common absorption region (the chemical species belonging to the group corresponding to the common absorption region).

With this configuration, it is possible to measure the concentration of hydrocarbons in real time in non-delayed response to the change in the concentration or composition of the measurement target gas, and also possible to secure responsivity in measurement.

Further, even when the concentration or composition of the measurement target gas has changed, it is possible to calculate with accuracy the sum of the concentration of the chemical species which absorb light in the common absorption region (i.e., the chemical species belonging to the group corresponding to the common absorption region).

The infrared radiator 630 of the hydrocarbon concentration measuring apparatus 600 includes a BB-MIR-LED 631 capable of changing the intensity of the infrared radiation (light intensity) radiated therefrom and an LED control device 632 for controlling the intensity of light radiated from the BB-MIR-LED 631.

With this configuration, it is possible to generate a higher modulating frequency (about several GHz) for modulating the intensity of light, as compared to the modulating frequency (about 1kHz) generated when the chopper device 340 shown in Fig. 1 mechanically performs modulation of light, and thus it is possible to improve accuracy in measurement of hydrocarbons.

Further, neither of the BB-MIR-LED 631 nor the LED control device 632 includes a mechanical driving component similar to the motor 341 in chopper device 340 shown in Fig. 7, and thus reliability (stability and maintenance) of the device can be improved.

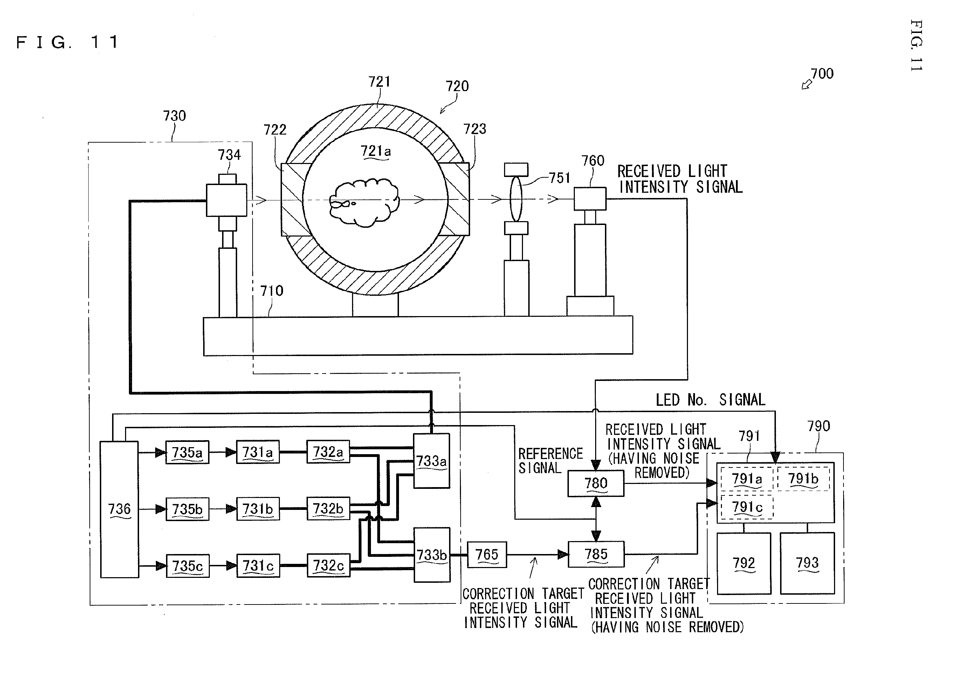

With reference to Fig. 11, a hydrocarbon concentration measuring apparatus 700 will be described, which is a seventh embodiment of the hydrocarbon concentration measuring apparatus according to the present invention.

The hydrocarbon concentration measuring apparatus 700 is designed to measure the concentration of hydrocarbon contained in a measurement target gas.

As shown in Fig. 11, the hydrocarbon concentration measuring apparatus 700 generally includes: an optical rail 710; a gas accommodating section 720 including a gas accommodating container 721, a radiation-side window 722, and a detection-side window 723; an infrared radiator 730; a lens 751; a photodiode 760; a correction photodiode 765; a signal processing circuit 780; a correction target signal processing circuit 785; an analyzer 790; and the like.

Of the components included in the hydrocarbon concentration measuring apparatus 700, the optical rail 710, the gas accommodating section 720, and the lens 751 are configured substantially the same as the optical rail 110, the gas accommodating section 120, and the lens 151, respectively, in the hydrocarbon concentration measuring apparatus 100 shown in Fig. 1, and thus no detailed description of these will be given.

The infrared radiator 730 is one example of the radiating section according to the present invention, and irradiates a measurement target gas introduced into an internal space 721a of the gas accommodating container 721 with light having a waveband of any of: a common absorption region where chemical species belonging to the group (a) consisting of alkanes and alkenes absorb light; a common absorption region where chemical species belonging to the group (b) consisting of aromatic hydrocarbons absorb light; and a common absorption region where chemical species belonging to the group (c) consisting of alkynes absorb light.

The infrared radiator 730 generally includes a first light emitting diode (LED) 731 a, a second LED 731b, a third LED 731c, a first splitter 732a, a second splitter 732b, a third splitter 732c, a first multiplexer 733a, a second multiplexer 733b, a lens 734, a first LED control device 735a, a second LED control device 735b, a third LED control device 735c, an LED selector 736, and the like.

The first LED 731a generates infrared radiation (light) having a waveband ranging, in terms of wavenumber, from $2800cm^{-1}$ to $3000cm^{-1}$, i.e., a waveband corresponding to the common absorption region where the chemical species belonging to the group (a) consisting of alkanes and alkenes absorb light.

The first LED 73 1 a of this embodiment is formed of an NB-MIR-LED (Narrow Band Mid-IR Light Emission Diode) which generates light having a waveband ranging, in terms of wavenumber, from $2800cm^{-1}$ to $3000cm^{-1}$.

The intensity of light generated by the first LED 731 a can be changed by changing a voltage applied to the first LED 731a.

The second LED 731b generates infrared radiation (light) having a waveband ranging, in terms of wavenumber, from $3000cm^{-1}$ to $3200cm^{-1}$, i.e., a waveband corresponding to the common absorption region where the chemical species belonging to the group (b) consisting of aromatic hydrocarbons absorb light.

The second LED 731b of this embodiment is formed of an NB-MIR-LED which generates light having a waveband ranging, in terms of wavenumber, from $3000cm^{-1}$ to $3200cm^{-1}$.

The intensity of light generated by the second LED 731b can be changed by changing a voltage applied to the second LED 731b.

The third LED 731c generates infrared radiation (light) having a waveband ranging, in terms of wavenumber, from $3200cm^{-1}$ to $3400cm^{-1}$, i.e., a waveband corresponding to the common absorption region where the chemical species belonging to the group (c) consisting of alkynes absorb light.

The third LED 731c in this embodiment is formed of an NB-MIR-LED which generates light having a waveband ranging, in terms of wavenumber, from $3200cm^{-1}$ to $3400cm^{-1}$.

The intensity of light generated by the third LED 731 c can be changed by changing a voltage applied to the third LED 731 c.

The first splitter 732a, the second splitter 732b, and the third splitter 732c are each an optical device which splits a luminous flux inputted thereto into two luminous fluxes to thereby be outputted.

An input port of the first splitter 732a is connected to the first LED 731 a by means of an optical fiber. Light emitted from the first LED 731 a passes through the optical fiber, and enters the first splitter 732a, where the light is split into two luminous fluxes to be outputted from two output ports thereof.

An input port of the second splitter 732b is connected to the second LED 731b by means of an optical fiber. Light emitted from the second LED 731b passes through the optical fiber, and enters the second splitter 732b, where the light is split into two luminous fluxes to be outputted from two output ports thereof.

An input port of the third splitter 732c is connected to the third LED 731c by means of an optical fiber. Light emitted from the third LED 731c passes through the optical fiber, and enters the third splitter 732c, where the light is split into two luminous fluxes to be outputted from two output ports thereof.

Specific examples of the first splitter 732a, the second splitter 732b, and third splitter 732c include various types of beam splitters (e.g., a prism type, a planar type (half-silvered mirror or the like), and a wedge base type)

The first multiplexer 733a and the second multiplexer 733b are each an optical device which combines three luminous fluxes inputted thereinto and outputs one luminous flux.

The first multiplexer 733a has three input ports which are connected to one of the output ports of the first splitter 732a, one of the output ports of the second splitter 732b, and one of the output ports of the third splitter 732c by means of optical fibers. Luminous fluxes outputted from the one output port of the first splitter 732a, the one output port of the second splitter 732b, and the one output port of the third splitter 732c enter the first multiplexer 733a, through the corresponding optical fibers, where the luminous fluxes are combined to be outputted as one luminous flux.

The second multiplexer 733b has three input ports which are connected to the other output port of the first splitter 732a, the other output port of the second splitter 732b, and the other output port of the third splitter 732c by means of optical fibers. Luminous fluxes outputted from the other output port of the second splitter 732b, the other output port of the second splitter 732b, and the other output port of the third splitter 732c enter the second multiplexer 733b through the corresponding optical fibers, where the luminous fluxes are combined to be outputted as one luminous flux.

Specific examples of the first multiplexer 733a and second multiplexer 733b include various types of beam splitters (e.g., a prism type, a planar type (half-silvered mirror or the like), and a wedge base type).

In this embodiment, as will be described later, as to each of the first multiplexer 733a and the second multiplexer 733b, there is no instance where two or more input ports receive light simultaneously. Thus, light actually enters one of the three input ports of each of the first multiplexer 733a and the second multiplexer 733b, and is thereby outputted from the output port of each.

The lens 734 is fixed to the optical rail 710. The lens 734 is arranged so as to face the radiation-side window 722 of the gas accommodating section 720.

The lens 734 is connected to the output of the first multiplexer 733a by means of an optical fiber.

The light outputted from the output port of the first multiplexer 733a passes through the optical fiber, reaches the lens 734 to thereby be converged on the lens 734, passes through the radiation-side window 722, and irradiates a measurement target gas in the internal space 72 1 a of the gas accommodating section 720.

The first LED control device 735a is a device for controlling the intensity of light emitted from the first LED 731a. The first LED control device 735a is connected to the first LED 731a, and sends an LED control signal (essentially, a signal indicating the magnitude of a voltage applied to the first LED 731a) for controlling the intensity (quantity) of light emitted from the first LED 731 a. Based on the LED control signal, the intensity of light emitted from the first LED 731a is modulated in a predetermined cycle (i.e., the intensity of light is changed so as to switch between strong and weak alternately).

The second LED control device 735b is a device for controlling the intensity of light emitted from the second LED 731b.

The second LED control device 735b is connected to the second LED 731b, and sends an LED control signal (substantially a signal indicating the magnitude of a voltage applied to the second LED 731b) for controlling the intensity (quantity) of light emitted from the second LED 731b. Based on the LED control signal, the intensity of light emitted from the second LED 731b is modulated in a predetermined cycle (i.e., the intensity of light is changed so as to switch between strong and weak alternately).

The third LED control device 735c is a device for controlling the intensity of light emitted from the third LED 731 c. The third LED control device 735c is connected to the third LED 731c, and sends an LED control signal (substantially a signal indicating the magnitude of a voltage applied to the third LED 731c) for controlling the intensity (quantity) of light emitted from the third LED 731c. Based on the LED control signal, the intensity of light emitted from the third LED 731c is modulated in a predetermined cycle (i.e., the intensity is changed to be strong and weak alternately).

The LED selector 736 is a device for selecting one from among the first LED control device 735a, the second LED control device 735b, and the third LED control device 735c to be operated. That is, the LED selector 736 selects one from among the first LED 731 a, the second LED 731b, and the third LED 731c to emit light.

The LED selector 736 of this embodiment includes a programmable controller having stored therein a program for selecting one from among the first LED control device 735a, the second LED control device 735b, and the third LED control device 735c to be operated.

The LED selector 736 is connected to the first LED control device 735a, the second LED control device 735b, and the third LED control device 735c, and sends an operation signal for causing operation of any one of these LED control devices. One of the first LED control device 735a, the second LED control device 735b, and the third LED control device 735c, which has obtained the operation signal, starts operating only while the device is obtaining the operation signal (sending an LED signal to the corresponding LED).

The LED selector 736 is connected to the analyzer 790 (more precisely, to the analyzing section 791), and sends to the analyzer 790 an LED No. signal which indicates which one of the first LED control device 735a, the second LED control device 735b, and the third LED control device 735c is operating (that is, which one of the first LED control device 735a, the second LED control device 735b, and the third LED control device 735c is emitting light).

The LED selector 736 is connected to the signal processing circuit 780 and the correction target signal processing circuit 785, and sends to the signal processing circuit 780 and the correction target signal processing circuit 785 a reference signal which indicates the phase of modulation of intensity of light emitted from one of the first LED control device 735a, the second LED control device 735b, and the third LED control device 735c.

In this manner, the infrared radiator 730 is capable of selecting light having a waveband corresponding to any of the common absorption region where the chemical species belonging to the group (a) consisting of alkanes and alkenes absorb light, the common absorption region where the chemical species belonging to the group (b) consisting of aromatic hydrocarbons absorb light, and the common absorption region where chemical species belonging to the group (c) consisting of alkynes absorb light, to thereby irradiate a measurement target gas introduced in the internal space 721a of the gas accommodating container 721 with the selected waveband.

The photodiode 760 is one example of the detection section according to the present invention, and is designed to detect light radiated from the infrared radiator 730 so as to irradiate the measurement target gas.

The photodiode 760 is a semiconductor device that generates an electrical signal (received-light-intensity-signal) corresponding to the intensity of received light.

The signal processing circuit 780 is designed to remove noises from a received-light-intensity-signal obtained from the photodiode 760.

The signal processing circuit 780 is connected to the LED selector 736, and obtains (receives) a reference signal from the LED selector 736.

The signal processing circuit 780 is connected to the photodiode 760, and obtains (receives) a received-light-intensity-signal from the photodiode 760.

Based on the reference signal and the received-light-intensity-signal, the signal processing circuit 780 extracts an "element that is in synchronism with a cyclic intensity change" from the received-light-intensity-signal, thereby removing a noise element included in the received-light-intensity-signal.

The signal processing circuit 780 sends to the analyzer 790 the received-light-intensity-signal having removed therefrom the noise element. The signal processing circuit 780 removes noises from the received-light-intensity-signal, whereby resolution of the received-light-intensity-signal is improved, and accordingly a minute change in the hydrocarbon concentration (or a minute hydrocarbon concentration) can be measured with excellent accuracy.

The correction photodiode 765 is designed to detect light generated from the infrared radiator 730. The correction photodiode 765 is a semiconductor device for generating an electrical signal (a correction target received-light-intensity-signal) corresponding to the intensity of received light, and is connected to the output port of the second multiplexer 733b by means of an optical fiber.

Light emitted from the infrared radiator 730 is split into two luminous fluxes by one of the first splitter 732a, the second splitter 732b, and third splitter 732c, and one of the divided luminous fluxes irradiates the measurement target gas, and the other one of the divided luminous fluxes is detected by the correction photodiode 765. Accordingly, the light detected by the correction photodiode 765 is generated at the same time and at the same light source as the light irradiating the measurement target gas is generated.

The correction target signal processing circuit 785 is designed to remove noises from the correction target received-light-intensity-signal obtained from the correction photodiode 765.

The correction target signal processing circuit 785 is connected to the LED selector 736, and obtains (receives) the reference signal from the LED selector 736.

The correction target signal processing circuit 785 is connected to the correction photodiode 765, and obtains (receives) the correction target received-light-intensity-signal from the correction photodiode 765.

In accordance with the reference signal and the correction target received-light-intensity-signal, the correction target signal processing circuit 785 extracts an "element that is in synchronism with a cyclic intensity change" from the correction target received-light-intensity-signal, thereby removing a noise element included in the correction target received-light-intensity-signal.

The correction target signal processing circuit 785 sends to the analyzer 790 the correction target received-light-intensity-signal having removed therefrom the noise element. The correction target signal processing circuit 785 removes noises from the correction target received-light-intensity-signal, whereby resolution of the received-light-intensity-signal is improved, and accuracy in correction of absorbance to be described later will be improved.

The analyzer 790 is one example of the analyzing section according to the present invention, and is designed to calculate, based on the light detected by the photodiode 760, the absorbance in the "common absorption region where the chemical species belonging to each of the groups absorb light", with respect to the measurement target gas, and thereby calculates the sum of the concentration of the chemical species belonging to each group corresponding to each absorption region.

The analyzer 790 generally includes an analyzing section 791, an input 792, a display section 793, and the like.

The analyzing section 791 stores therein various programs (e.g., an absorbance calculation program and a concentration calculation program to be described later), expands these programs, performs predetermined calculations in accordance with the programs, and stores results of the calculations.

The analyzing section 791 may substantially have a configuration in which a CPU, a ROM, a RAM, an HDD, and the like are connected via a bus, or have a configuration composed of a chip of an LSI or the like.

The analyzing section 791 of this embodiment is a dedicated component. However, the present invention may be achieved by storing the above programs or the like in a personal computer, a workstation, or the like, all of which are commercially available.

The analyzing section 791 is connected to the LED selector 736, and is capable of obtaining (receiving) an LED No. signal from the LED selector 736.

The analyzing section 791 is connected to the signal processing circuit 780, and is capable of obtaining (receiving) a received-light-intensity-signal (more precisely, having removed therefrom a noise element) from the signal processing circuit 780.

The analyzing section 791 is connected to the correction target signal processing circuit 785, and is capable of obtaining (receiving) a received-light-intensity-signal (more precisely, having removed therefrom a noise element) from the correction target signal processing circuit 785.

The input 792 is connected to the analyzing section 791, and inputs to the analyzing section 791 various pieces of information and instructions relating to analysis by the hydrocarbon concentration measuring apparatus 700.

The input 792 of this embodiment is a dedicated component. A similar advantageous effect can be also achieved by using a keyboard, a mouse, a pointing device, a button, a switch, or the like, all of which are commercially available.

The display section 793 is designed to display details of inputs from the input 792 to the analyzing section 791, and analysis results (measurement results of the hydrocarbon concentration) by the analyzing section 791.

The display section 793 of this embodiment is a dedicated component. However, a similar advantageous effect can be also achieved by using a monitor, a liquid crystal display, or the like, all of which are commercially available.

Detailed configuration of the analyzing section 791 will be described below.

The analyzing section 791 functionally includes a storage section 791a, an absorbance calculation section 791 b, a concentration calculation section 791 c, and the like.

The storage section 791a stores therein information, calculation results, and the like used for various calculations performed by the analyzing section 791.

The storage section 791 a stores a spectrum of a reference gas.

The method for obtaining the spectrum of the reference gas is substantially the same as that performed in the hydrocarbon concentration measuring apparatus 100 shown in Fig. 1, and thus no detailed description will be given.

The absorbance calculation section 191b calculates the absorbance by a measurement target gas in a common absorption region in accordance with light detected by the photodiode 760.

Substantially, the function of the absorbance calculation section 791b is attained by the analyzing section 791 performing predetermined calculations in accordance with the absorbance calculation program.

The absorbance calculation section 791 b obtains a LED No. signal from the LED selector 736, and also obtains a received-light-intensity-signal from the signal processing circuit 780.

The LED No. signal obtained from the LED selector 736 is a signal indicating which one of the first LED 731a, the second LED 731b, and the third LED 731c has emitted light that is received by the photodiode 760, and substantially represents information on a waveband of light received by the photodiode 760.

Therefore, the absorbance calculation section 791b is capable of specifying a wavelength (waveband) corresponding to the obtained received-light-intensity-signal by comparing the LED No. signal with the received-light-intensity-signal.

Based on the "received-light-intensity-signal whose wavelength (waveband) has been specified" and the "spectrum of the reference gas", the absorbance calculation section 791b calculates the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light", with respect to the measurement target gas.

More specifically, the absorbance calculation section 791b uses the received-light-intensity-signal corresponding to the first LED 73 1 a, to thereby calculate the "received light intensity in the common absorption region where the chemical species belonging to the group consisting of alkanes and alkenes absorb light".

Further, the absorbance calculation section 791b uses the received-light-intensity-signal corresponding to the second LED 731b, to thereby calculate the "received light intensity in the common absorption region where the chemical species belonging to the group consisting of aromatic hydrocarbons absorb light".

Further, the absorbance calculation section 791b uses the received-light-intensity-signal corresponding to the third LED 731c, to thereby calculate the "received light intensity in the common absorption region where the chemical species belonging to the group consisting of alkynes absorb light".

Next, based on the calculated "received light intensity in the common absorption region where the chemical species belonging to the group consisting of alkanes and alkenes absorb light" and the "intensity of light, of the spectrum of the reference gas, having a waveband corresponding to the common absorption region where the chemical species belonging to the group consisting of alkanes and alkenes absorb light", the absorbance calculation section 791b calculates the "absorbance in the common absorption region where the chemical species belonging to the group consisting of alkanes and alkenes absorb light" with respect to the measurement target gas.

In a similar manner, the absorbance calculation section 791b calculates the "absorbance in the common absorption region where the chemical species belonging to the group consisting of aromatic hydrocarbons absorb light", and the "absorbance in the common absorption region where the chemical species belonging to the group consisting of alkynes absorb light" with respect to the measurement target gas.

Above Equation 1 is used to calculate, with respect to the measurement target gas, the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light".

Further, based on the "correction target received light signal" obtained from the correction target signal processing circuit 785, and an "initial value of the correction target received light signal" which is stored in advance in the storage

section 791a, the absorbance calculation section 791b corrects, with the use of the following Equation 2, the "absorbance in the common absorption region where the chemical species belonging to the group consisting of alkanes and alkenes absorb light", the "absorbance in the common absorption region where the chemical species belonging to the group consisting of aromatic hydrocarbons absorb light", and the "absorbance in the common absorption region where the chemical species belonging to the group consisting of alkynes absorb light", all the absorbance having been calculated by using Equation 1.

Here, the "initial value of the received light signal to be corrected" is a value of a correction target received signal obtained immediately after maintenance (such as replacement, cleaning, and repair) of components included in the infrared radiator 730, the correction photodiode 765, the correction target signal processing circuit 785, and the like.

[Equation 2]

$$(An)c = An - \mathrm{Log}\left( \frac{(Ic)n}{((Ic)n)_0} \right) \qquad \left\{ \begin{array}{l} n=1 : \text{alkanes} \cdot \text{alkenes,} \\ n=2 : \text{aromatic hydrocarbons,} \\ n=3 : \text{alkynes} \end{array} \right\}$$

In Equation 2, "$(An)c$" represents absorbance after correction, and "$An$" represents absorbance before correction (absorbance calculated based on Equation 1).

Further, "$(Ic)n$" represents the received light intensity obtained from the correction target received signal and $((Ic)n)_0$ represents the received light intensity obtained from the initial value of the correction target received signal.

The absorbance is corrected by using above Equation 2, whereby it is possible to prevent deterioration in accuracy in hydrocarbon concentration measuring, the deterioration resulting from changes in quantity of light due to deterioration in the components included in the infrared radiator 730.

The concentration calculation section 791c calculates the "sum of the concentration of the chemical species belonging to the group consisting of alkanes and alkenes" in accordance with the "absorbance in the common absorption region where the chemical species belonging to the group consisting of alkanes and alkenes absorb light"; calculates the "sum of the concentration of the chemical species belonging to the group consisting of aromatic hydrocarbons" in accordance with the "absorbance in the common absorption region where the chemical species belonging to the group consisting of aromatic hydrocarbons absorb light"; and calculates the "sum of the concentration of the chemical species belonging to the group consisting of alkynes" in accordance with the "absorbance in the common absorption region where the chemical species belonging to the group consisting of alkynes absorb light", all the absorbance having been calculated by the absorbance calculation section 791b.

Substantially, the function of the concentration calculation section 791c is attained by the analyzing section 791 performing predetermined calculations in accordance with the concentration calculation program.

The configuration of the concentration calculation section 791c is substantially the same as that of the concentration calculation section 191c shown in Fig. 1, and thus no description thereof will be given.

As described above, the hydrocarbon concentration measuring apparatus 700 includes the infrared radiator 730 which irradiates the measurement target gas (a gas containing a hydrocarbon composed of a single or multiple chemical species) with light having a waveband including an absorption region which is common to the single or multiple chemical species (in the embodiment, the light having the waveband, in terms of wavenumber, from 2000cm$^{-1}$ to 4000cm$^{-1}$), the photodiode 760 which detects light radiated from the infrared radiator 730 to the gas, and the analyzer 790 which calculates absorbance in the common absorption region in accordance with the light detected by the photodiode 760, and calculates, in accordance with the absorbance, a sum of concentration of the chemical species, which absorb light having a waveband in the common absorption region (the chemical species belonging to the group corresponding to the common absorption region).

With this configuration, it is possible to measure the concentration of hydrocarbons in real time in non-delayed response to the change in the concentration or composition of the measurement target gas, and also possible to secure responsivity in measurement.

Further, even when the concentration or composition of the measurement target gas has changed, it is possible to calculate with excellent accuracy the sum of the concentration of chemical species which absorb light in the common absorption region (i.e., the chemical species belonging to the group corresponding to the common absorption region).

The hydrocarbon concentration measuring apparatus 700 includes the correction photodiode 765 detecting light generated from the infrared radiator 730, and the infrared radiator 730 of the hydrocarbon concentration measuring apparatus 700 includes the first LED 731a generating light having the waveband corresponding to the common absorption region where the chemical species belonging to the group consisting of alkanes and alkenes, the second LED 731b generating light having the waveband corresponding to the common absorption region where the chemical species belonging to the group consisting of aromatic hydrocarbons, the third LED 731c generating light having the waveband corresponding to the common absorption region where the chemical species belonging to the group consisting of alkynes, the first splitter 732a splitting the luminous flux generated from the first LED 73 1 a, the second splitter 732b splitting the luminous flux generated from the second LED 731b, the third splitter 732c splitting the luminous flux generated from the third LED 731c, the first multiplexer 733a combining one of the luminous fluxes divided by the first splitter 732a, one of the luminous fluxes divided by the second splitter 732b, and one of the luminous fluxes divided by the third splitter 732c, and irradiating with the measurement target gas, the second multiplexer 733b combining the other of the luminous fluxes divided by the first splitter 732a, the other of the luminous fluxes divided by the second splitter 732b, and the other of the luminous fluxes divided by the third splitter 732c, and irradiating with correction photodiode 765, the first LED control device 735a for controlling the intensity of light emitted from the first LED 731a, the second LED control device 735b for controlling the intensity of light emitted from the second LED 731b, the third LED control device 735c for controlling the intensity of light emitted from the third LED 731c, and the LED selector 736 for selecting one from among the first LED control device 735a, the second LED control device 735b, and the third LED control device 735c to be operated, in which the analyzer 790 of the hydrocarbon concentration measuring apparatus 700 corrects the intensity of the light detected by the photodiode 760 on the basis of the intensity of the light detected by the correction photodiode 765.

With this configuration, it is possible to include, in the infrared radiator 730, all of a "function to select a waveband of light to be radiated", a "function to modulate the intensity of light to be radiated", and a "function to monitor the amount of a light source", and also possible to achieve reduction in the size of the device.

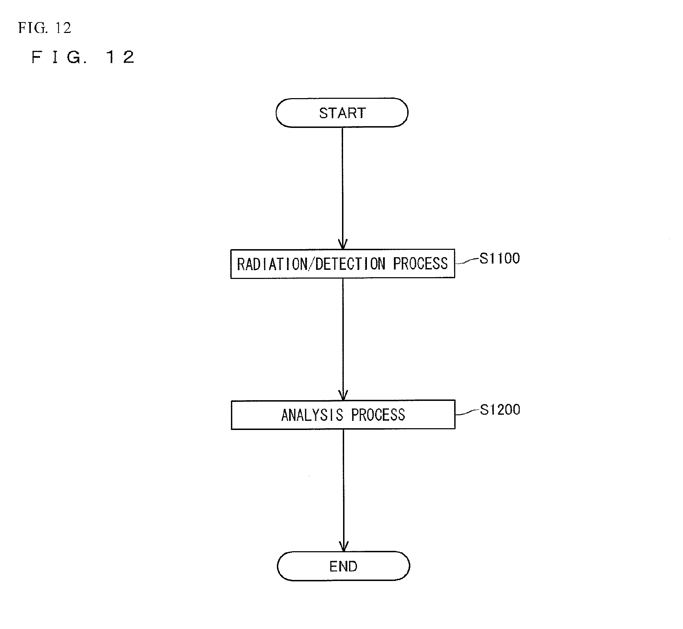

Hereinafter, an embodiment of a hydrocarbon concentration measuring method according to the present invention will be described with reference to Fig. 12.

One example of the hydrocarbon concentration measuring method according to the present invention uses a hydrocarbon concentration measuring apparatus 100 to measure the concentration of hydrocarbons contained in a measurement target gas, and generally includes a radiation/detection step S1100 and an analysis step S1200 as shown in Fig. 12.

The radiation/detection step S1100 is a step of irradiating a measurement target gas with light having a waveband which includes: a common absorption region where chemical species belonging to the group (a) consisting of alkanes and alkenes absorb light; a common absorption region where chemical species belonging to the group (b) consisting of aromatic hydrocarbons absorb light; and a common absorption region where chemical species belonging to the group (c) consisting of alkynes absorb light, and also is a step of detecting light having irradiated the measurement target gas.

In the radiation/detection step S1100, an infrared radiator 130 irradiates a measurement target gas introduced into an internal space 121 a of a gas accommodating container 121 with light having a waveband including: the common absorption region where the chemical species belonging to the group (a) consisting of alkanes and alkenes absorb light; the common absorption region where the chemical species belonging to the group (b) consisting of aromatic hydrocarbons absorb light; and the common absorption region where the chemical species belonging to the group (c) consisting of alkynes absorb light.

In addition, in the radiation/detection step S1100, a line sensor 160 detects light radiated from the infrared radiator 130 to irradiate the measurement target gas.

Upon completion of the radiation/detection step S1100, the process proceeds to the analysis step S1200.

The analysis step S1200 is the step of calculating, based on the light detected in the radiation/detection step S1100 the absorbance in the common absorption region where the chemical species belonging to the group (a) consisting of alkanes and alkenes absorb light, the absorbance in the common absorption region where the chemical species belonging to the group (b) consisting of aromatic hydrocarbons absorb light, and the absorbance in the common absorption region where the chemical species belonging to the group (c) consisting of alkynes absorb light, and then calculating the sum of the concentration of the chemical species belonging to the group (1) consisting of alkanes and alkenes, the sum of the concentration of the chemical species belonging to the group (2) consisting of aromatic hydrocarbons, and the sum of the concentration of the chemical species belonging to the group (3) consisting of alkynes in accordance with the absorbance.

In the analysis step S1200, in accordance with the light detected by the line sensor 160, the absorbance calculation section 191b calculates: the absorbance in the common absorption region where the chemical species belonging to the group (a) consisting of alkanes and alkenes absorb light; the absorbance in the common absorption region where the chemical species belonging to the group (b) consisting of aromatic hydrocarbons absorb light; and the absorbance in the common absorption region where the chemical species belonging to the group (c) consisting of alkynes absorb light.

Further, in analysis step S1200, the concentration calculation section 191c calculates the "sum of the concentration of the chemical species belonging to the group consisting of alkanes and alkenes" in accordance with the "absorbance in the common absorption region where the chemical species belonging to the group (a) consisting of alkanes and alkenes absorb light"; calculates the "sum of the concentration of the chemical species belonging to the group consisting of aromatic hydrocarbons" in accordance with the "absorbance in the common absorption region where the chemical species belonging to the group (b) consisting of aromatic hydrocarbons absorb light"; and calculates the "sum of the concentration of the chemical species belonging to the group consisting of alkynes" in accordance with the "absorbance in the common absorption region where the chemical species belonging to the group (c) consisting of alkynes absorb light", all the absorbance having been calculated by the absorbance calculation section 191 b.

As described above, the embodiment of a hydrocarbon concentration measuring method according to the present invention includes a radiation/detection step S1100 of irradiating a measurement target gas with light having a waveband which includes: a common absorption region where chemical species belonging to the group (a) consisting of alkanes and alkenes absorb light; a common absorption region where chemical species belonging to the group (b) consisting of aromatic hydrocarbons absorb light; and a common absorption region where chemical species belonging to the group (c) consisting of alkynes absorb light, and also is a step of detecting light having irradiated the measurement target gas, and the analysis step S1200 is the step of calculating, based on the light detected in the radiation/detection step S1100 the absorbance in the common absorption region where the chemical species belonging to the group (a) consisting of alkanes and alkenes absorb light, the absorbance in the common absorption region where the chemical species belonging to the group (b) consisting of aromatic hydrocarbons absorb light, and the absorbance in the common absorption region where the chemical species belonging to the group (c) consisting of alkynes absorb light, and then calculating the sum of the concentration of the chemical species belonging to the group (1) consisting of alkanes and alkenes, the sum of the concentration of the chemical species belonging to the group (2) consisting of aromatic hydrocarbons, and the sum of the concentration of the chemical species belonging to the group (3) consisting of alkynes in accordance with the absorbance.

With this configuration, it is possible to measure the concentration of hydrocarbons in real time in non-delayed response to the change in the concentration or composition of the measurement target gas, and also possible to secure responsivity in measurement.

In addition, even when the concentration or composition of the measurement target gas has changed, it is possible to calculate with excellent accuracy the sum of the concentration of chemical species which absorb light in the common absorption region (i.e., the chemical species belonging to the group corresponding to the common absorption region).

In this embodiment, the sum of the concentration of the chemical species belonging to each of the group (a) consisting of alkanes and alkenes, the group (b) consisting of aromatic hydrocarbons, and the group (c) consisting of alkynes is calculated, and in addition, the total hydrocarbon concentration is calculated as a total sum of the calculations. However, the present invention is not limited thereto. Instead, the present invention may be configured such that the measurement target gas is irradiated with light having a wavelength including an absorption region corresponding to some of the group (a) consisting of alkanes and alkenes, the group (b) consisting of aromatic hydrocarbons, and the group (c) consisting of alkynes, and then only the sum of the concentration of the chemical species belonging to the corresponding group is calculated based on the absorbance in the absorption region the where the detected light is absorbed.

The common absorption region in the embodiment of a hydrocarbon concentration measuring method according to the present invention includes a wavelength corresponding to a C-H stretching vibration mode of at least one of the groups: (a) the group consisting of alkanes and alkenes; (b) the group consisting of aromatic hydrocarbons; and (c) the group consisting of alkynes.

With this configuration, it is possible to measure with excellent responsivity and accuracy the sum of the concentration of the chemical species belonging to each of the above groups.

In this embodiment, the measurement target gas is irradiated with light having a waveband including all the absorption regions corresponding to three groups, however, the present invention is not limited thereto. The present invention may be configured such that, the measurement target gas is irradiated with light having a wavelength corresponding to a C-H stretching vibration mode of one or two of the above three groups, to thereby measure the sum of the concentration of the chemical species belonging to the corresponding one or two groups.

In the embodiment of a hydrocarbon concentration measuring method according to the present invention, (a) a wavelength corresponding to a C-H stretching vibration mode of the group consisting of alkanes and alkenes ranges, in terms of wavenumber, from $2800cm^{-1}$ to $3000cm^{-1}$, (b) a wavelength corresponding to a C-H stretching vibration mode of the group consisting of aromatic hydrocarbons ranges, in terms of wavenumber, from $3000cm^{-1}$ to $3200cm^{-1}$, and (c) a wavelength corresponding to a C-H stretching vibration mode of the group consisting of alkynes ranges, in terms of wavenumber, from $3200cm^{-1}$ to $3400cm^{-1}$.

With this configuration, it is possible to measure with excellent responsivity and accuracy the sum of the concentration of the chemical species belonging to each of the groups.

Industrial Applicability

The present invention is applicable to a technique for measuring the concentration of hydrocarbons contained in a gas, and particularly applicable to a hydrocarbon concentration measuring technique used under a situation where the concentration and composition of hydrocarbons contained in a gas vary.

**Claims**

1. A hydrocarbon concentration measuring apparatus comprising:

   a radiating section which irradiates a gas containing a hydrocarbon composed of a single or multiple chemical species with light having a waveband including an absorption region which is common to the single or multiple chemical species;
   a detection section which detects light radiated from the radiating section to the gas; and
   an analyzing section which calculates absorbance in the common absorption region in accordance with the light detected by the detection section, and calculates, in accordance with the absorbance, a sum of concentration of the chemical species, which absorb light having a waveband in the common absorption region.

2. The hydrocarbon concentration measuring apparatus according to claim 1, wherein the common absorption region includes a wavelength corresponding to a C-H stretching vibration mode of at least one of the group consisting of alkanes and alkenes, the group consisting of aromatic hydrocarbons, and the group consisting of alkynes.

3. The hydrocarbon concentration measuring apparatus according to claim 2, wherein
   a wavelength corresponding to a C-H stretching vibration mode of the group consisting of alkanes and alkenes ranges, in terms of wavenumber, from $2800cm^{-1}$ to $3000cm^{-1}$,
   a wavelength corresponding to a C-H stretching vibration mode of the group consisting of aromatic hydrocarbons ranges, in terms of wavenumber, from $3000cm^{-1}$ to $3200cm^{-1}$ and
   a wavelength corresponding to a C-H stretching vibration mode of the group consisting of alkynes ranges, in terms of wavenumber, from $3200cm^{-1}$ to $3400cm^{-1}$.

4. The hydrocarbon concentration measuring apparatus according to any one of claims 1 to 3, further comprising
   a gas accommodating section provided along a path of the light which is radiated from the radiating section and detected by the detection section, wherein
   the gas accommodating section includes:

   a gas accommodating container having an internal space which is capable of accommodating gas containing hydrocarbons composed of the single or multiple chemical species;
   a radiation-side window provided in the gas accommodating container for causing the light radiated from the radiating section to pass therethrough to enter the internal space; and
   a detection-side window provided in the gas accommodating container for causing the light having passed through the radiation-side window and entered the internal space to pass therethrough to the outside.

5. The hydrocarbon concentration measuring apparatus according to any one of claims 1 to 4, further comprising:

   a chopper section arranged between the radiating section and the gas containing hydrocarbons composed of the single or multiple chemical species for alternately switching between a situation where the gas is irradiated with the light from the radiating section and a situation where the gas is not irradiated with the light; and
   a signal processing circuit for removing a noise element included in the light detected by the detection section, in accordance with a signal indicating a switching operation by the chopper section and the light detected by the detection section.

6. The hydrocarbon concentration measuring apparatus according to any one of claims 1 to 5, wherein
   the detection section is an optical detector, and
   the apparatus further comprises a splitter which splits the light having irradiated the gas containing hydrocarbons composed of the single or multiple chemical species, based on respective wavelengths, so that the optical detector is irradiated with split light beams.

7. A hydrocarbon concentration measuring method comprising:

   a radiation/detection step of irradiating a gas containing a hydrocarbon composed of a single or multiple chemical species with light having a waveband including an absorption region which is common to the single or multiple the chemical species, and detecting the light having irradiated the gas; and

an analysis step of calculating absorbance in the common absorption region in accordance with the light detected in the radiation/detection step, and calculating, in accordance with the absorbance, a sum of concentration of the chemical species which absorb light having a waveband in the common absorption region.

8. The hydrocarbon concentration measuring method according to claim 7, wherein the common absorption region includes a wavelength corresponding to a C-H stretching vibration mode of at least one of the group consisting of alkanes and alkenes, the group consisting of aromatic hydrocarbons, and the group consisting of alkynes.

9. The hydrocarbon concentration measuring method according to claim 8, wherein

a wavelength corresponding to a C-H stretching vibration mode of the group consisting of alkanes and alkenes ranges, in terms of wavenumber, from $2800cm^{-1}$ to $3000cm^{-1}$;

a wavelength corresponding to a C-H stretching vibration mode of the group consisting of aromatic hydrocarbons ranges, in terms of wavenumber, from $3000cm^{-1}$ to $3200cm^{-1}$; and

a wavelength corresponding to a C-H stretching vibration mode of the group consisting of alkynes ranges, in terms of wavenumber, from $3200cm^{-1}$ to $3400cm^{-1}$.

FIG. 1

F I G. 1

FIG. 2

FIG. 3

F I G. 3

TOTAL HYDROCARBON CONCENTRATION MEASUREMENT VALUE (ppmc)

TIME (sec)

INCREASE IN ENGINE SPEED

PRESENT INVENTION
CONVENTIONAL THC METER (FID)

FIG. 4

F I G.  4

(A) TOTAL HYDROCARBON CONCENTRATION

$y = 1.0051x + 9.9179$
$R^2 = 0.9952$

CONCENTRATION MEASUREMENT VALUE (PRESENT INVENTION) (ppmc)

CONCENTRATION MEASUREMENT VALUE (CONVENTIONAL TECHNIQUE) (ppmc)

(B) CONCENTRATION OF CHEMICAL SPECIES BELONGING TO GROUP CONSISTING OF ALKANES AND ALKENES

$y = 0.999x + 1.0265$
$R^2 = 0.999$

CONCENTRATION MEASUREMENT VALUE (PRESENT INVENTION) (ppmc)

CONCENTRATION MEASUREMENT VALUE (CONVENTIONAL TECHNIQUE) (ppmc)

FIG. 5

F I G. 5

(A) CONCENTRATION OF CHEMICAL SPECIES BELONGING
TO GROUP CONSISTING OF AROMATIC HYDROCARBONS

$y=1.0153x+8.6042$
$R^2=0.9829$

CONCENTRATION MEASUREMENT VALUE
(PRESENT INVENTION) (ppmc)

CONCENTRATION MEASUREMENT VALUE
(CONVENTIONAL TECHNIQUE) (ppmc)

(B) CONCENTRATION OF CHEMICAL SPECIES BELONGING
TO GROUP CONSISTING OF ALKYNES

$y=1.0008x+0.4571$
$R^2=0.9972$

CONCENTRATION MEASUREMENT VALUE
(PRESENT INVENTION) (ppmc)

CONCENTRATION MEASUREMENT VALUE
(CONVENTIONAL TECHNIQUE) (ppmc)

FIG. 6

F I G. 6

# FIG. 7

FIG. 7

FIG. 8

F I G. 8

EP 2 219 022 A1

FIG. 9

F I G. 9

EP 2 219 022 A1

FIG. 10

FIG. 10

F I G. 1 1

FIG. 12

F I G.  1 2

```
        ┌─────────────┐
        │    START    │
        └──────┬──────┘
               │
               ▼
   ┌──────────────────────────────┐
   │ RADIATION/DETECTION PROCESS  │──S1100
   └──────────────┬───────────────┘
                  │
                  ▼
   ┌──────────────────────────────┐
   │       ANALYSIS PROCESS       │──S1200
   └──────────────┬───────────────┘
                  │
                  ▼
        ┌─────────────┐
        │     END     │
        └─────────────┘
```

FIG. 13

F I G. 1 3

(A) EXAMPLE OF COMPOSITION ANALYSIS RESULT OF GAS
MIXTURE (FUEL) BEFORE COMBUSTION (FID-GC)

TOTAL NUMBER OF CHEMICAL SPECIES:170

| CHEMICAL SPECIES | COMPOSITION(wt%) | |
|---|---|---|
| m-Xylene,p-Xylene | 6.64 | (19),(21) |
| Toluene | 6.60 | (18) |
| 2-Methylbutane | 5.64 | |
| 2-Methylpentane | 4.22 | (7) |
| n-Pentane | 3.88 | (6) |
| 1,2,4-Trimethylbenzene | 3.42 | (23) |
| n-Hexane | 3.40 | (9) |
| 2-Methylhexane | 2.79 | (10) |
| 3-Methylhexane | 2.78 | (11) |
| 3-Methylpentane | 2.76 | (8) |
| o-Xylene | 2.66 | (20) |
| 1-Methyl-3-ethylbenzene | 1.94 | |
| n-Heptane | 1.85 | (12) |
| Ethylbenzene | 1.85 | (22) |
| n-Butane | 1.82 | (4) |
| 2-Methyl-2-butene | 1.65 | |
| Benzene | 1.50 | (17) |
| 1,3,5-Trimethylbenzene | 1.34 | |
| 3-Methylheptane | 1.26 | |
| Methylcyclopentane | 1.22 | |
| i-Butane | 1.16 | (3) |
| trans-2-Pentene | 1.12 | |
| cis-3-Heptene | 0.99 | |
| 2,3-Dimethylbutane | 0.97 | |
| 2-Methylheptane | 0.95 | |

FIG. 14

F I G.  1 4

(B) EXAMPLE OF COMPOSITION ANALYSIS RESULT OF EXHAUST GAS
AT ENGINE OUTLET (FID-GC)

TOTAL NUMBER OF CHEMICAL SPECIES:182

| CHEMICAL SPECIES | COMPOSITION (ppmC) | |
|---|---|---|
| Ethylene | 337.80 | (13) |
| Toluene | 206.90 | (18) |
| Propylene | 199.60 | (14) |
| m-Xylene,p-Xylene | 140.80 | (19),(21) |
| Acetylene | 113.10 | (24) |
| i-Butene,1-Butene | 111.50 | (15),(16) |
| 2-Methylbutane | 100.90 | |
| Methane | 74.80 | (1) |
| Benzene | 65.60 | (17) |
| n-Pentane | 59.00 | (6) |
| o-Xylene | 55.00 | (20) |
| Ethane | 53.00 | (2) |
| 2-Methylpentane | 51.80 | (7) |
| 1,2,4-Trimethylbenzene | 50.90 | (23) |
| Ethylbenzene | 48.20 | (22) |
| n-Hexane | 40.30 | (9) |
| 1-Methyl-3-ethylbenzene | 37.20 | |
| trans-2-Butene | 34.60 | |
| n-Butane | 33.40 | (4) |
| 3-Methylhexane | 33.30 | (11) |
| Propadiene | 31.50 | |
| 3-Methylpentane | 30.80 | (8) |
| 2-Methylhexane | 30.50 | (10) |
| cis-2-Butene | 28.70 | |
| 1,3-Butadiene | 28.50 | |

FIG. 15

F I G.  1 5

(C) EXAMPLE OF COMPOSITION ANALYSIS RESULT OF EXHAUST GAS
AT CATALYST OUTLET (FID-GC)

TOTAL NUMBER OF CHEMICAL SPECIES:86

| CHEMICAL SPECIES | COMPOSITION (ppmC) | |
|---|---|---|
| Methane | 13.30 | (1) |
| Toluene | 7.80 | (18) |
| 2-Methylbutane | 6.70 | |
| Benzene | 5.65 | (17) |
| 2-Methylpentane | 4.17 | (7) |
| m-Xylene,p-Xylene | 3.96 | (19),(21) |
| Ethane | 3.68 | (2) |
| n-Pentane | 3.34 | (6) |
| n-Hexane | 3.11 | (9) |
| 3-Methylpentane | 2.79 | |
| 3-Methylhexane | 2.60 | (11) |
| 2-Methylhexane | 2.40 | (10) |
| Ethylene | 2.08 | (13) |
| n-Butane | 1.82 | (4) |
| o-Xylene | 1.67 | (20) |
| i-Butane | 1.55 | (3) |
| Propylene | 1.53 | (14) |
| n-Heptane | 1.48 | (12) |
| Ethylbenzene | 1.40 | (22) |
| 1,2,4-Trimethylbenzene | 1.37 | (23) |
| 2,3,3-Trimethylhexane | 1.22 | |
| 2,3-Dimethylbutane | 1.20 | |
| i-Butene,1-Butene | 1.16 | (15),(16) |
| Methylstyrene | 1.03 | |

FIG. 16

F I G. 1 6

(1) Methane ABSORPTION SPECTRUM

(2) Ethane ABSORPTION SPECTRUM

(3) i-Butane ABSORPTION SPECTRUM

FIG. 17

FIG. 17

(4) n-Butane ABSORPTION SPECTRUM

(5) i-Pentane ABSORPTION SPECTRUM

(6) n-Pentane ABSORPTION SPECTRUM

FIG. 18

F I G. 1 8

(7) 2-Methylpentane ABSORPTION SPECTRUM

(8) 3-Methylpentane ABSORPTION SPECTRUM

(9) n-Hexane ABSORPTION SPECTRUM

FIG. 19

F I G.　1 9

(10) 2-Methyl-hexane ABSORPTION SPECTRUM

(11) 3-Methyl-hexane ABSORPTION SPECTRUM

(12) n-Heptane ABSORPTION SPECTRUM

FIG. 20

F I G.　2 0

(13) Ethylene ABSORPTION SPECTRUM

(14) Propylene ABSORPTION SPECTRUM

(15) i-Butene ABSORPTION SPECTRUM

FIG. 21

F I G. 2 1

(16) 1-Butene ABSORPTION SPECTRUM

(17) Benzene ABSORPTION SPECTRUM

(18) Toluene ABSORPTION SPECTRUM

FIG. 22

F I G. 2 2

(19) m-Xylene ABSORPTION SPECTRUM

(20) o-Xylene ABSORPTION SPECTRUM

(21) p-Xylene ABSORPTION SPECTRUM

FIG. 23

F I G.　2 3

(22) Ethylbenzene ABSORPTION SPECTRUM

(23) 1.2.4-Trimethylbenzene ABSORPTION SPECTRUM

(24) Acetylene ABSORPTION SPECTRUM

FIG. 24

# F I G. 2 4

| GROUP BELONGING TO | No. | NAME OF CHEMICAL SPECIES | CONCENTRATION (ppm) | (a) ABSORPTION REGION UNIT ABSORBANCE | (b) ABSORPTION REGION UNIT ABSORBANCE | (c) ABSORPTION REGION UNIT ABSORBANCE | (a) ABSORPTION REGION ABSORBANCE | (b) ABSORPTION REGION ABSORBANCE | (c) ABSORPTION REGION ABSORBANCE |
|---|---|---|---|---|---|---|---|---|---|
| (a) | (1) | Methane | $C_1$ | $\alpha(a)\text{-}(1)$ | $\beta(a)\text{-}(1)$ | $\gamma(a)\text{-}(1)$ | $\alpha(a)\text{-}(1)\cdot C_1$ | $\beta(a)\text{-}(1)\cdot C_1$ | $\gamma(a)\text{-}(1)\cdot C_1$ |
| | (2) | Ethane | $C_2$ | $\alpha(a)\text{-}(2)$ | $\beta(a)\text{-}(2)$ | $\gamma(a)\text{-}(2)$ | $\alpha(a)\text{-}(2)\cdot C_2$ | $\beta(a)\text{-}(2)\cdot C_2$ | $\gamma(a)\text{-}(2)\cdot C_2$ |
| | : | : | : | : | : | : | : | : | : |
| | (16) | n-Heptane | $C_{16}$ | $\alpha(a)\text{-}(16)$ | $\beta(a)\text{-}(16)$ | $\gamma(a)\text{-}(16)$ | $\alpha(a)\text{-}(16)\cdot C_{16}$ | $\beta(a)\text{-}(16)\cdot C_{16}$ | $\gamma(a)\text{-}(16)\cdot C_{16}$ |
| (b) | (17) | Benzene | $C_{17}$ | $\alpha(b)\text{-}(17)$ | $\beta(b)\text{-}(17)$ | $\gamma(b)\text{-}(17)$ | $\alpha(b)\text{-}(17)\cdot C_{17}$ | $\beta(b)\text{-}(17)\cdot C_{17}$ | $\gamma(b)\text{-}(17)\cdot C_{17}$ |
| | : | : | : | : | : | : | : | : | : |
| | (23) | 1,2,4-Trimethylbenzene | $C_{23}$ | $\alpha(b)\text{-}(23)$ | $\beta(b)\text{-}(23)$ | $\gamma(b)\text{-}(23)$ | $\alpha(b)\text{-}(23)\cdot C_{23}$ | $\beta(b)\text{-}(23)\cdot C_{23}$ | $\gamma(b)\text{-}(23)\cdot C_{23}$ |
| (c) | (24) | Acetylene | $C_{24}$ | $\alpha(b)\text{-}(24)$ | $\beta(b)\text{-}(24)$ | $\gamma(c)\text{-}(24)$ | $\alpha(c)\text{-}(24)\cdot C_{24}$ | $\beta(c)\text{-}(24)\cdot C_{24}$ | $\gamma(c)\text{-}(24)\cdot C_{24}$ |

GROUP BELONGING TO

(a) : GROUP CONSISTING OF ALKANES AND ALKENES (COMMON ABSORPTION REGION ; $2800\text{cm}^{-1} \sim 3000\text{cm}^{-1}$)

(b) : GROUP CONSISTING OF AROMATIC HYDROCARBONS (COMMON ABSORPTION REGION ; $3000\text{cm}^{-1} \sim 3200\text{cm}^{-1}$)

(c) : GROUP CONSISTING OF ALKYNES (COMMON ABSORPTION REGION ; $3200\text{cm}^{-1} \sim 3400\text{cm}^{-1}$)

SUM OF ABSORBANCE OF EACH GROUP

SUM OF ABSORBANCE OF (a) $= \alpha_{(a)\text{-}(1)}\cdot C_1 + \alpha_{(a)\text{-}(2)}\cdot C_2 + \cdots + \alpha_{(a)\text{-}(16)}\cdot C_{16}$

SUM OF ABSORBANCE OF (b) $= \beta_{(b)\text{-}(17)}\cdot C_{17} + \cdots + \beta_{(b)\text{-}(23)}\cdot C_{23}$

SUM OF ABSORBANCE OF (c) $= \gamma_{(c)\text{-}(24)}\cdot C_{24}$

IR-Abs. RATIO OF EACH GROUP

IR-Abs. RATIO OF (a) = {SUM OF ABSORBANCE OF (a) / (SUM OF ABSORBANCE OF (a) + SUM OF ABSORBANCE OF (b) + SUM OF ABSORBANCE OF (c))} × 100

IR-Abs. RATIO OF (b) = {SUM OF ABSORBANCE OF (b) / (SUM OF ABSORBANCE OF (a) + SUM OF ABSORBANCE OF (b) + SUM OF ABSORBANCE OF (c))} × 100

IR-Abs. RATIO OF (c) = {SUM OF ABSORBANCE OF (c) / (SUM OF ABSORBANCE OF (a) + SUM OF ABSORBANCE OF (b) + SUM OF ABSORBANCE OF (c))} × 100

EP 2 219 022 A1

FIG. 25

F I G. 2 5

(A) COMPARISON BETWEEN COMPOSITION AND ABSORBANCE OF EXHAUST
GAS AT ENGINE OUTLET (NUMBER OF CHEMICAL SPECIES;12)

(B) COMPARISON BETWEEN COMPOSITION AND ABSORBANCE OF EXHAUST
GAS AT CATALYST OUTLET (NUMBER OF CHEMICAL SPECIES;12)

FIG. 26

F I G. 2 6

(C) COMPARISON BETWEEN COMPOSITION AND ABSORBANCE OF EXHAUST GAS AT ENGINE OUTLET (NUMBER OF CHEMICAL SPECIES；24)

(D) COMPARISON BETWEEN COMPOSITION AND ABSORBANCE OF EXHAUST GAS AT CATALYST OUTLET (NUMBER OF CHEMICAL SPECIES；24)

FIG. 27

FIG. 27

EP 2 219 022 A1

<div align="center">

**INTERNATIONAL SEARCH REPORT**

</div>

| | International application No. |
|---|---|
| | PCT/JP2008/069499 |

**A. CLASSIFICATION OF SUBJECT MATTER**
*G01N21/35(2006.01)i*

According to International Patent Classification (IPC) or to both national classification and IPC

**B. FIELDS SEARCHED**

Minimum documentation searched (classification system followed by classification symbols)
G01N21/00-21/61

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| X | JP 04-265842 A  (Horiba, Ltd.), | 1,6,7 |
| Y | 22 September, 1992 (22.09.92), | 2-5,8,9 |
| | Par. Nos. [0006], [0012] to [0022]; Figs. 1 to 3 | |
| | (Family: none) | |
| | | |
| X | WO 95/26497 A1  (Nippon Sanso Corp.), | 1,6,7 |
| Y | 05 October, 1995 (05.10.95), | 2-5,8,9 |
| | Page 16, line 25 to page 19, line 2; page 21, | |
| | line 4 to page 22, line 4; Figs. 1, 14, 15 | |
| | & JP 2587214 B         & US 5703365 A | |
| | & US 5821537 A         & EP 706042 A1 | |
| | & KR 10-0186272 B | |
| | | |
| Y | Shigeyuki TANAKA, Sekigai Raman Bunseki | 2-5,8,9 |
| | Kaiteiban Kiso Bunseki Kagaku Koza 16, revised | |
| | 1st edition, Kyoritsu Shuppan Co., Ltd., | |
| | 05 October, 1974 (05.10.74), pages 36 to 45 | |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 January, 2009 (22.01.09) | 03 February, 2009 (03.02.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2008/069499 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 04-225142 A  (Petroleum Energy Center),<br>14 August, 1992 (14.08.92),<br>Par. Nos. [0014] to [0029]; Fig. 1<br>(Family: none) | 4,5 |
| A | JP 2007-178369 A  (Toyota Motor Corp.),<br>12 July, 2007 (12.07.07),<br>Par. Nos. [0019] to [0044]; Figs. 1 to 5<br>& WO 2007/077966 A1 | 1-9 |
| A | JP 02-284046 A  (Gus Research Institute),<br>21 November, 1990 (21.11.90),<br>Full text; all drawings<br>& US 4996431 A          & US 4958076 A<br>& US 5055690 A          & GB 2228568 A<br>& GB 9002234 A0 | 1-9 |
| A | TRAN CHIEU D, Principles, Instrumentation, and<br>Applications of Infrared Multispectral Imaging,<br>An Overview, Analytical Letters, 2005.04.13<br>(received date) , Vol.38, No.5, Page.735-752 | |
| A | UENO M, et.al., Focal Plane Instruments onboard<br>HII/L2 Mission (SPICA)., The Institute of Space<br>and Astronautical Science Report SP, 2000.12,<br>No.14, Page.197-202 | |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04225142 B